(19) Europäisches Patentamt
European Patent Office
Office européen des brevets

(11) **EP 3 960 390 A1**

(12) **EUROPEAN PATENT APPLICATION**
published in accordance with Art. 153(4) EPC

(43) Date of publication:
**02.03.2022 Bulletin 2022/09**

(21) Application number: **20795224.3**

(22) Date of filing: **18.03.2020**

(51) International Patent Classification (IPC):
**B25J 3/00** (2006.01)          **B25J 5/00** (2006.01)
**B25J 13/02** (2006.01)

(52) Cooperative Patent Classification (CPC):
**B25J 3/00; B25J 5/00; B25J 13/02**

(86) International application number:
**PCT/JP2020/012113**

(87) International publication number:
**WO 2020/217794 (29.10.2020 Gazette 2020/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.04.2019   JP 2019086727**

(71) Applicant: **Honda Motor Co., Ltd.
Tokyo 107-8556 (JP)**

(72) Inventor: **TAKENAKA Toru
Wako-shi, Saitama 351-0193 (JP)**

(74) Representative: **Herzog, Markus
Weickmann & Weickmann
Patent- und Rechtsanwälte PartmbB
Postfach 860 820
81635 München (DE)**

(54) **MOBILE-BODY MANIPULATION DEVICE AND MANIPULATION SYSTEM**

(57)     A manipulation device 51 (master device) includes: an upper-body support part 65 which is mounted on an upper body of an operator P to be able to move together with the operator P as the operator P moves; and a movement command determination unit 94 which determines a movement control command value of a mobile body 1 (slave device) according to an observation value of a motion state including a movement speed of the upper-body support part 65 in a movement environment of the operator P. A reaction force received from the operator P by the upper-body support part 65 can be controlled by action control of a movement mechanism 52 of the manipulation device 51 and a lifting mechanism 60.

FIG.4

**Description**

Technical Field

The present invention relates to a device that manipulates a mobile body.

Background Art

As a device for manipulating a mobile body such as a robot, for example, devices disclosed in Patent Literatures 1 and 2 are known. The manipulation device includes a saddle supported so as to be movable to an upper-body support mechanism, and a foot flat support mechanism mounted on left and right feet of an operator seated on the saddle. Then, in the manipulation device, the operator moves the foot flat support mechanism so as to perform a walking action, so that the motions (walking motions) of both legs of the robot as the mobile body are performed by bilateral control, and the robot is moved.

Further, as a mobile-body manipulation device, a remote controller is also generally known in which an operator performs a manipulating operation by hand.

Citation List

Patent Literature

Patent Literature 1: JP 10-217159 A
Patent Literature 2: U.S. Patent No. 5,841,258

Summary of Invention

However, in the manipulation device disclosed in Patent Literature 1, a large number of actuators are required for both the upper-body support mechanism and the foot flat support mechanism, and thus the manipulation device is likely to be complicated and expensive. Further, in a case where the manipulator that causes an arm or the like of the mobile body to perform work is provided in the manipulation device, the manipulation device is likely to be greatly complicated and high in cost.

Since the operator moves the foot flat support mechanism in the state of sitting on the saddle, the way of the movement is likely to be different from the way of movement of both feet when the operator actually walks. As a result, the movement speed and the movement direction of the mobile body is likely to deviate from the movement speed and the movement direction assumed by the operator.

In the manipulation of the mobile body by the remote controller, it is necessary for the operator to sufficiently recognize the correspondence relationship between the manipulation of the remote controller and the action of the mobile body, and thus, it is necessary to have a high degree of skill in order to perform a desired action of the mobile body. Therefore, it is difficult to stably perform the desired action of the mobile body.

The present invention has been made in view of such a background, and an object thereof is to provide a manipulation device capable of appropriately manipulating a mobile body with a simple configuration.

In order to achieve the above object, the mobile-body manipulation device of the present invention is a mobile-body manipulation device capable of performing a manipulation for moving a mobile body. The device includes: an upper-body support part which is mounted on an upper body of an operator to be able to move together with the operator as the operator moves; and a movement command determination unit which determines a movement control command value for a predetermined representative point of the mobile body according to an observation value of a motion state of the upper-body support part including at least one of a movement position and a movement speed of the upper-body support part in a movement environment of the operator, (first invention)

Incidentally, in this specification, the "observation value " of an arbitrary state quantity, such as a motion and a reaction force, of an arbitrary object means an estimation value obtained by estimation from a detection value of the state quantity by an appropriate detector or sensor or a detection value of one or more other state quantities having a certain correlation with the state quantity on the basis of the correlation, or a pseudo estimation value which can be considered to match or substantially match an actual value of the state quantity. In this case, it is also possible to use a target value of the state quantity as the pseudo estimation value.

According to the first invention, when the operator moves with the upper-body support part mounted on the upper body of the operator, the movement control command value for the predetermined representative point of the mobile body is determined according to the motion state (the motion state including at least one of the movement position and the movement speed) of the upper-body support part at the time of the movement. Therefore, the operator can cause the mobile body to perform a moving action only by moving the mobile body at a desired movement speed or route. Further, the manipulation device of the present invention including the upper-body support part and the movement command determination unit can be configured without requiring a complicated configuration.

Therefore, according to the manipulation device of the first invention, it is possible to appropriately manipulate the mobile body with a simple configuration.

In the first invention, the mobile-body manipulation device further includes: an upper-body support part drive mechanism which is attached to the upper-body support part such that a force for moving the upper-body support part is able to be applied to the upper-body support part; and a first control unit which controls an action of the upper-body support part drive mechanism according to any one of an observation value of an upper-body support part reaction force which is a reaction force received from the upper body of the operator by the upper-body support part and an observation value of an operator upper-body relative displacement which is a relative displacement of the upper body of the operator with respect to the upper-body support part. (second invention)

According to this, it is possible to control the upper-body support part reaction force or the operator upper-body relative displacement to a desired state when the operator moves.

Supplementally, the "reaction force", such as the upper-body support part reaction force in the second invention, in the present invention may be configured by both the translational force and the moment of force as a three-dimensional vector, or may be configured by one or both of the translational force in a specific direction and the moment of force in a specific direction.

Further, in the following description of the present invention, "lateral direction" means a horizontal direction or a substantially horizontal direction, and "up-down direction" means a vertical direction or a substantially vertical direction.

In the second invention, the first control unit is configured to control the action of the upper-body support part drive mechanism according to the observation value of the upper-body support part reaction force so as to maintain at least a lateral translational force in the upper-body support part reaction force at zero. (third invention)

According to this, the operator can move in the state of not receiving the lateral reaction force or in the state of hardly receiving the reaction force from the upper-body support part mounted on the upper body of the operator. As a result, the operator can move on the floor surface for the manipulation of the mobile body without feeling a sense of lateral resistance to the upper body of the operator.

In the third invention, the first control unit is configured to control the action of the upper-body support part drive mechanism according to the observation value of the upper-body support part reaction force so as to maintain at least the lateral translational force in the upper-body support part reaction force at zero and maintain a vertical translational force in the upper-body support part reaction force at a predetermined value. (fourth invention) Incidentally, as the "predetermined value" related to the vertical translational force, for example, zero or a value which is offset from zero such that the translational force is directed downward can be adopted. The same applies to the seventh invention, the eighth invention, the eleventh invention, the twelfth aspect, the fifteenth aspect, and the sixteenth aspect described later.

According to the fourth aspect of the present invention, the operator can move in the state of not receiving or hardly receiving not only the lateral reaction force but also the vertical reaction force from the upper-body support part mounted on the upper body of the operator, or in the state of reducing the force for supporting the gravity acting on the operator. As a result, the operator can move on the floor surface for manipulating the mobile body with the same sense as during normal walking in a state where the upper-body support part is not mounted on the upper body, or in a state where the load of his/her leg against the gravity is reduced.

In the first invention, an aspect can be adopted in which the mobile-body manipulation device further includes: an upper-body support part drive mechanism which is attached to the upper-body support part such that a force for moving the upper-body support part is able to be applied to the upper-body support part; and a first control unit which controls an action of the upper-body support part drive mechanism according to any one of an observation value of an upper-body support part reaction force which is a reaction force received from the upper body of the operator by the upper-body support part and an observation value of an operator upper-body relative displacement which is a relative displacement of the upper body of the operator with respect to the upper-body support part, and an observation value of a first reaction force which is a reaction force received from an outside other than a reaction force received from a floor surface in a movement environment of the mobile body by the mobile body. (fifth invention)

According to this, it is possible to control the upper-body support part reaction force or the operator upper-body relative displacement to a desired state by reflecting the state of the first reaction force acting on the mobile body.

In the fifth invention, the first control unit is configured to control the action of the upper-body support part drive mechanism according to the observation value of the upper-body support part reaction force and the observation value of the first reaction force so as to maintain at least a lateral translational force in a force obtained by linearly combining the upper-body support part reaction force and the first reaction force at zero. (sixth invention)

According to this, in a state where the first reaction force does not act on the mobile body, the same effect as that of the third aspect of the present invention can be obtained. Further, in a case where the first reaction force including the lateral translational force acts on the mobile body due to contact of the mobile body with an external obstacle or the like, the lateral translational force of a magnitude corresponding to that of the lateral translational force of the first reaction force acts on the upper body of the operator from the upper-body support part. As a result, by the lateral translational force received from the upper-body support part, the operator can sense and recognize that the first reaction force acts on the mobile body due to the contact of the mobile body with the external obstacle or the like. As a result, the operator can appropriately take a countermeasure such as interrupting the movement.

In the sixth invention, the first control unit is configured to control the action of the upper-body support part drive mechanism according to the observation value of the upper-body support part reaction force and the observation value of the first reaction force so as to maintain at least the lateral translational force in the force obtained by linearly combining the upper-body support part reaction force and the first reaction force at zero and maintain a vertical translational force in the force obtained by linearly combining the upper-body support part reaction force and the first reaction force at a predetermined value. (seventh invention)

According to this, in a state where the first reaction force does not act on the mobile body, the same effect as that of the fourth aspect of the present invention can be obtained. Further, in a case where the first reaction force including the lateral and vertical translational forces acts on the mobile body due to the contact of the mobile body with an external obstacle or the like, a vector of a translational force having a magnitude and a direction corresponding to those of a vector (three-dimensional vector) of the translational force in the first reaction force acts on the upper body of the operator from the upper-body support part. As a result, the operator can sense and recognize that one reaction force acts on the mobile body due to the contact of the mobile body with an external obstacle or the like, including the direction of the vector of the translational force of the first reaction force. As a result, the operator can more appropriately take a countermeasure such as interrupting the movement.

In the sixth invention, an aspect can be adopted in which the first control unit is configured to control the action of the upper-body support part drive mechanism according to the observation value of the upper-body support part reaction force and the observation value of the first reaction force so as to maintain the lateral translational force in the force obtained by linearly combining the upper-body support part reaction force and the first reaction force at zero and maintain a vertical translational force in the upper-body support part reaction force at a predetermined value. (eighth invention)

According to this, the vertical translational force acting on the upper body of the operator from the upper-body support part is maintained at the predetermined value regardless of whether or not the first reaction force acts on the mobile body, and thus the operator can perform the vertical motion of the upper body accompanying the walking action thereof without a sense of resistance. Alternatively, the operator can move in a state where the load of his/her leg against the gravity reduced. As a result, it is possible to smoothly perform the movement for the movement manipulation of the mobile body.

In the first invention, an aspect can be adopted in which the mobile-body manipulation device further includes: an upper-body support part drive mechanism which is attached to the upper-body support part such that a force for moving the upper-body support part is able to be applied to the upper-body support part; an operation manipulator which is attached to the upper-body support part drive mechanism such that the operator is able to wear the operation manipulator to manipulate a work manipulator included in the mobile body by bilateral control; and a first control unit which controls an action of the upper-body support part drive mechanism according to any one of an observation value of an upper-body support part reaction force which is a reaction force received from the upper body of the operator by the upper-body support part and an observation value of an operator upper-body relative displacement which is a relative displacement of the upper body of the operator with respect to the upper-body support part, and an observation value of a second reaction force which is a reaction force received from the operator by the operation manipulator. (ninth invention)

According to this, it is possible to control the upper-body support part reaction force or the operator upper-body relative displacement to a desired state by reflecting the state of the second reaction force received from the operator by the operation manipulator.

In the ninth invention, the first control unit is configured to control the action of the upper-body support part drive mechanism according to the observation value of the upper-body support part reaction force and the observation value of the second reaction force so as to maintain at least a lateral translational force in a force obtained by linearly combining the upper-body support part reaction force and the second reaction force at zero. (tenth invention)

According to this, in a state where the second reaction force does not act on the operation manipulator, the same effect as that of the third aspect of the present invention can be obtained. Further, in a state where the second reaction force acts on the operation manipulator, the lateral translational force of the second reaction force can be offset by the upper-body support part drive mechanism, and the lateral translational force can be prevented from being transmitted to the legs of the operator (hereinafter, referred to as a first case). Alternatively, the lateral translational force having a magnitude corresponding to that of the lateral translational force of the second reaction force can be transmitted to the leg of the operator (hereinafter, referred to as a second case).

Then, in the first case, even when a work having a large lateral translational force is performed by the work manipulator of the mobile body, the operator can move the operation manipulator without feeling the lateral translational force, so that the work can be easily performed.

In the second case, when a work having a lateral translational force is performed by the work manipulator of the mobile body, the operator can sense and recognize the lateral translational force. Therefore, in a case where the lateral translational force becomes excessive or the like, the operator can appropriately take a countermeasure such as stopping the manipulation of the work manipulator of the mobile body.

In the tenth invention, the first control unit is configured to control the action of the upper-body support part drive mechanism according to the observation value of the upper-body support part reaction force and the observation value of the second reaction force so as to maintain at least the lateral translational force in the force obtained by linearly combining the upper-body support part reaction force and the second reaction force at zero and maintain a vertical translational force in the force obtained by linearly combining the upper-body support part reaction force and the second reaction force at a predetermined value. (eleventh invention)

According to this, in a state where the second reaction force does not act on the operation manipulator, the same effect as that of the fourth aspect of the present invention can be obtained. Further, in a state where the second reaction force acts on the operation manipulator, the vector (three-dimensional vector) of the translational force in the second reaction force can be offset by the upper-body support part drive mechanism, and the vector of the translational force can be prevented from being transmitted to the legs of the operator (hereinafter, referred to as a third case). Alternatively, the vector of the translational force having a magnitude or a direction corresponding to the magnitude or the direction of the vector of the translational force in the second reaction force can be transmitted to the leg of the operator (hereinafter, referred to as a fourth case).

Then, in the third case, even when a work having a large translational force in an arbitrary direction is performed by the work manipulator of the mobile body, the operator can move the operation manipulator without feeling the translational force, so that the work can be easily performed.

In the fourth case, when a work having a vector of a translational force in an arbitrary direction is performed by the work manipulator of the mobile body, the operator can sense and recognize the magnitude and the direction of the vector of the translational force. Therefore, in a case where the magnitude of the vector of the translational force becomes excessive, or the direction of the vector of the translational force becomes an abnormal direction, the operator can appropriately take a countermeasure such as stopping the manipulation of the work manipulator of the mobile body.

In the tenth invention, an aspect can be adopted in which the first control unit is configured to control the action of the upper-body support part drive mechanism according to the observation value of the upper-body support part reaction force and the observation value of the second reaction force so as to maintain the lateral translational force in the force obtained by linearly combining the upper-body support part reaction force and the second reaction force at zero the and maintain a vertical translational force in the upper-body support part reaction force at a predetermined value. (twelfth invention)

According to this, the vertical translational force acting on the upper body of the operator from the upper-body support part is maintained at the predetermined value regardless of whether or not the second reaction force acts on the operation manipulator, and thus the operator can perform the vertical motion of the upper body accompanying the walking action thereof without a sense of resistance. Alternatively, the operator can move in a state where the load of his/her leg against the gravity reduced. As a result, the operator can manipulate the work manipulator of the mobile body while smoothly performing the movement for the movement manipulation of the mobile body.

Further, in the first invention, an aspect can be adopted in which the mobile-body manipulation device further includes: an upper-body support part drive mechanism which is attached to the upper-body support part such that a force for moving the upper-body support part is able to be applied to the upper-body support part; an operation manipulator which is attached to the upper-body support part drive mechanism such that the operator is able to wear the operation manipulator to manipulate a work manipulator included in the mobile body by bilateral control; and a first control unit which controls an action of the upper-body support part drive mechanism according to any one of an observation value of an upper-body support part reaction force which is a reaction force received from the upper body of the operator by the upper-body support part and an observation value of an operator upper-body relative displacement which is a relative displacement of the upper body of the operator with respect to the upper-body support part, an observation value of a first reaction force which is a reaction force received from an outside other than a reaction force received from a floor surface in a movement environment of the mobile body by the mobile body, and an observation value of a second reaction force which is a reaction force received from the operator by the operation manipulator. (thirteenth invention)

According to this, it is possible to control the upper-body support part reaction force or the operator upper-body relative displacement to a desired state by reflecting the state of the first reaction force acting on the mobile body and the second reaction force received from the operator by the operation manipulator.

In the thirteenth invention, the first control unit is configured to control the action of the upper-body support part drive mechanism according to the observation value of the upper-body support part reaction force, the observation value of the first reaction force, and the observation value of the second reaction force so as to maintain at least a lateral translational force in a force obtained by linearly combining the upper-body support part reaction force, the first reaction force, and the second reaction force at zero. (fourteenth invention)

According to this, in a state where the first reaction force and the second reaction force are not generated, the same effect as that of the third aspect of the present invention can be obtained. Further, in a state where the second reaction force of the first reaction force and the second reaction force is not generated, the same effect as that of the sixth aspect of the present invention can be obtained, and in a state where the first reaction force is not generated, the same effect as that of the tenth aspect of the present invention can be obtained. Further, in a state where both the first reaction force and the second reaction force are generated, the same effects as those of the sixth aspect and the tenth aspect of the present invention can be obtained together.

In the fourteenth invention, the first control unit is configured to control the action of the upper-body support part drive mechanism according to the observation value of the upper-body support part reaction force, the observation value of the first reaction force, and the observation value of the second reaction force so as to maintain at least the lateral translational force in the force obtained by linearly combining the upper-body support part reaction force, the first reaction force, and the second reaction force at zero and maintain a vertical translational force in the force obtained by linearly combining the upper-body support part reaction force, the first reaction force, and the second reaction force at a predetermined value. (fifteenth invention)

According to this, in a state where the first reaction force and the second reaction force are not generated, the same effect as that of the fourth aspect of the present invention can be obtained. Further, in a state where the second reaction force of the first reaction force and the second reaction force is not generated, the same effect as that of the seventh aspect of the present invention can be obtained, and in a state where the first reaction force is not generated, the same effect as that of the eleventh aspect of the present invention can be obtained. Further, in a state where both the first reaction force and the second reaction force are generated, the same effects as those of the seventh aspect and the eleventh aspect of the present invention can be obtained.

In the fourteenth invention, an aspect can be adopted in which the first control unit is configured to control the action of the upper-body support part drive mechanism according to the observation value of the upper-body support part reaction force, the observation value of the first reaction force, and the observation value of the second reaction force so as to maintain the lateral translational force in the force obtained by linearly combining the upper-body support part reaction force, the first reaction force, and the second reaction force at zero and maintain a vertical translational force in the upper-body support part reaction force at a predetermined value. (sixteenth invention)

According to this, the vertical translational force acting on the upper body of the operator from the upper-body support part is maintained at the predetermined value regardless of whether or not the first reaction force acts on the mobile body or whether or not the second reaction force acts on the operation manipulator, and thus the operator can perform the vertical motion of the upper body accompanying the walking action thereof without a sense of resistance. Alternatively, the operator can move in a state where the load of his/her leg against the gravity reduced. As a result, the operator can smoothly perform the movement for the movement manipulation of the mobile body in either a state where the work manipulator of the mobile body is not manipulated or a state where the work manipulator is manipulated.

In the second, third, fifth, sixth, ninth, tenth, thirteenth, or fourteenth invention, an aspect is preferably adopted in which the upper-body support part drive mechanism includes a movement mechanism configured to be able to move on a floor surface on which the operator moves, and a first actuator capable of generating a movement driving force of the movement mechanism with respect to the floor surface, the upper-body support part is mounted on the movement mechanism to be able to move together with the movement mechanism, and the first control unit is configured to control the action of the upper-body support part drive mechanism through control of the first actuator. (seventeenth invention)

According to this, the upper-body support part drive mechanism can be moved along with the movement of the operator, and thus the configuration of the upper-body support part drive mechanism can be downsized even when the movement environment of the operator is wide. Further, the action of the upper-body support part drive mechanism for controlling the lateral translational force can be appropriately controlled by the control of the first actuator.

In the fourth, seventh, eighth, eleventh, twelfth, fifteenth, or sixteenth invention, preferably, the upper-body support part drive mechanism includes a movement mechanism configured to be able to move on a floor surface on which the operator moves, a first actuator capable of generating a movement driving force of the movement mechanism with respect to the floor surface, a lifting mechanism which supports the upper-body support part to be able to be lifted and lowered with respect to the movement mechanism, and a second actuator capable of generating a driving force for lifting and lowering the upper-body support part with respect to the movement mechanism, and the first control unit is configured to control the action of the upper-body support part drive mechanism through control of the first actuator and the second actuator. (eighteenth invention)

According to this, similarly to the seventeenth invention, the upper-body support part drive mechanism can be moved along with the movement of the operator, and thus the configuration of the upper-body support part drive mechanism can be downsized even when the movement environment of the operator is wide. Further, the action of the upper-body support part drive mechanism for controlling the lateral and vertical translational forces can be appropriately controlled by the control of the first actuator and the second actuator.

In the second, third, fifth, sixth, ninth, tenth, thirteenth, fourteenth, or seventeenth invention, an aspect can be adopted in which the upper-body support part is attached to the upper-body support part drive mechanism so as to be movable in an up-down direction. (nineteenth invention).

According to this, when the upper-body support part is mounted on the upper body of the operator, the upper-body support part can be moved up and down following the vertical motion of the upper body of the operator without requiring an actuator which drives the upper-body support part in the up and down direction.

In the second, third, fifth, sixth, ninth, tenth, thirteenth, fourteenth, or seventeenth invention, an aspect can be adopted in which the upper-body support part is attached to the upper-body support part drive mechanism so as to be elastically movable in an up-down direction. (twentieth invention).

Incidentally, "elastically movable in an up-down direction" means that a biasing force in a direction of returning the upper-body support part to a reference position can act on the upper-body support part according to the vertical displacement of the upper-body support part from the reference position.

According to this, it is possible to reduce or eliminate the weight of the upper-body support part acting on the upper body of the operator.

In the second to twentieth inventions, preferably, the upper-body support part is attached to the upper-body support part drive mechanism so as to be rotatable in a roll direction of the operator, a pitch direction of the operator, or the roll direction and the pitch direction. (twenty-first invention) Incidentally, the roll direction means a direction around an axis in the front-rear direction of the operator, and the pitch direction means a direction around an axis in the left-right direction of the operator.

According to this, the operator can smoothly tilt the upper body in the roll direction, the pitch direction, or the roll direction and the pitch direction during walking without a sense of resistance. As a result, the operator can smoothly move by walking.

A manipulation system of the present invention can be configured as a system including the manipulation device of the first to twenty-first inventions and the mobile body. In particular, in a case where the manipulation system is a manipulation system including: the mobile-body manipulation device according to any one of the fifth to eighth and thirteenth to sixteenth inventions and the mobile body, preferably, the mobile body includes a mobile-body movement mechanism which is configured to be movable on a floor surface in a movement environment of the mobile body, and an upper body part which is mounted on the mobile-body movement mechanism via a force detector for detecting the first reaction force. (twenty-second invention)

According to this, the reaction force (excluding the floor reaction force received from the floor surface via the mobile-body movement mechanism) received from the outside by the upper body part of the mobile body can be appropriately detected by the force detector.

In the twenty-second invention, preferably, the upper body part includes a cover which covers a periphery of the mobile-body movement mechanism. (twenty-third invention).

According to this, the reaction force received by the cover from the obstacle or the like which comes into contact with the cover around the mobile-body movement mechanism can also be detected as the first reaction force by the force detector.

Brief Description of Drawings

FIG. 1 is a perspective view illustrating a configuration of a slave device as a mobile body in a first embodiment of the present invention.

FIG. 2 is a block diagram illustrating a configuration related to action control in the slave device.

FIG. 3 is a perspective view illustrating a configuration of a master device as a manipulation device for manipulating the slave device.

FIG. 4 is a perspective view illustrating the master device and an operator that moves the master device.

FIG. 5 is a block diagram illustrating a configuration related to action control in the master device.

FIG. 6 is a flowchart illustrating processing of a main manipulation control unit illustrated in FIG. 5.

FIG. 7 is a flowchart illustrating subroutine processing of STEP 3 in FIG. 6.

FIG. 8 is a flowchart illustrating subroutine processing of STEP 4 in FIG. 7.

FIG. 9 is a flowchart illustrating processing of a slave movement control unit illustrated in FIG. 2.

FIG. 10 is a flowchart illustrating processing of a master movement control unit illustrated in FIG. 5.

FIG. 11A is an explanatory diagram of the processing of the slave movement control unit, and FIG. 11B is an explanatory diagram of the processing of the master movement control unit.

FIG. 12 is a flowchart illustrating processing of a slave manipulator control unit illustrated in FIG. 2.

FIG. 13 is a flowchart illustrating processing of a master manipulator control unit illustrated in FIG. 5.

FIG. 14 is a view illustrating a lifting mechanism of a master device according to a seventh embodiment of the present invention.

FIG. 15 is a view illustrating a configuration of an upper-body support part in an eighth embodiment of the present invention.

FIG. 16 is a perspective view illustrating another example of an upper-body support part drive mechanism.

FIG. 17 is a perspective view illustrating still another example of the upper-body support part drive mechanism.

Description of Embodiments

(First embodiment)

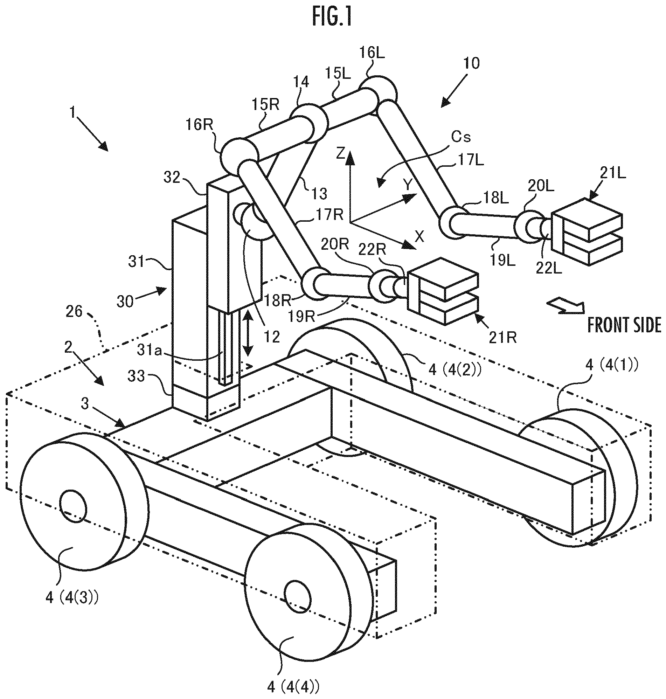

A first embodiment of the present invention will be described below with reference to FIGs. 1 to 13. In this embodiment, as an example of the present invention, a manipulation device 51 for manipulating a mobile body 1 illustrated in FIG. 1 will be described. In the following description, the mobile body 1 as a manipulation target is referred to as a slave device 1, and the manipulation device 51 for manipulating the slave device 1 is referred to as a master device 51.

[Configuration of slave device]

Referring to FIG. 1, the slave device 1 includes a movement mechanism 2 which can move on a floor surface in the action environment, and a manipulator 10 mounted on the movement mechanism 2. Incidentally, in this specification, the "floor surface " is not limited to a floor surface in a normal sense, and may include a ground surface, a road surface, and the like. Further, in the following description, the "front-rear direction", the "left-right direction", and the "up-down direction" of the slave device 1 are an X-axis direction, a Y-axis direction, and a Z-axis direction of a triaxial orthogonal coordinate system Cs illustrated in FIG. 1, respectively. In this case, the front-rear direction (X-axis direction) and the left-right direction (Y-axis direction) correspond to a "lateral direction" in the present invention.

In order to distinguish the left and right components of the slave device 1, "L" and "R" are added to the reference sign of a left component and the reference sign of a right component, respectively. However, when it is not necessary to distinguish the left and right, the addition of "L" and "R" to the reference signs is omitted.

The movement mechanism 2 corresponds to the mobile-body movement mechanism in the present invention. The movement mechanism 2 includes a base 3 and a plurality of moving grounding parts 4 attached to the base 3, and the plurality of moving grounding parts 4 are grounded on the floor surface in a state where there is a gap between the base 3 and the floor surface. Incidentally, in the illustrated example, the base 3 has a shape (substantially U-shape) in which the base 3 is opened to the front side in a bifurcated shape when viewed from above, but the base 3 may have an arbitrary shape.

The movement mechanism 2 includes, for example, four moving grounding parts 4(1), 4(2), 4(3), and 4(4) as the plurality of moving grounding parts 4. Then, two moving grounding parts 4(1) and 4(4) are attached to both left and right sides of the front portion of the base 3, and two moving grounding parts 4(2) and 4(3) are attached to both left and right sides of the rear portion of the base 3.

Although each of the moving grounding parts 4 is simply illustrated in a wheel shape in FIG. 1, in detail, each of the moving grounding parts 4 is configured to be able to move on the floor surface in all directions in the state of being grounded to the floor surface. Specifically, each moving grounding part 4 has the same structure as the main wheel described in, for example, JP 2013 -237329 A or U.S. Patent No. 9,027,693. Therefore, the detailed description of the configuration of each moving grounding part 4 and the drive mechanism thereof in this specification is not given.

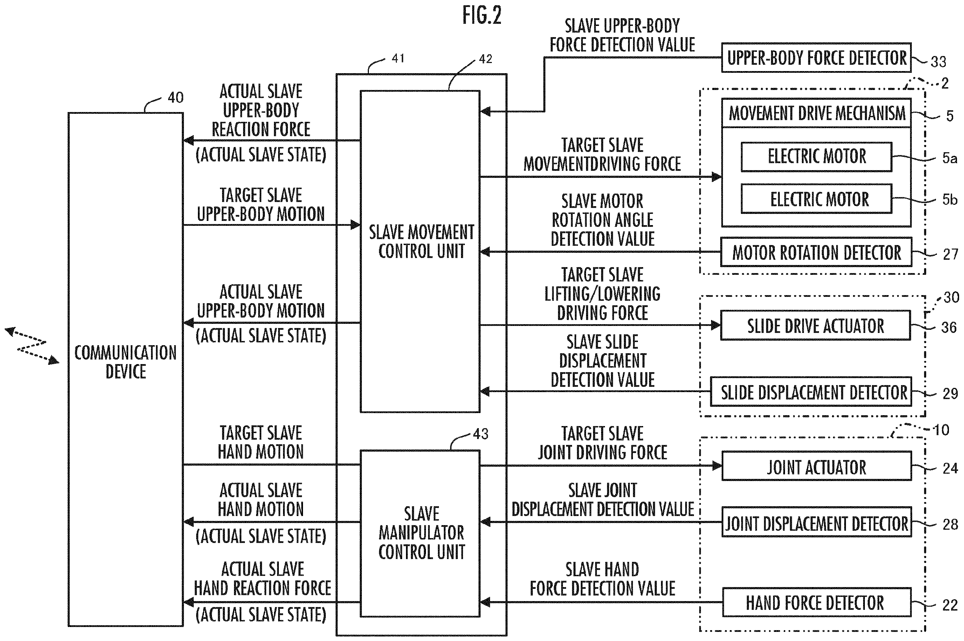

Although not illustrated in detail, the movement mechanism 2 including the moving grounding part 4 is mounted with a movement drive mechanism 5 (illustrated in FIG. 2) including two electric motors 5a and 5b (illustrated in FIG. 2) as a power source for the movement for each moving grounding part 4. Then, as described in JP 2013-237329 A or U. S. Patent No. 9,027,693, the movement drive mechanism 5 corresponding to each of the moving grounding parts 4 is configured to be able to move the moving grounding part 4 in all directions by transmitting power from the two electric motors 5a and 5b to the moving grounding part 4.

In this case, each moving grounding part 4 is driven such that, in the movement speed vector thereof, the speed component of the slave device 1 in the front-rear direction (X-axis direction) becomes a speed proportional to the sum of the rotation speeds of the two electric motors 5a and 5b, and the speed component in the left-right direction (Y-axis direction) becomes a speed proportional to the difference between the rotation speeds of the two electric motors 5a and 5b.

Incidentally, the configuration of each moving grounding part 4 movable in all directions is not limited to that described in JP 2013-237329 A or U.S. Patent No. 9,027,693, and may be another structure such as an Omni-Wheel (registered trademark). Further, the number of the moving grounding parts 4 included in the movement mechanism 2 is not limited to four, and may be, for example, three or five or more. Further, the power source of each moving grounding part 4 is not limited to the electric motors 5a and 5b, and for example, a hydraulic motor can be used.

The manipulator 10 is attached to the base 3 via a lifting mechanism 30. The lifting mechanism 30 includes a support column 31 erected upward from the central portion (the central portion in the left-right direction) of the rear portion of the base 3, and a slide member 32 assembled so as to be movable (lifted and lowered) in the up-down direction with respect to the support column 31.

In this case, the support column 31 is attached to the base 3 via a force detector 33. The force detector 33 is for detecting a reaction force (excluding a floor reaction force received from the floor surface via the movement mechanism 2) received from the outside by the upper body part (the portion supported on the base 3) of the slave device 1, and is hereinafter referred to as an upper-body force detector 33. The upper-body force detector 33 corresponds to the force detector of the mobile body in the present invention, and the reaction force detected by the upper-body force detector 33 corresponds to the first reaction force in the present invention. Then, the upper-body force detector 33 is configured by, for example, a six-axis force sensor, and can detect the translational force and the moment of a force as three-dimensional vectors. Incidentally, in the following description, the "moment of a force" is simply referred to as a moment. Further, the upper body part (the portion supported on the base 3) of the slave device 1 may be hereinafter referred to as a slave upper body.

As a guide mechanism for guiding the movement of the slide member 32 with respect to the support column 31, for example, a guide rail 31a extending in the up-down direction is attached to the front surface portion of the support column 31. Then, the slide member 32 is engaged with the guide rail 31a so as to be movable up and down along the guide rail 31a. Incidentally, the guide mechanism may be different from the above.

Although not illustrated in detail, the lifting mechanism 30 includes a slide drive actuator 36 (illustrated in FIG. 2) which is an actuator for lifting and lowering the slide member 32 with respect to the support column 31. The slide drive actuator 36 is configured by, for example, an electric motor.

The slide drive actuator 36 is attached to the support column 31 or the slide member 32 so as to lift and lower the slide member 32 by applying a driving force for lifting and lowering the slide member 32 with respect to the support column 31 to the slide member 32 via a rotation/linear motion conversion mechanism (not illustrated) such as a ball screw mechanism. Incidentally, the slide drive actuator 36 is not limited to the electric motor, and for example, a hydraulic motor or a hydraulic cylinder can be used.

The manipulator 10 corresponds to the work manipulator in the present invention, and is attached to the slide member 32 in this embodiment. The manipulator 10 includes a pair of left and right hands 21L and 21R, and these two hands 21L and 21R are connected to the slide member 32 via a plurality of joints.

Specifically, the manipulator 10 includes, for example, a first link 13 extending from the slide member 32 via the first joint mechanism 12, a pair of left and right second links 15L and 15R attached to the distal end of the first link 13 via the second joint mechanism 14, third links 17L and 17R respectively attached to the distal ends of the second links 15L and 15R via the third joint mechanisms 16L and 16R, fourth links 19L and 19R respectively attached to the distal ends of the third links 17L and 17R via the fourth joint mechanisms 18L and 18R, and the hands 21L and 21R respectively attached to the distal ends of the fourth links 19L and 19R via fifth joint mechanisms 20L and 20R.

In this case, the hands 21L and 21R are attached to the fifth joint mechanisms 20L and 20R via the force detectors 22L and 22R for detecting a reaction force (an external force such as a contact reaction force) received from the outside, respectively. Each force detector 22 (hereinafter, referred to as a hand force detector 22) is configured by, for example, a six-axis force sensor similarly to the upper-body force detector 33. Incidentally, each hand 21 may include a mechanism for holding an object, a mechanism for detachably sucking an object, a power tool, or the like.

Each of the joint mechanisms 12, 14, 16, 18, and 20 is a joint mechanism having a known structure, and is configured by one or a plurality of joints so as to have, for example, rotational degrees of freedom of one or more axis (axes). Incidentally, in this specification, unless otherwise specified, the "joint" means a joint having a rotational degree of freedom of one axis.

Here, in the manipulator 10 having the above configuration, a portion from the third joint mechanism 16 to the hand 21 on each of the right and left corresponds to the arm on each of the right and left. Then, in order to perform various works with the left and right hands 21 in an appropriate attitude of each arm, it is preferable that the left and right hands 21 have seven degrees or more of freedom of motion. For example, the third joint mechanism 16 corresponding to the shoulder joint of each of the left and right arms of the manipulator 10, the fourth joint mechanism 18 corresponding to the elbow joint, and the fifth joint mechanism 20 corresponding to the wrist joint can be configured to have a rotational degree of freedom of three axes, a rotational degree of freedom of one axis, and a rotational degree of freedom of three axes, respectively.

Although not illustrated in detail, the manipulator 10 is mounted with a plurality of joint actuators 24 (illustrated in FIG. 2) which drives the joints configuring the joint mechanisms 12, 14, 16, 18, and 20. Each joint actuator 24 is configured by, for example, an electric motor.

Incidentally, the manipulator 10 is not limited to a rotary joint, and may include a linear motion joint. Further, a coupling structure between each hand 21 and the slide member 32 may be different from the above. Each hand 21 may be connected to the slide member 32 via, for example, a three-axis slide mechanism. Further, each joint actuator 24 is not limited to the electric motor, and can be configured by, for example, a hydraulic motor or a hydraulic actuator such as a hydraulic cylinder.

The slave device 1 of this embodiment is further mounted with a cover 26 for preventing an external object from hitting the movement mechanism 2. For example, as indicated by a two-dot chain line in FIG. 1, the cover 26 is formed on the lower side of the manipulator 10 so as to cover the entire periphery and the upper face of the movement mechanism 2, and is fixed to the support column 31 via an appropriate attachment member (not illustrated).

Therefore, in the slave device 1 of this embodiment, an object or the like existing in the outside is prevented from directly hitting the movement mechanism 2 during the movement of the slave device 1. Then, when the cover 26 receives a reaction force (an external force such as a contact reaction force) from the outside, the reaction force is transmitted from the cover 26 to the upper-body force detector 33 via the support column 31.

Since the manipulator 10 is attached to the support column 31, the reaction force (an external force such as a contact reaction force) received from the outside by the manipulator 10 is transmitted from the manipulator 10 to the upper-body force detector 33 via the slide member 32 and the support column 31.

Therefore, the upper-body force detector 33 is mounted on the slave device 1 so as to be able to detect the reaction force received from the outside by the slave upper body except for the floor reaction force received from the floor surface via the movement mechanism 2 by the slave upper body.

Supplementally, in this embodiment, the slave upper body corresponding to the upper body part of the mobile body in the present invention includes the lifting mechanism 30, the manipulator 10, and the cover 26.

Referring to FIG. 2, the slave device 1 is further mounted with a communication device 40 for performing wireless communication with the master device 51, and a control device 41 having a function of performing action control and the like of the slave device 1. Further, in addition to the upper-body force detector 33 and the hand force detector 22, the slave device 1 is mounted with a motor rotation detector 27 as a detector for detecting the driving state of each moving grounding part 4 by each movement drive mechanism 5, a joint displacement detector 28 as a detector for detecting an action state of the manipulator 10, and a slide displacement detector 29 for detecting displacement (vertical position) of the slide member 32.

The motor rotation detector 27 is, for example, a detector capable of detecting a rotation angle of a rotation shaft (or a rotation member rotating in conjunction therewith) of each of the electric motors 5a and 5b for each movement drive mechanism 5 as a state quantity indicating the driving state of the movement drive mechanism 5. Further, the joint displacement detector 28 is, for example, a detector capable of detecting displacement (rotation angle) of each joint configuring each of the joint mechanisms 12, 14, 16, 18, and 20 of the manipulator 10 as a state quantity indicating the action state of the manipulator 10. Each of the motor rotation detector 27 and the joint displacement detector 28 can be configured by, for example, a rotary encoder, a resolver, a potentiometer, or the like.

The slide displacement detector 29 is configured by, for example, a known contact type or non-contact type displacement sensor. Further, for example, in a case where the power transmission mechanism from the slide drive actuator 36 to the slide member 32 is configured such that the displacement of the slide member 32 is proportional to the rotation angle of the rotation shaft of the slide drive actuator 36, a detector capable of detecting the rotation angle of the rotation shaft (or the rotation member rotating in conjunction with the rotation shaft) of the slide drive actuator 36 can also be used as the slide displacement detector. In this case, the slide displacement detector 29 may be a detector similar to the motor rotation detector 27.

Incidentally, the slave device 1 includes a plurality of movement drive mechanisms 5, a plurality of motor rotation detectors 27, a plurality of joint actuators 24, a plurality of joint displacement detectors 28, and a plurality of hand force detectors 22, but only one of each is representatively illustrated in FIG. 2.

The control device 41 is configured by one or more electronic circuit units including, for example, a microcomputer, a memory, and an interface circuit. Although described in detail later, to the control device 41, command data indicating the action target (target motion) of the slave upper body and each hand 21 is input from the master device 51 via the communication device 40, and detection data of each detector (each of the upper-body force detector 33, each motor rotation detector 27, the slide displacement detector 29, each joint displacement detector 28, and each hand force detector 22) mounted on the slave device 1 is input.

Then, the control device 41 has, as functions realized by both or one of the implemented hardware configuration and program (software configuration), a function as a slave movement control unit 42 which controls the movement of the upper body of the slave device 1 via the electric motors 5a and 5b of each movement drive mechanism 5 and the slide drive actuator 36 and a function as a slave manipulator control unit 43 which controls the action of each hand 21 of the manipulator 10 via each joint actuator 24. Further, the control device 41 can output (transmit) data indicating an actual action state (hereinafter, referred to as an actual slave state) of the slave device 1 to the master device 51 via the communication device 40.

In the following description, "slave" may be appropriately added to the beginning of the name of the component of the slave device 1. For example, the base 3 of the slave device 1 may be described as a slave base 3.

[Configuration of master device]

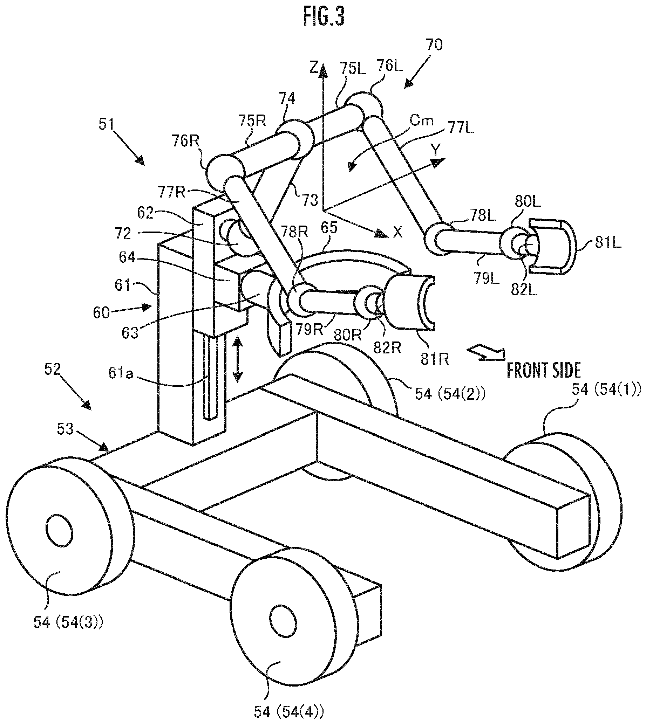

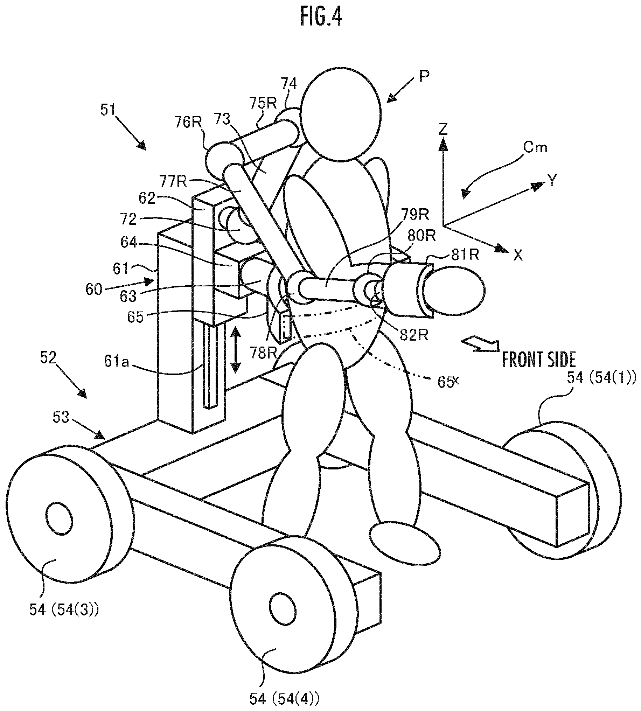

Next, a configuration of the master device 51 will be described with reference to FIGs. 3 to 5. Incidentally, in the following description, the "front-rear direction", the "left-right direction", and the "up-down direction" of the master device 51 are an X-axis direction, a Y-axis direction, and a Z-axis direction of a triaxial orthogonal coordinate system Cm illustrated in FIG. 3 or FIG. 4, respectively. In this case, the front-rear direction (X-axis direction) and the left-right direction (Y-axis direction) correspond to a "lateral direction" in the present invention.

Similarly to the case of the slave device 1, in order to distinguish the left and right components of the master device 51, "L" and "R" are appropriately added to the reference sign of a left component and the reference sign of a right component, respectively, as necessary.

Referring to FIGs. 3 and 4, the master device 51 corresponds to the manipulation device in the present invention. The master device 51 includes a movement mechanism 52 which can move on a floor surface in the action environment of an operator P (illustrated in FIG. 4) that manipulates the slave device 1, an upper-body support part 65 mounted on the upper body of the operator P, and a manipulator 70 for the operator P to manipulate the slave manipulator 10.

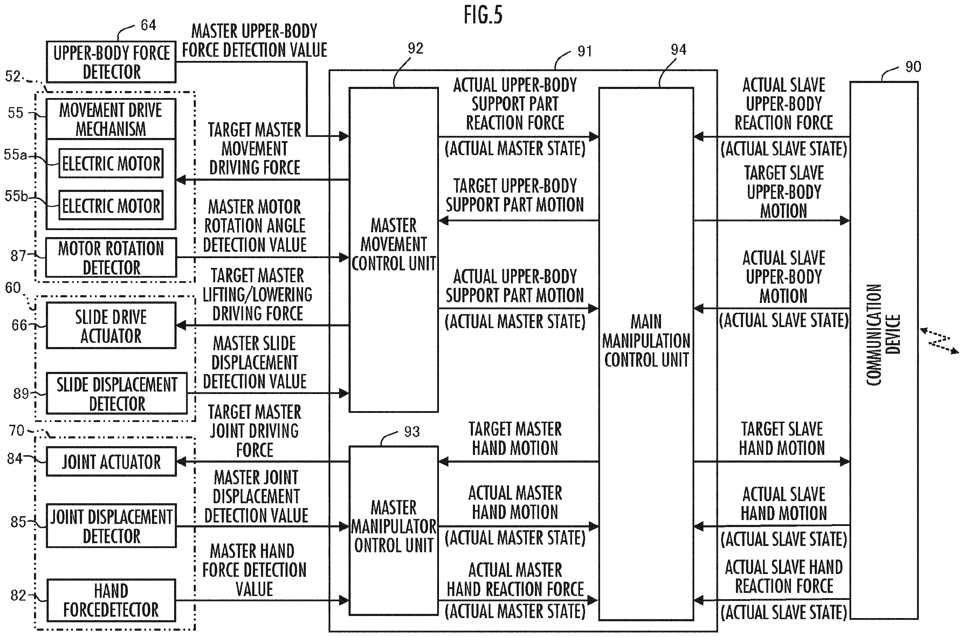

In this embodiment, the movement mechanism 52 has the same configuration as the slave movement mechanism 2, and similarly to the slave movement mechanism 2, includes a base 53 and a plurality of (four) moving grounding parts 54(54(1), 54(2), 54(3), and 54(4)) attached thereto. Further, although not illustrated in detail, similarly to the slave movement mechanism 2, the movement mechanism 52 includes, as components corresponding to the respective moving grounding parts 54, a movement drive mechanism 55 having electric motors 55a and 55b, and a motor rotation detector 87 as illustrated in FIG. 5. The electric motors 55a and 55b correspond to the first actuator in the present invention.

The upper-body support part 65 and the manipulator 70 are attached to the base 53 via a lifting mechanism 60. The lifting mechanism 60 configures the upper-body support part drive mechanism of the present invention together with the movement mechanism 52. The lifting mechanism 60 includes a support column 61 erected upward from the central portion (the central portion in the left-right direction) of the rear portion of the base 53, and a slide member 62 assembled so as to be movable (lifted and lowered) in the up-down direction with respect to the support column 61. The support column 61 is fixed to the base 53.

As a guide mechanism for guiding the movement of the slide member 62 with respect to the support column 61, for example, a guide rail 61a extending in the up-down direction is attached to the front surface portion of the support column 61. Then, the slide member 62 is engaged with the guide rail 61a so as to be movable up and down along the guide rail 61a. Incidentally, the guide mechanism may be different from the above.

Although not illustrated in detail, the master device 51 is mounted with a slide drive actuator 66 (illustrated in FIG. 5) which is an actuator for lifting and lowering the slide member 62 with respect to the support column 61. The slide drive actuator 66 corresponds to the second actuator in the present invention, and is configured by, for example, an electric motor.

Then, the slide drive actuator 66 lifts and lowers the slide member 32 through, for example, a power transmission mechanism similar to the power transmission mechanism from the slide drive actuator 36 of the slave device 1 to the slide member 62. Incidentally, the slide drive actuator 66 is not limited to the electric motor, and for example, a hydraulic motor or a hydraulic cylinder can be used.

In this embodiment, the upper-body support part 65 is configured to be able to follow a predetermined portion of the upper body of the operator P, for example, the outer periphery of the waist from the back side. For example, the upper-body support part 65 is configured by a plate-shaped member curved in a substantially semicircular arc shape (or a U shape). Then, Further, the upper-body support part 65 is attached to the slide member 62 via a support shaft 63 and a force detector 64.

More specifically, the support shaft 63 is attached to the slide member 62 via the force detector 64 in a state where the axis of the support shaft is oriented in the front-rear direction (X-axis direction). The force detector 64 (hereinafter, referred to as an upper-body force detector 64) is a detector for detecting a reaction force (contact reaction force) which the upper-body support part 65 receives from the upper body of the operator P, and is configured by, for example, a six-axis force sensor similarly to the slave upper-body force detector 33.

Then, a central portion between both ends of the upper-body support part 65 is attached to the support shaft 63. In this case, the upper-body support part 65 is supported by the support shaft 63 so as to be freely rotatable about the axis of the support shaft 63 (in other words, in a roll direction) with respect to the slide member 62 and the upper-body force detector 64.

When the operator P manipulates the slave device 1, the upper-body support part 65 is arranged along the outer periphery of the waist of the upper body of the operator P from the back side as illustrated in FIG. 4. Then, both ends of the upper-body support part 65 are connected to a flexible belt 65x (indicated by a two-dot chain line in FIG. 4) arranged along the outer periphery on the front side of the waist of the operator P.

As a result, the upper-body support part 65 is mounted on the waist of the operator P via the belt 65x such that the upper-body support part 65 and the belt 65x surround the periphery of the waist of the upper body of the operator P. In this case, the upper-body support part 65 is mounted so as not to be displaced relative to the waist of the operator P. Further, the upper-body support part 65 can adjust the height (the position in the up-down direction) of the upper-body support part 65 by appropriately moving the slide member 62 up and down. Further, an elastic member such as a pad (not illustrated) is attached to the inner peripheral surface of the upper-body support part 65, and the elastic member abuts on the periphery of the waist of the operator P.

In a state where the upper-body support part 65 is mounted on the waist of the operator P as described above, the upper-body support part 65 and the movement mechanism 52 can move together with the operator P as the operator P moves (walks). In this case, the operator P can tilt the upper body forward, backward, left, and right. Further, the reaction force which the upper-body support part 65 receives from the waist of the operator P is detected by the upper-body force detector 64.

The manipulator 70 corresponds to the operation manipulator in the present invention, and is attached to the slide member 62 in this embodiment. The manipulator 70 includes a pair of two left and right hands 81L and 81R which can be mounted on the left and right wrists (or portions in the vicinity thereof) of the operator P via belts (not illustrated), and these hands 81L and 81R are connected to the slide member 62 via a plurality of joints.

In this embodiment, the coupling structure between the hands 81L and 81R and the slide member 62 is the same as, for example, the slave manipulator 10. That is, the manipulator 70 includes a first link 73 extending from the slide member 62 via the first joint mechanism 72 above the upper-body force detector 64, a pair of left and right second links 75L and 75R attached to the distal end of the first link 73 via the second joint mechanism 74, third links 77L and 77R respectively attached to the distal ends of the second links 75L and 75R via the third joint mechanisms 76L and 76R, and fourth links 79L and 79R respectively attached to the distal ends of the third links 77L and 77R via the fourth joint mechanisms 78L and 78R. The hands 81L and 81R are attached to the distal ends of the fourth links 79L and 79R via the fifth joint mechanisms 80L and 80R and the force detectors 82L and 82R, respectively.

In this case, each force detector 82 is for detecting a reaction force (contact reaction force) which each hand 81 receives from the distal end side portion (the hand or the like) of each arm of the operator P, and is configured by, for example, a six-axis force sensor similarly to the slave upper-body force detector 33 and the like. Hereinafter, each force detector 82 is referred to as the hand force detector 82. Incidentally, the resultant force of the reaction forces detected by the left and right hand force detectors 82L and 82R corresponds to the second reaction force in the present invention.

Although not illustrated in detail, similarly to the slave manipulator 10, the manipulator 70 having the above configuration is mounted with a plurality of joint actuators 84 (illustrated in FIG. 5) which respectively drive the joints (joints having a rotational degree of freedom of one axis) configuring the joint mechanisms 72, 74, 76, 78, and 80. Each joint actuator 84 is configured by, for example, an electric motor.

Incidentally, the manipulator 70 is not limited to a rotary joint, and may include a linear motion joint. Further, a coupling structure between each hand 81 and the slide member 62 may be different from that of the slave manipulator 10. Each hand 21 may be connected to the slide member 62 via, for example, a three-axis slide mechanism. Further, each joint actuator 84 is not limited to the electric motor, and can be configured by, for example, a hydraulic motor or a hydraulic actuator such as a hydraulic cylinder.

Referring to FIG. 5, the master device 51 is further mounted with a communication device 90 for performing wireless communication with the slave device 1, and a control device 91 having a function of performing action control and the like of the master device 51. Further, in addition to the upper-body force detector 64 and the hand force detector 82, the master device 51 is mounted with a motor rotation detector 87 as a detector for detecting the driving state of each moving grounding part 54 by each movement drive mechanism 55, a joint displacement detector 85 as a detector for detecting an action state of the manipulator 70, and a slide displacement detector 89 for detecting displacement (vertical position) of the slide member 62.

In this case, similarly to the slave device 1, the motor rotation detector 87 is a detector capable of detecting a rotation angle of a rotation shaft (or a rotation member rotating in conjunction therewith) of each of the electric motors 55a and 55b for each movement drive mechanism 55. Further, the joint displacement detector 85 is a detector capable of detecting displacement (rotation angle) of each joint configuring each of the joint mechanisms 72, 74, 76, 78, and 80 of the manipulator 70. The motor rotation detector 87 and the joint displacement detector 85 to be used may have the same configurations of the slave motor rotation detector 27 and the slave joint displacement detector 28, respectively. Further, the slide displacement detector 89 to be used may have the same configuration of the slave slide displacement detector 29.

Incidentally, the master device 51 includes a plurality of movement drive mechanisms 55, a plurality of motor rotation detectors 87, a plurality of joint actuators 84, a plurality of joint displacement detectors 85, and a plurality of hand force detectors 82, but only one of each is representatively illustrated in FIG. 5.

The control device 91 is configured by one or more electronic circuit units including, for example, a microcomputer, a memory, and an interface circuit. Although described in detail later, to the control device 91, data indicating the actual slave state is input from the slave device 1 via the communication device 90, and detection data of each of the upper-body force detector 64, each hand force detector 82, each motor rotation detectors 87, and each joint displacement detectors 85 of the master device 51 is input.

Then, the control device 91 has, as functions realized by both or one of the implemented hardware configuration and program (software configuration), a function as a main manipulation control unit 94 which generates an overall action target (target motion) of the slave device 1 and the master device 51, a function as a master movement control unit 92 which controls the movement of the upper-body support part 65 via the electric motors 55a and 55b of each movement drive mechanism 55 and the slide drive actuator 66, and a function as a master manipulator control unit 93 which controls the action of the manipulator 70 via each joint actuator 84. Further, the control device 91 can output (transmit) command data indicating the action target (target motion) of the slave device 1 to the slave device 1 via the communication device 90.

In the following description, "master" may be appropriately added to the beginning of the name of the component of the master device 51. For example, the base 53 of the master device 51 may be referred to as a master base 53. Supplementally, the main manipulation control unit 94 of the master device 51 has a function as the movement command determination unit in the present invention, and also has a function as the first control unit in the present invention together with the master movement control unit 92.

[Control processing and operation]

Next, details of the control processing of the control devices 41 and 91 and the operations of the slave device 1 and the master device 51 will be described. Here, to supplement terms in the following description, "actual" is added to the beginning of the name of an arbitrary state quantity (a position, a speed, a force, and the like), or a suffix " act" is added to the reference sign of the state quantity, which means an actual value of the state quantity or an observation value (detection value or estimation value) thereof.

Further, "target" is added to the beginning of the name of an arbitrary state quantity, or a suffix "_aim" is added to the reference sign of the state quantity, which means a target value of the state quantity. Further, a reference sign with "↑" at the beginning is a reference sign representing a vector (vertical vector).

For the state quantity related to the slave device 1, "slave" may be added to the beginning of the name of the state quantity or between the name of the state quantity and "actual" or "target". The same applies to the state quantity related to the master device 51.

The "motion" of an arbitrary object means a state quantity of any one of a position, a speed (translational speed), an attitude angle, and an angular speed of the object, or a set of two or more state quantities. The attitude angle is an angle (azimuth angle) representing the orientation of the object as viewed in a certain coordinate system. The attitude angle is represented by, for example, Euler angle. Incidentally, the attitude angle may be simply referred to as an attitude.

[Control processing of main manipulation control unit]

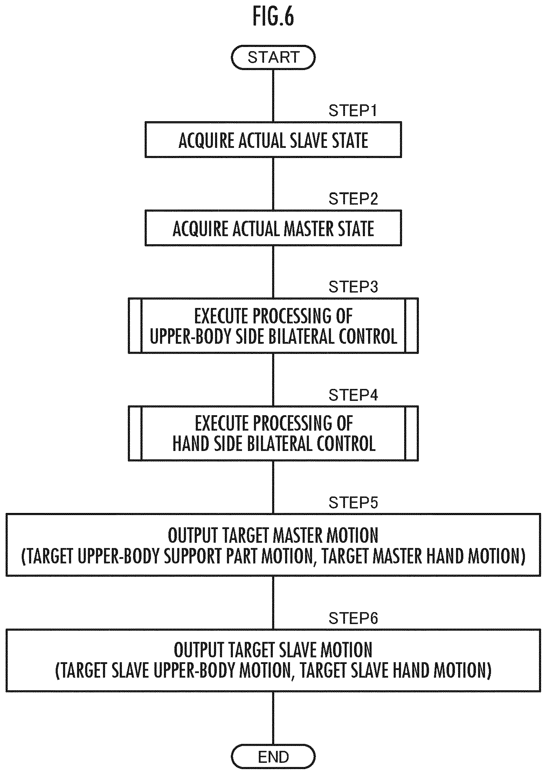

First, the control processing of the main manipulation control unit 94 of the master control device 91 will be described. The main manipulation control unit 94 sequentially executes the processing illustrated in the flowchart of FIG. 6 in a predetermined control processing cycle. In STEP 1, the main manipulation control unit 94 acquires (receives) data indicating the actual slave state as the actual action state of the slave device 1 from the slave control device 41 via the communication devices 40 and 90.

As illustrated in FIG. 5, the actual slave state includes an actual slave upper-body reaction force which is an actual reaction force which the slave upper body (the upper body of the slave device 1) receives from the outside other than the floor reaction force, an actual slave upper-body motion which is an actual motion of the slave upper body, an actual slave hand motion which is an actual motion of each slave hand 21, and an actual slave hand reaction force which is a reaction force which each slave hand 21 actually receives from the outside.

More specifically, the actual slave upper-body reaction force is a resultant force of an actual reaction force which the slave upper body receives from the outside via the support column 31, the cover 26, or the manipulator 10. Further, each of the actual slave upper-body reaction force and the left and right actual slave hand reaction forces is configured by a set of a translational force and a moment. Then, each of the translational force and the moment of the actual slave upper-body reaction force acquired by the main manipulation control unit 94 in STEP 1 is expressed as a three-dimensional vector as viewed in a global coordinate system (a three-dimensional coordinate system fixed to the floor of the action environment) (hereinafter, referred to as a slave-side global coordinate system) arbitrarily set in terms of design with respect to the action environment of the slave device 1.

In this case, more specifically, the moment of each of the actual slave upper-body reaction force and the left and right actual slave hand reaction forces is a moment around a predetermined reference point (hereinafter, referred to as a slave reference point Qs) set with respect to the slave device 1. The slave reference point Qs can be appropriately set in terms of design in consideration of the structure and the like of the slave device 1. In this embodiment, the master movement mechanism 52 and the slave movement mechanism 2 have substantially the same or substantially similar shapes.

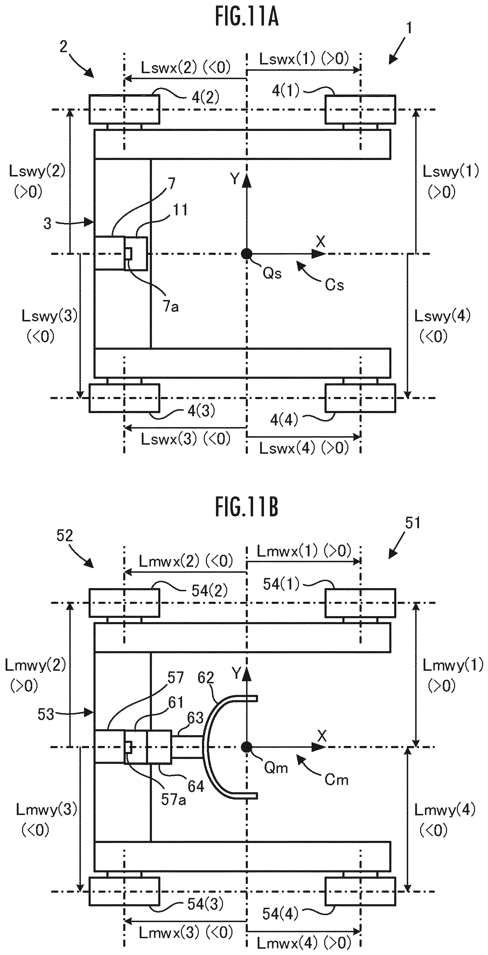

In this regard, for example, the slave reference point Qs can be set such that a positional relationship between the slave reference point Qs and the slave movement mechanism 2 and a positional relationship between a reference point Qm (described later) in the master device 51 and the master movement mechanism 52 are substantially the same or similar. The slave reference point Qs illustrated in FIG. 11A exemplifies the reference point set from such a viewpoint. Incidentally, in FIG. 11A, the manipulator 10 is not illustrated.

Supplementally, when the calculation of hand side bilateral control is performed, it is preferable that the moments of the left and right actual slave hand reaction forces are converted into moments around predetermined reference points (hereinafter, referred to as slave hand reference points Qhs_L and Qhs_R) set for respective slave hands 21L and 21R, and the moments of the left and right actual master hand reaction forces are converted into moments around predetermined reference points (hereinafter, referred to as master hand reference points Qhm_L and Qhm_R) set for respective master hands 81L and 81R. By this conversion, the characteristics of the bilateral control become more appropriate.

In the following description, $\uparrow$F_sb_act and $\uparrow$M_sb_act are used as reference signs representing the translational force and the moment of the actual slave upper-body reaction force, respectively. Further, $\uparrow$F_sh_act_L and $\uparrow$M_sh_act_L are used as reference signs respectively representing the translational force and the moment of the left actual slave hand reaction force, and $\uparrow$F_sh_act_R and $\uparrow$M_sh_act_R are used as reference signs respectively representing the translational force and the moment of the right actual slave hand reaction force.

Further, the resultant force of the left and right actual slave hand reaction forces is referred to as an actual slave hand resultant force, and reference signs $\uparrow$F_sh_act and $\uparrow$M_sh_act to which "L" and "R" are not added are used as reference signs respectively representing the translational force and the moment of the actual slave hand resultant force. In this case, $\uparrow$F_sh_act = $\uparrow$F_sh_act_L + $\uparrow$F_sh_act_R, and $\uparrow$M_sh_act = $\uparrow$M_sh_act_L + $\uparrow$M_sh_act_R.

The actual slave upper-body motion includes a position $\uparrow$P_sb_act, a translational speed $\uparrow$V_sb_act, an attitude angle $\uparrow\theta$_sb_act, and an angular speed $\uparrow\omega$_sb_act of the slave upper body as viewed in the slave-side global coordinate system. Similarly, the actual slave hand motion includes a position $\uparrow$P_sh_act, a translational speed $\uparrow$V_sh_act, an attitude angle $\uparrow\theta$_sh_act, and an angular speed $\uparrow\omega$_sh_act of each slave hand 21 as viewed in the slave-side global coordinate system.

Incidentally, the position $\uparrow$P_sb_act of the slave upper body is the position of the representative point set (defined) in advance with respect to the slave upper body, for example, the position of the slave reference point Qs. Further, in this embodiment, it is assumed that a component (a component in a yaw method direction) around the vertical axis of the attitude angle $\uparrow\theta$_sb_act of the slave upper body matches a component (a component in the yaw direction) around the vertical axis of the attitude angle of the slave base 3.

Supplementally, the whole or a part of the actual slave state output from the slave control device 41 to the main manipulation control unit 94 may be a state quantity as viewed in a local coordinate system (for example, a slave upper-body coordinate system Cs to be described later) set for the slave device 1. In this case, in STEP 1, the main manipulation control unit 94 converts the actual slave state (the actual slave state as viewed in the local coordinate system) given from the slave control device 41 into an actual slave state as viewed in the slave-side global coordinate system, and acquires the actual slave state.

Further, in this embodiment, the attitude angle and the angular speed (in a pitch direction and the roll direction) around the lateral axis in the motion of the slave upper body are not a control target. Therefore, in STEP 1, the main manipulation control unit 94 can omit acquisition of the attitude angle and the angular speed around the lateral axis in the attitude angle $\uparrow\theta$_sb_act and the angular speed $\uparrow\omega$_sb_act of the actual slave upper-body motion, and can omit acquisition of the moment around the lateral axis in the moment $\uparrow$M_sb_act of the actual slave upper-body reaction force.

Next, in STEP 2, the main manipulation control unit 94 acquires data indicating an actual master state which is the actual action state of the master device 51 from the master movement control unit 92 and the master manipulator control unit 93. As illustrated in FIG. 5, the actual master state includes an actual upper-body support part reaction force which is an actual reaction force received from the operator P by the upper-body support part 65, an actual upper-body support part motion which is an actual motion of the upper-body support part 65, an actual master hand motion which is an actual motion of each master hand 81, and an actual master hand reaction force which is an actual reaction force received from the distal end side portion of the arm of the operator P by each master hand 81.

Each of the actual upper-body support part reaction force and the left and right actual master hand reaction forces is configured by a set of a translational force and a moment. Then, each of the translational force and the moment thereof is expressed as a three-dimensional vector as viewed in a global coordinate system (a three-dimensional coordinate system fixed relative to the floor of the action environment) (hereinafter, referred to as a master-side global coordinate system) arbitrarily set in terms of design with respect to the action environment of the master device 51.

In this case, more specifically, the moment of each of the actual upper-body support part reaction force and the left and right actual master hand reaction forces is a moment around a predetermined reference point (hereinafter, referred to as a master reference point Qm) set with respect to the master device 51. For example, as illustrated in FIG. 11B, the master reference point Qm can be set at an intermediate point (a point near the center of the waist of the operator P on which the upper-body support part 65 is mounted on) between both left and right side portions of the upper-body support part 65 on the axis of the support shaft 63. Incidentally, in FIG. 11B, the master manipulator 70 is not illustrated.

Hereinafter, $\uparrow$F_mb_act and $\uparrow$M_mb_act are used as reference signs representing the translational force and the moment of the actual upper-body support part reaction force, respectively. Further, $\uparrow$F_mh_act_L and $\uparrow$M_mh_act_L are used as reference signs respectively representing the translational force and the moment of the left actual master hand reaction force, and $\uparrow$F_mh_act_R and $\uparrow$M_mh_act_R are used as reference signs respectively representing the translational force and the moment of the right actual master hand reaction force.

Further, the resultant force of the left and right actual master hand reaction forces is referred to as an actual master hand resultant force, and reference signs $\uparrow$F_mh_act and $\uparrow$M_mh_act to which "L" and "R" are not added are used as reference signs respectively representing the translational force and the moment of the actual master hand resultant force. In this case, $\uparrow$F_mh_act = $\uparrow$F_mh_act_L + $\uparrow$F_mh_act_R, and $\uparrow$M_mh_act = $\uparrow$M_mh_ act_L + $\uparrow$M_mh_act_R.

The actual upper-body support part motion includes a position $\uparrow$P_mb_act, a translational speed $\uparrow$V_mb_act, an attitude angle $\uparrow\theta$_mb_act, and an angular speed $\uparrow\omega$_mb_act of the upper-body support part 65 as viewed in the master-side global coordinate system. Similarly, the actual master hand motion includes a position $\uparrow$P_mh_act, a translational speed $\uparrow$V_mh_act, an attitude angle $\uparrow\theta$_mh_act, and an angular speed $\uparrow\omega$_mh_act of each master hand 81 as viewed in the master-side global coordinate system. Incidentally, the position $\uparrow$P_mb_act of the upper-body support part 65 is the position of the representative point set in advance with respect to the upper-body support part 65, for example, the position of the master reference point Qm. Further, in this embodiment, the attitude angle $\uparrow\theta$_mb_act of the upper-body support part 65 is considered to match the attitude angle of the master base 53.

Supplementally, the whole or a part of the actual master state output from the master movement control unit 92 and the master manipulator control unit 93 to the main manipulation control unit 94 may be a state quantity as viewed in a local coordinate system (for example, a master upper-body coordinate system Cm to be described later) set for the master device 50. In this case, in STEP 2, the main manipulation control unit 94 converts the actual slave state (the actual slave state as viewed in the local coordinate system) given from the master movement control unit 92 or the master manipulator control unit 93 into an actual master state as viewed in the master-side global coordinate system, and acquires the actual master state.

Further, in this embodiment, the attitude angle and the angular speed (in the pitch direction and the roll direction) around the lateral axis in the motion of the upper-body support part 65 are not a control target. Therefore, in STEP 2, the main manipulation control unit 94 can omit acquisition of the attitude angle and the angular speed around the lateral axis in the attitude angle $\uparrow\theta$_mb_act and the angular speed $\uparrow\omega$_mb_act of the actual upper-body support part motion, and can omit acquisition of the moment around the lateral axis in the moment $\uparrow$M_mb_act of the actual upper-body support part reaction force.

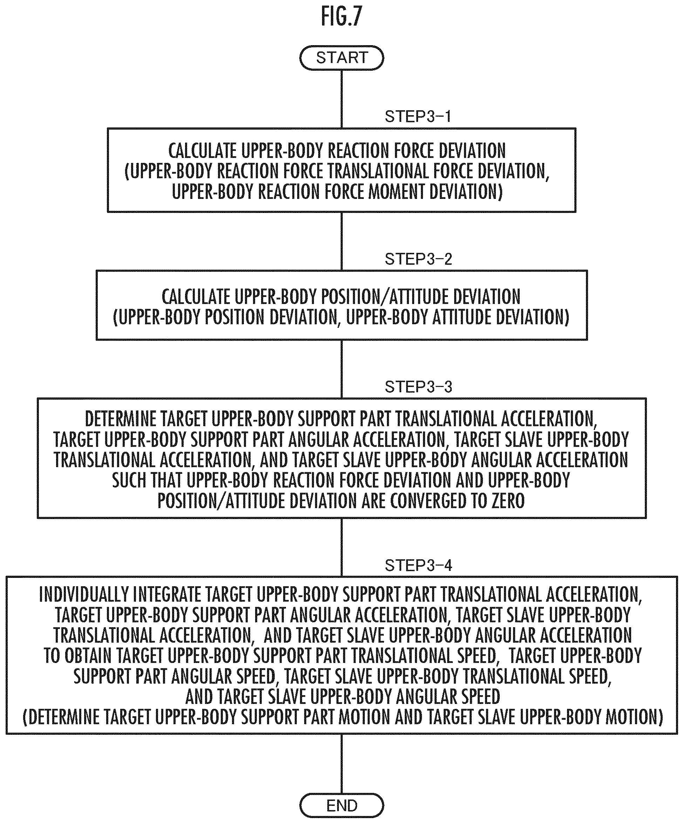

Next, in STEP 3, the main manipulation control unit 94 executes processing of upper-body side bilateral control which is bilateral control related to the actions of the upper body of the master device 51 and the upper body of the slave device 1. The processing of the upper-body side bilateral control is executed as illustrated in the flowchart of FIG. 7.

In STEP 3-1, the main manipulation control unit 94 calculates an upper-body reaction force deviation. In this embodiment, the upper-body reaction force deviation includes an upper-body reaction force translational force deviation $\uparrow$Efb which is an upper-body reaction force deviation related to a translational force, and an upper-body reaction force moment deviation $\uparrow$Emb which is an upper-body reaction force deviation related to a moment.

Then, the upper-body reaction force translational force deviation $\uparrow$Efb is defined as, for example, an index value representing the degree (deviation degree) of deviation of a mutual relationship between one or more translational forces of the translational force $\uparrow$F_mh_act of the actual master hand resultant force, the translational force $\uparrow$F_sb_act of the actual slave upper-body reaction force, and the translational force $\uparrow$F_sh_act of the actual slave hand resultant force and the translational force $\uparrow$F_mb_act of the actual upper-body support part reaction force from a predetermined target relationship.

Similarly, the upper-body reaction force moment deviation $\uparrow$Emb is defined as, for example, an index value representing the degree (deviation degree) of deviation of a mutual relationship between one or more moments of the moment $\uparrow$M_mh_act of the actual master hand resultant force, the moment $\uparrow$M_sb_act of the actual slave upper-body reaction force, and the moment $\uparrow$M_sh_act of the actual slave hand resultant force and the moment $\uparrow$M_mb_act of the actual upper-body support part reaction force from a predetermined target relationship.

Here, in this embodiment, the action of the master hand 81 and the slave hand 21 on each of the left and right sides is controlled by the hand side bilateral control described later such that the actual master hand reaction force and the actual slave hand reaction force on each of the left and right sides are proportional to each other at a predetermined ratio for each of the translational force and the moment. In this case, one of the translational force $\uparrow F\_mh\_act$ of the actual master hand resultant force and the translational force $\uparrow F\_sh\_act$ of the actual slave hand resultant force becomes a dependent variable of the other, and one of the moment $\uparrow M\_mh\_act$ of the actual master hand resultant force and the moment $\uparrow M\_sh\_act$ of the actual slave hand resultant force becomes a dependent variable of the other.

In this regard, in this embodiment, the upper-body reaction force translational force deviation $\uparrow Efb$ is defined by following equation (1a) as an index value represented by a function of one (for example, $\uparrow F\_mh\_act$) of the translational force $\uparrow F\_mh\_act$ of the actual master hand resultant force and the translational force $\uparrow F\_sh\_act$ of the actual slave hand resultant force, the translational force $\uparrow F\_sb\_act$ of the actual slave upper-body reaction force, and the translational force $\uparrow F\_mb\_act$ of the actual upper-body support part reaction force, for example.

Similarly, the upper-body reaction force moment deviation $\uparrow Emb$ is defined by following equation (1b) as an index value expressed by a function of one (for example, $\uparrow M\_mh\_act$) of the moment $\uparrow M\_mh\_act$ of the actual master hand resultant force and the moment $\uparrow M\_sh\_act$ of the actual slave hand resultant force, the moment $\uparrow M\_sb\_act$ of the actual slave upper-body reaction force, and the moment $\uparrow M\_mb\_act$ of the actual upper-body support part reaction force, for example. Incidentally, in this specification, "*" means a multiplication symbol.

$$\uparrow Efb$$
$$= \uparrow F\_mb\_act + Ratio\_fsb*\uparrow F\_sb\_act$$
$$+ Ratio\_fmh*\uparrow F\_mh\_act... \quad (1a)$$

$$\uparrow Emb$$
$$= \uparrow M\_mb\_act + Ratio\_msb*\uparrow M\_sb\_act$$
$$+ Ratio\_mmh*\uparrow M\_mh\_act... \quad (1b)$$

Here, Ratio_fsb, Ratio_fmh, Ratio_msb, and Ratio_mmh in equations (1a) and (1b) are coefficients representing return rates of $\uparrow F\_sb\_act$, $\uparrow F\_mh\_act$, $\uparrow M\_sb\_act$, and $\uparrow M\_mh\_act$ to the operator P, respectively, and are set to predetermined values determined in advance, respectively. The coefficient may be either a scalar or a diagonal matrix. Further, in this embodiment, the coefficients Ratio_fsb and Ratio_msb of the second term on the right side of each of equations (1a) and (1b) are set to the same value, and the coefficients Ratio_fmh and Ratio_mmh of the third term are set to the same value. However, Ratio_fsb and Ratio_msb can be set to different values, or Ratio_fmh and Ratio_mmh can be set to different values.

Incidentally, it is also possible to set one or both of Ratio_fsb and Ratio_fmh in equation (1a) to zero and set one or both of Ratio _msb and Ratio_mmh in equation (1a) to zero, which will be described later. Therefore, in this embodiment, it is assumed that Ratio_fsb $\neq$ 0, Ratio_fmh $\neq$ 0, Ratio_msb $\neq$ 0, and Ratio_mmh $\neq$ 0.

In this embodiment, the upper-body reaction force translational force deviation $\uparrow Efb$ defined by equation (1a) becomes zero ($\uparrow F\_mb\_act$ = -Ratio_fsb*$\uparrow F\_sb\_act$-Ratio_fmh*$\uparrow F\_mh\_act$) is a mutual target relationship among $\uparrow F\_mb\_act$, $\uparrow F\_sb\_act$, and $\uparrow F\_mh\_act$. Further, the upper-body reaction force moment deviation $\uparrow Emb$ defined by equation (1b) becomes zero ($\uparrow M\_mb\_act$ = -Ratio_msb*$\uparrow M\_sb\_act$-Ratio_mmh*$\uparrow M\_mh\_act$) is a mutual target relationship of $\uparrow M\_mb\_act$, $\uparrow M\_sb\_act$, and $\uparrow M\_mh\_act$.

Then, in STEP 3-1, the main manipulation control unit 94 calculates the upper-body reaction force deviation ($\uparrow Efb$, $\uparrow Emb$) from the actual slave upper-body reaction force ($\uparrow F\_sb\_act$, $\uparrow M\_sb\_act$) acquired in STEP 1, the actual master hand resultant force ($\uparrow F\_mh\_act$, $\uparrow M\_mh\_act$) which is the resultant force of the left and right actual master hand reaction forces acquired in STEP 2, and the actual upper-body support part reaction force ($\uparrow F\_mb\_act$, $\uparrow M\_mb\_act$) acquired in STEP 2 according to above equations (1a) and (1b).

Incidentally, instead of the actual master hand resultant force ($\uparrow F\_mh\_act$, $\uparrow M\_mh\_act$), the upper-body reaction force deviation ($\uparrow Efb$, $\uparrow Emb$) can be calculated using the actual slave hand resultant force ($\uparrow F\_sh\_act$, $\uparrow M\_sh\_act$) proportional to the actual master hand resultant force.

Next, in STEP 3-2, the main manipulation control unit 94 calculates an upper-body position/attitude deviation. This upper-body position/attitude deviation includes an upper-body position deviation $\uparrow Epb$ related to the respective positions of the upper-body support part 65 and the slave upper body, and an upper-body attitude deviation $\uparrow Ethb$ related to the respective attitude angles of the upper-body support part 65 and the slave upper body.

Then, the upper-body position deviation $\uparrow Epb$ is defined as an index value representing the degree (deviation degree) of deviation of the mutual relationship between the position ↑P_mb_act of the upper-body support part 65 and the position ↑P_sb_act of the slave upper body from a predetermined target relationship. Similarly, the upper-body attitude deviation ↑Ethb is defined as an index value representing the degree (deviation degree) of deviation of the mutual relationship between the attitude angle ↑θ_mb_act of the upper-body support part 65 and the attitude angle ↑θ_sb_act of the slave upper body from a predetermined target relationship.

More specifically, in this embodiment, the position ↑P_sb_act of the slave upper body and the attitude angle ↑θ_sb_act are controlled with, for example, a position obtained by multiplying the position ↑P_mb_act of the upper-body support part 65 by (1/Ratio_psb) and an angle obtained by multiplying the attitude angle ↑θmb_act of the upper-body support part 65 by (1/Ratio_thsb) as targets.

In this regard, in this embodiment, index values defined by the right sides of following equations (2a) and (2b) are used as the upper-body position deviation ↑Epb and the upper-body attitude deviation ↑Rthb, respectively.

$$\uparrow Epb = \uparrow P\_mb\_act - Ratio\_psb * \uparrow P\_sb\_act ... \quad (2a)$$

$$\uparrow Ethb = \uparrow θ\_mb\_act - Ratio\_thsb * \uparrow θ\_sb\_act ... \quad (2b)$$

Here, the coefficients Ratio_psb and Ratio_thsb in equations (2a) and (2b) are coefficients (scalar or diagonal matrix) of predetermined values set in advance, respectively. Further, in this embodiment, Ratio_psb and Ratio_thsb are set to the same value. However, Ratio_psb and Ratio_thsb can be set to different values. Incidentally, in this specification, when an arbitrary variable A is a diagonal matrix, 1/A means an inverse matrix of A. For example, in a case where the coefficient Ratio_psb is a diagonal matrix, (1/Ratio_psb) is an inverse matrix of Ratio_psb.

In this embodiment, a mutual target relationship of ↑P_mb_act and ↑P_sb_act is that the upper-body position deviation ↑Epb defined by equation (2a) becomes zero (↑P_mb_act = Ratio_psb*↑P_sb_act), and a mutual target relationship of ↑θ_mb_act and ↑θ_sb_act is that the upper-body attitude deviation ↑Ethb defined by equation (2b) becomes zero (↑θ_mb_act = Ratio_thsb*↑θ_sb_act).

Then, in STEP 3-2, the main manipulation control unit 94 calculates the upper-body position/attitude deviation (↑Epb, ↑Ethb) from the position ↑P_sb_act and the attitude angle ↑θ_sb_act of the actual slave upper-body motion acquired in STEP 1 and the position ↑P_mb_act and the attitude angle ↑θ_mb_act of the actual upper-body support part motion acquired in STEP 2 according to above equations (2a) and (2b).

Next, in STEP 3-3, the main manipulation control unit 94 determines a target upper-body support part translational acceleration ↑Acc_mb_aim and a target upper-body support part angular acceleration ↑β_mb_aim which are respective target values of the translational acceleration and the angular acceleration of the upper-body support part 65, and a target slave upper-body translational acceleration ↑Acc_sb_aim and a target slave upper-body angular acceleration ↑β_sb_aim which are respective target values of the translational acceleration and the angular acceleration of the slave upper body, such that the upper-body reaction force deviation and the upper-body position/attitude deviation are converged to zero.

In this case, more specifically, the target upper-body support part translational acceleration ↑Acc_mb_aim and the target slave upper-body translational acceleration ↑Acc_sb_aim are determined such that each of the upper-body reaction force translational force deviation ↑Efb and the upper-body position deviation ↑Epb is converged to zero, and the target upper-body support part angular acceleration ↑β_mb_aim and the target slave upper-body angular acceleration ↑β_sb_aim are determined such that each of the upper-body reaction force moment deviation ↑Emb and the upper-body attitude deviation ↑Ethb is converged to zero.

Then, a method of determining the target upper-body support part translational acceleration ↑Acc_mb_aim and the target slave upper-body translational acceleration ↑Acc_sb_aim and a method of determining the target upper-body support part angular acceleration ↑β_mb_aim and the target slave upper-body angular acceleration ↑β_sb_aim are similar to each other. Hereinafter, the method of determining ↑Acc_mb_aim and ↑Acc_sb_aim will be described in detail.

When a coefficient representing a rigidity between the upper-body support part 65 and the operator P is denoted by Kmb and a coefficient representing a rigidity between the slave upper body and an external object (excluding the floor surface) is denoted by Ksb, it can be considered that the relationship of following equation (3a) is approximately established between the translational force ↑F_mb_act ↑of the actual upper-body support part reaction force and the position ↑P_mb_act of the actual upper-body support part motion. Similarly, it can be considered that the relationship of following equation (4a) is approximately established between the translational force $\uparrow F\_sb\_act$ $\uparrow$of the actual slave upper-body reaction force and the position $\uparrow P\_sb\_act$ in the actual slave upper-body motion.

$$\uparrow F\_mb\_act$$
$$= -Kfmb*\uparrow P\_mb\_act + \uparrow Cfmb... \quad (3a)$$

$$\uparrow F\_sb\_act$$
$$= -Kfsb*\uparrow P\_sb\_act + \uparrow Cfsb... \quad (4a)$$

Incidentally, each of the coefficients Kfmb and Kfsb is a coefficient (scalar or diagonal matrix) of a predetermined value corresponding to a so-called spring constant. Further, each of $\uparrow Cfmb$ and $\uparrow Cfsb$ is a constant vector (a vector in which each component is a constant of a value).

Following equation (5a) is obtained from above equations (1a), (3a), and (4a).

$$\uparrow Efb$$
$$= (-Kfmb*\uparrow P\_mb\_act + \uparrow Cfmb)$$
$$+ Ratio\_fsb*(-Kfsb*\uparrow P\_sb\_act + \uparrow Cfsb)$$
$$+ Ratio\_fmh*\uparrow F\_mh\_act$$
$$= -Kfmb*\uparrow P\_mb\_act - Ratio\_fsb*Kfsb*\uparrow P\_sb\_act$$
$$+ Ratio\_fmh*\uparrow F\_mh\_act$$
$$+ \uparrow Cfmb + Ratio\_fsb*\uparrow Cfsb... \quad (5a)$$

Here, variables $\uparrow ua$ and $\uparrow va$ are defined by following equations (6a) and (7a), respectively.

$$\uparrow ua$$
$$= -Kfmb*\uparrow P\_mb\_act - Ratio\_fsb*Kfsb*\uparrow P\_sb\_act$$
$$... \quad (6a)$$

$$\uparrow va$$
$$= \uparrow P\_mb\_act - Ratio\_psb*\uparrow P\_sb\_act... \quad (7a)$$

At this time, following equations (8a) and (9a) are obtained from above equations (2a), (5a), (6a), and (7a).

$$\uparrow Efb$$
$$= \uparrow ua + Ratio\_fmh*\uparrow F\_mh\_act$$
$$+ \uparrow Cfmb + Ratio\_fsb*\uparrow Cfsb... \quad (8a)$$

$$\uparrow Epb = \uparrow va... \quad (9a)$$

In order to converge the upper-body reaction force translational force deviation $\uparrow Efb$ to zero, the second-order differential value of the upper-body reaction force translational force deviation $\uparrow Efb$ may match the target value ↑Efb_dotdot_aim which satisfies the relational expression of following equation (10a). Similarly, in order to converge the upper-body position deviation ↑Epb to zero, the second-order differential value of the upper-body position deviation ↑Epb may match the target value ↑Epb_dotdot_aim which satisfies the relational expression of following equation (11a).

$$↑Efb\_dotdot\_aim$$
$$= -Kfbp*↑Efb-Kfbv*↑Efb\_dot$$
$$... \quad (10a)$$

$$↑Epb\_dotdot\_aim$$
$$= -Kpbp*↑Epb - Kpbv*↑Epb\_dot$$
$$... \quad (11a)$$

Incidentally, the coefficients Kfbp and Kfbv on the right side of equation (10a) are gains (scalar or diagonal matrix) of a predetermined value, and ↑Efb_dot is the first-order differential value (temporal change rate) of ↑Efb. Further, coefficients Kpbp and Kpbv on the right side of equation (11a) are gains (scalar or diagonal matrix) of a predetermined value, and ↑Epb_dot is the first-order differential value (temporal change rate) of ↑Epb.

Supplementally, in this specification, the reference sign added with "_dot" represents the first-order differential value (temporal change rate) of the state quantity indicated by the reference sign from which "_dot" is removed, and the reference sign added with "_dotdot" represents the second-order differential value of the state quantity indicated by the reference sign from which "_dotdot" is removed.

On the other hand, following equations (12a) and (13a) are obtained by the second-order differentiation of both sides of above equations (8a) and (9a), respectively.

$$↑Efb\_dotdot$$
$$= ↑ua\_dotdot + Ratio\_fmh*↑F\_mh\_dotdot\_act$$
$$... \quad (12a)$$

$$↑Epb\_dotdot = ↑va\_dotdot... \quad (13a)$$

Therefore, when the target value of ↑ua_dotdot for converging the upper-body reaction force translational force deviation ↑Efb to zero is denoted by ↑ua_dotdot_aim, and the target value of ↑va_dotdot for converging the upper-body position deviation ↑Epb to zero is denoted by ↑va_dotdot aim, following equations (14a) and (15a) are obtained from equations (12a) and (13a).

$$↑Efb\_dotdot\_aim$$
$$= ↑ua\_dotdot\_aim + Ratio\_fmh*↑F\_mh\_dotdot\_act$$
$$... \quad (14a)$$

$$↑Epb\_dotdot\_aim = ↑va\_dotdot\_aim$$
$$... \quad (15a)$$

Then, following equations (16a) and (17a) are obtained from above equations (10a), (11a), (14a), and (15a).

$$\uparrow\text{ua\_dotdot\_aim}$$

$$= -\text{Kfbp}*\uparrow\text{Efb} - \text{Kfbv}*\uparrow\text{Efb\_dot}$$

$$- \text{Ratio\_fmh}*\uparrow\text{F\_mh\_dotdot\_act}$$

$$... \quad (16a)$$

$$\uparrow\text{va\_dotdot\_aim}$$

$$= -\text{Kpbp}*\uparrow\text{Epb} - \text{Kpbv}*\uparrow\text{Epb\_dot}$$

$$... \quad (17a)$$

Further, following equations (18a) and (19a) related to the target upper-body support part translational acceleration ↑Acc_mb_aim and the target slave upper-body translational acceleration ↑Acc_sb_aim are obtained from the relational expressions obtained by the second-order differentiation of both sides of equations (6a) and (7a), respectively.

$$\uparrow\text{ua\_dotdot\_aim}$$

$$= -\text{Kfmb}*\uparrow\text{Acc\_mb\_aim}$$

$$- \text{Ratio\_fsb}*\text{Kfsb}*\uparrow\text{Acc\_sb\_aim}$$

$$... \quad (18a)$$

$$\uparrow\text{va\_dotdot\_aim}$$

$$= \uparrow\text{Acc\_mb\_aim} - \text{Ratio\_psb}*\uparrow\text{Acc\_sb\_aim}$$

$$... \quad (19a)$$

Following equations (20a) and (21a) are obtained when ↑Acc_mb_aim and ↑Acc_sb_aim are obtained with equations (18a) and (19a) as simultaneous equations.

$$\uparrow\text{Acc\_mb\_aim}$$

$$= -(\text{Ratio\_psb}/(\text{Kfmb}*\text{Ratio\_psb} + \text{Ratio\_fsb}*\text{Kfsb}))$$

$$*\uparrow\text{ua\_dotdot\_aim}$$

$$+ (\text{Ratio\_fsb}*\text{Kfsb}/(\text{Kfmb}*\text{Ratio\_psb}$$

$$+ \text{Ratio\_fsb}*\text{Kfsb}))*\uparrow\text{va\_dotdot\_aim}$$

$$... \quad (20a)$$

$$\uparrow Acc\_sb\_aim$$

$$= -(1/(Kfmb*Ratio\_psb + Ratio\_fsb*Kfsb))$$

$$*\uparrow ua\_dotdot\_aim$$

$$- (Kfmb/(Kfmb*Ratio\_psb$$

$$+ Ratio\_fsb*Kfsb))*\uparrow va\_dotdot\_aim$$

$$... \quad (21a)$$

Above equations (16a), (17a), (20a), and (21a) are equations for determining the target upper-body support part translational acceleration $\uparrow Acc\_mb\_aim$ and the target slave upper-body translational acceleration $\uparrow Acc\_sb\_aim$. In this case, $\uparrow ua\_dotdot\_aim$ is calculated from the upper-body reaction force translational force deviation $\uparrow Efb$ obtained in STEP 3-1, $\uparrow Efb\_dot$ obtained as the first-order differential value (temporal change rate) thereof, and $\uparrow F\_mh\_dotdot\_act$ obtained as the second-order differential value of the translational force $\uparrow F\_mh\_act$ of the actual master hand resultant force which is the resultant force of the left and right actual master hand reaction forces acquired in STEP 2 according to equation (16a). Further, $\uparrow va\_dotdot\_aim$ is calculated from the upper-body position deviation $\uparrow Epb$ obtained in STEP 3-2 and $\uparrow Epb\_dot$ obtained as the first-order differential value (temporal change rate) thereof according to equation (17a).

Then, from the calculated values of $\uparrow ua\_dotdot\_aim$ and $\uparrow va\_dotdot\_aim$, the target upper-body support part translational acceleration $\uparrow Acc\_mb\_aim$ and the target slave upper-body translational acceleration $\uparrow Acc\_sb\_aim$ are calculated according to equations (20a) and (21a). As a result, $\uparrow Acc\_mb\_aim$ and $\uparrow Acc\_sb\_aim$ are determined such that the upper-body reaction force translational force deviation $\uparrow Efb$ and the upper-body position deviation $\uparrow Epb$ are converged to zero.

Supplementally, following equations (22a) and (23a) are obtained from equations (1a) and (2a), the relational expressions obtained by differentiating both sides of equations (1a) and (2a), and equations (16a) and (17a), respectively.

$$\uparrow ua\_dotdot\_aim$$

$$= -Kfbp*\uparrow Efb - Kfbv*\uparrow Efb\_dot$$

$$- Ratio\_fmh*\uparrow F\_mh\_dotdot\_act$$

$$= -Kfbp*(\uparrow F\_mb\_act + Ratio\_fsb*\uparrow F\_sb\_act$$

$$+ Ratio\_fmh*\uparrow F\_mh\_act)$$

$$- Kfbv*(\uparrow F\_mb\_dot\_act + Ratio\_fsb*\uparrow F\_sb\_dot\_act$$

$$+ Ratio\_fmh*\uparrow F\_mh\_dot\_act)$$

$$- Ratio\_fmh*\uparrow F\_mh\_dotdot\_act$$

$$... \quad (22a)$$

$$\uparrow\text{va\_dotdot\_aim}$$

$$= -\text{Kpbp}*\uparrow\text{Epb} - \text{Kpbv}*\uparrow\text{Epb\_dot}$$

$$= -\text{Kpbp}*(\uparrow\text{P\_mb\_act} - \text{Ratio\_psb}*\uparrow\text{P\_sb\_act})$$

$$- \text{Kpbv}*(\uparrow\text{P\_mb\_dot\_act} - \text{Ratio\_psb}*\uparrow\text{P\_sb\_dot\_act})$$

$$= -\text{Kpbp}*(\uparrow\text{P\_mb\_act} - \text{Ratio\_psb}*\uparrow\text{P\_sb\_act})$$

$$- \text{Kpbv}*(\uparrow\text{V\_mb\_act} - \text{Ratio\_psb}*\uparrow\text{V\_sb\_act})$$

$$... \quad (23a)$$

Therefore, $\uparrow$ua_dotdot_aim can be calculated from each of the translational force $\uparrow$F_mb_act of the actual upper-body support part reaction force acquired in STEP 2, the translational force $\uparrow$F_mh_act of the actual master hand resultant force which is the resultant force of the left and right actual master hand reaction forces acquired in STEP 2, and the translational force $\uparrow$F_sb_act of the actual slave upper-body reaction force acquired in STEP 1, $\uparrow$F_mb_dot_act, F_mh_dot_act, and $\uparrow$F_sb_dot_act obtained as the first-order differential value (temporal change rate) thereof, and $\uparrow$F_mh_dotdot_act obtained as the second-order differential value of $\uparrow$F_mh_act according to equation (22a).

$\uparrow$va_dotdot_aim can be calculated from the position $\uparrow$P_mb_act and the translational speed $\uparrow$V_mb_act in the actual upper-body support part motion acquired in STEP 2 and the position $\uparrow$P_sb_act and the translational speed $\uparrow$V_sb_act in the actual slave upper-body motion acquired in STEP 1 according to equation (23a). In this case, a process of calculating the upper-body reaction force translational force deviation $\uparrow$Efb and the upper-body position deviation $\uparrow$Epb is unnecessary in STEPS 3-1 and 3 -2, respectively.

$\uparrow$Acc_mb_aim and $\uparrow$Acc_sb_aim can be calculated by a relational expression (a relational expression not including $\uparrow$ua_dotdot_aim and $\uparrow$va_dotdot_aim) in which a set of equations (16a) and (17a) or a set of equations (22a) and (23a) and a set of equations (20a) and (21a) are integrated.

The relational expression for determining the target upper-body support part angular acceleration $\uparrow\beta$_mb_aim and the target slave upper-body angular acceleration $\uparrow\beta$_sb_aim is also obtained in the same manner as described above. In this case, following equations (3b), (4b), (6b), (7b), (10b), and (11b) are defined as relational expressions respectively corresponding to above equations (3a), (4a), (6a), (7a), (10a), and (11a).

$$\uparrow\text{M\_mb\_act}$$

$$= -\text{Kmmb}*\uparrow\theta\text{\_mb\_act} + \uparrow\text{Cmmb}$$

$$... \quad (3b)$$

$$\uparrow\text{M\_sb\_act}$$

$$= -\text{Kmsb}*\uparrow\theta\text{\_sb\_act} + \uparrow\text{Cmsb}$$

$$... \quad (4b)$$

$$\uparrow\text{ub}$$

$$= -\text{Kmmb}*\uparrow\theta\text{\_mb\_act} - \text{Ratio\_msb}*\text{Kmsb}*\uparrow\theta\text{\_sb\_act}$$

$$... \quad (6b)$$

$$\uparrow vb$$

$$= \uparrow\theta\_mb\_act - Ratio\_thsb*\uparrow\theta\_sb\_act$$

$$... \quad (7b)$$

$$\uparrow Emb\_dotdot\_aim$$

$$= - Kmbp*\uparrow Emb - Kmbv*\uparrow Emb\_dot$$

$$... \quad (10b)$$

$$\uparrow Ethb\_dotdot\_aim$$

$$= -Kthbp*\uparrow Ethb-Kthbv*\uparrow Ethb\_dot$$

$$... \quad (11b)$$

Incidentally, similarly to the coefficient Kfmb in equation (3a) and the coefficient Kfsb in equation (4a), Kmmb in equations (3b) and (6b) and the coefficients Kmsb in equations (4b) and (6b) are coefficients (scalar or diagonal matrix) of predetermined values representing a rigidity, respectively, and $\uparrow$Cmmb in equation (3b) and $\uparrow$Cmsb in equation (4b) are constant vectors, respectively. Further, each of the coefficients Kmbp and Kmbv in equation (10b) and the coefficients Kthbp and Kthbv in equation (11b) is a gain (scalar or diagonal matrix) of a predetermined value.

Then, following equations (16b), (17b), (20b), and (21b) respectively corresponding to above equations (16a), (17a), (20a), and (21a) are obtained from these equations (3b), (4b), (6b), (7b), (10b), and (11b) and above equations (1b) and (2b).

$$\uparrow ub\_dotdot\_aim$$

$$= - Kmbp*\uparrow Emb - Kmbv*\uparrow Emb\_dot$$

$$- Ratio\_mmh*\uparrow M\_mh\_dotdot\_act$$

$$... \quad (16b)$$

$$\uparrow vb\_dotdot\_aim$$

$$= -Kthbp*\uparrow Ethb - Kthbv*\uparrow Ethb\_do$$

$$t... \quad (17b)$$

$$\uparrow\beta\_mb\_aim$$

$$= -(Ratio\_thsb/(Kmmb*Ratio\_thsb + Ratio\_msb*Kmsb))$$

$$*\uparrow ub\_dotdot\_aim$$

$$+ (Ratio\_msb*Kmsb/(Kmmb*Ratio\_thsb$$

$$+Ratio\_msb*Kmsb))*\uparrow vb\_dotdot\_aim$$

$$... \quad (20b)$$

$$\uparrow\beta\_sb\_aim$$

$$= -(1/(Kmmb*Ratio\_thsb + Ratio\_msb*Kmsb))$$

$$*\uparrow ub\_dotdot\_aim$$

$$- (Kmmb/(Kmmb*Ratio\_thsb + Ratio\_msb*Kmsb))$$

$$*\uparrow vb\_dotdot\_aim$$

$$... \quad (21b)$$

Above equations (16b), (17b), (20b), and (21b) are equations for determining the target upper-body support part angular acceleration $\uparrow\beta\_mb\_aim$ and the target slave upper-body angular acceleration $\uparrow\beta\_sb\_aim$. In this case, $\uparrow ub\_dotdot\_aim$ is calculated from the upper-body reaction force moment deviation $\uparrow Emb$ obtained in STEP 3-1, $\uparrow Emb\_dot$ obtained as the first-order differential value (temporal change rate) thereof, and $\uparrow M\_mh\_dotdot\_act$ obtained as the second-order differential value of the moment $\uparrow M\_mh\_act$ of the actual master hand resultant force which is the resultant force of the left and right actual master hand reaction forces acquired in STEP 2 according to equation (16b).
Further, $\uparrow vb\_dotdot\_aim$ is calculated from the upper-body attitude deviation $\uparrow Ethb$ obtained in STEP 3-2 and $\uparrow Ethb\_dot$ obtained as the first-order differential value (temporal change rate) thereof according to equation (17b).
Then, from the calculated values of $\uparrow ub\_dotdot\_aim$ and $\uparrow vb\_dotdot\_aim$, the target upper-body support part angular acceleration $\uparrow\beta\_mb\_aim$ and the target slave upper-body angular acceleration $\uparrow\beta\_sb\_aim$ are calculated according to equations (20b) and (21b). As a result, $\uparrow\beta\_mb\_aim$ and $\uparrow\beta\_sb\_aim$ are determined such that the upper-body reaction force moment deviation $\uparrow Emb$ and the upper-body attitude deviation $\uparrow Ethb$ are converged to zero.
Supplementally, following equations (22b) and (23b) are obtained from equations (1b) and (2b), the relational expressions obtained by differentiating both sides of equations (1b) and (2b), and equations (16b) and (17b), respectively.

$$\uparrow ub\_dotdot\_aim$$

$$= -Kmbp*(\uparrow M\_mb\_act + Ratio\_msb*\uparrow M\_sb\_act$$

$$+ Ratio\_mmh*\uparrow M\_mh\_act)$$

$$- Kmbv*(\uparrow M\_mb\_dot\_act + Ratio\_msb*\uparrow M\_sb\_dot\_act$$

$$+ Ratio\_mmh*\uparrow M\_mh\_dot\_act)$$

$$- Ratio\_mmh*\uparrow M\_mh\_dotdot\_act$$

$$... \quad (22b)$$

$$\uparrow vb\_dotdot\_aim$$

$$= -Kthbp*(\uparrow\theta\_mb\_act - Ratio\_thsb*\uparrow\theta\_sb\_act)$$

$$- Kthbv*(\uparrow\omega\_mb\_act - Ratio\_thsb*\uparrow\omega\_sb\_act)$$

$$... \quad (23b)$$

Therefore, $\uparrow ub\_dotdot\_aim$ can be calculated from each of the moment $\uparrow M\_mb\_act$ of the actual upper-body support part reaction force acquired in STEP 2, the moment $\uparrow M\_mh\_act$ of the actual master hand resultant force which is the resultant force of the left and right actual master hand reaction forces acquired in STEP 2, and the moment $\uparrow M\_sb\_act$ of the actual slave upper-body reaction force acquired in STEP 1, $\uparrow M\_mb\_dot\_act$, $\uparrow M\_mh\_dot\_act$, and $\uparrow M\_sb\_dot\_act$ obtained as the first-order differential value (temporal change rate) thereof, and $\uparrow M\_mh\_dotdot\_act$ obtained as the second-order differential value of $\uparrow M\_mh\_act$ according to equation (22b).
$\uparrow vb\_dotdot\_aim$ can be calculated from the attitude angle $\uparrow\theta\_mb\_act$ and the angular speed $\uparrow\omega\_mb\_act$ in the actual upper-body support part motion acquired in STEP 2 and the attitude angle $\uparrow\theta\_sb\_act$ and the angular speed $\uparrow\omega\_sb\_act$ of the actual slave upper-body motion acquired in STEP 1 according to equation (23b). In this case, a process of calculating the upper-body reaction force moment deviation ↑Emb and the upper-body attitude deviation ↑Ethb is unnecessary in STEPS 3-1 and 3 -2, respectively.

↑β_mb_aim and ↑β_sb_aim can also be calculated by a relational expression (a relational expression not including ↑ub_dotdot_aim and ↑vb_dotdot_aim) in which a set of equations (16b) and (17b) or a set of equations (22b) and (23b) and a set of equations (20b) and (21b) are integrated.

Incidentally, in this embodiment, the attitude angle and the angular speed around the axis in the direction (lateral direction) orthogonal to the up-down direction in the motions of the upper-body support part and the slave upper body are not a control target. Therefore, in ↑β_mb_aim and ↑β_sb_aim, the calculation of the angular acceleration around the lateral axis may be omitted.

In this embodiment, the processing in STEP 3-3 is executed as described above.

Next, in STEP 3-4, the main manipulation control unit 94 individually integrates the target upper-body support part translational acceleration ↑Acc_mb_aim, the target upper-body support part angular acceleration ↑β_mb_aim, the target slave upper-body translational acceleration ↑Acc_sb_aim, and the target slave upper-body angular acceleration ↑β_sb_aim determined as described above, thereby determining a target upper-body support part translational speed ↑V_mb_aim which is the target translational speed of the upper-body support part 65, a target upper-body support part angular speed ↑ω_mb_aim which is the target angular speed of the upper-body support part 65, a target slave upper-body translational speed ↑V_sb_aim which is the target translational speed of the upper body of the slave device 1, and a target slave upper-body angular speed ω_sb_aim which is the target angular speed of the upper body of the slave device 1.

The processing of the upper-body side bilateral control in STEP 3 is executed as described above. As a result, the target upper-body support part translational speed ↑V_mb_aim and the target upper-body support part angular speed ↑ω_mb_aim as components of the target motion (hereinafter, referred to as a target upper-body support part motion) of the upper-body support part 65, and the target slave upper-body translational speed ↑V_sb_aim and the target slave upper-body angular speed ↑ω_sb_aim as components of the target motion (hereinafter, referred to as a target slave upper-body motion) of the slave upper body are determined.

Returning to FIG. 6, next, in STEP 4, the main manipulation control unit 94 executes processing of the hand side bilateral control which is bilateral control related to the actions of the hands 81L and 81R of the master manipulator 70 and the hands 21L and 21R of the slave manipulator 10.

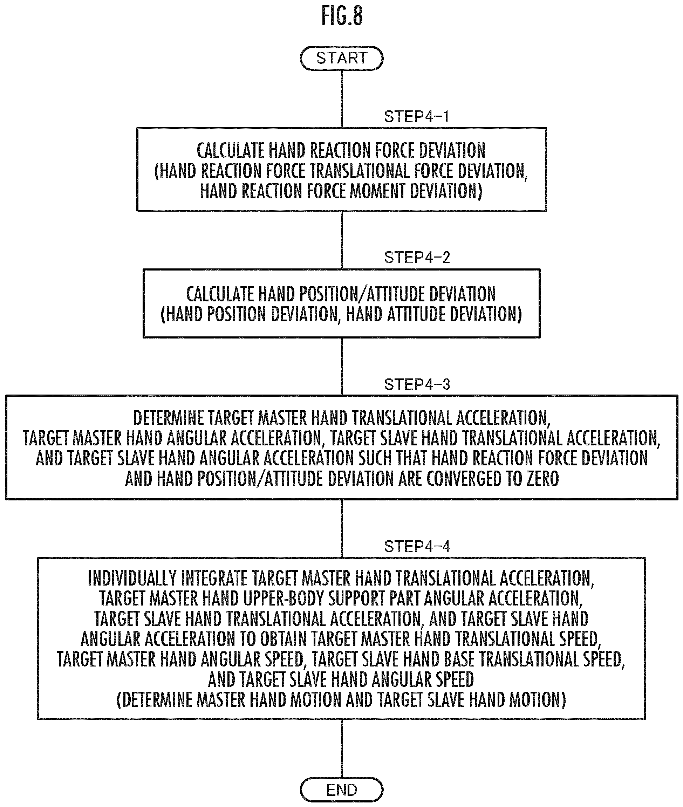

The processing of the hand side bilateral control is executed as illustrated in the flowchart of FIG. 8 for each of a set of the left master hand 81L and the left slave hand 21L and a set of the right master hand 81R and the right slave hand 21R. In the following description, for example, processing related to the set of the left master hand 81L and the left slave hand 21L will be representatively described.

In STEP 4-1, the main manipulation control unit 94 calculates a hand reaction force deviation. Here, similarly to the upper-body reaction force deviation, the hand reaction force deviation includes a hand reaction force translational force deviation ↑Efh which is a hand reaction force deviation related to a translational force, and a hand reaction force moment deviation ↑Emh which is a hand reaction force deviation related to a moment.

Then, the hand reaction force translational force deviation ↑Efh is defined as an index value representing the degree (deviation degree) of deviation of the mutual relationship between the translational force ↑F_mh_act_L of the left actual master hand reaction force and the translational force ↑F_sh_act_L of the left actual slave hand reaction force from a predetermined target relationship.

Similarly, the hand reaction force moment deviation ↑Emh is defined as an index value representing the degree (deviation degree) of deviation of the mutual relationship between the moment ↑M_mh_act_L of the left actual master hand reaction force and the moment ↑M_sh_act_L of the left actual slave hand reaction force from a predetermined target relationship.

Incidentally, as described above, when the hand reaction force moment deviation ↑Emh is obtained, it is preferable that the moment ↑M_mh_act_L of the left actual master hand reaction force is converted into a moment around the predetermined reference point Qhm_L set for the left master hand 81L, and the moment ↑M_sh_act_L of the left actual slave hand reaction force is converted into a moment around the predetermined reference point Qhs_L set for the left slave hand 21L. By this conversion, the characteristics of the bilateral control become more appropriate.

Here, in this embodiment, the actions of the master hand 81L and the slave hand 21L are controlled such that the translational force ↑F_mh_act_L and the moment ↑M_mh_act_L of the actual master hand reaction force on the left side are proportional to the translational force ↑F_sh_act_L and the moment ↑M_sh_act_L of the actual slave hand reaction force on the left side at a predetermined ratio.

In this regard, in this embodiment, the hand reaction force translational force deviation ↑Efh is, for example, an index value defined by following equation (31a), and the hand reaction force moment deviation ↑Efb is, for example, an index value defined by following equation (31b).

$$\uparrow Efh$$

$$= \uparrow F\_mh\_act\_L + Ratio\_fsh * \uparrow F\_sh\_act\_L$$

$$... \quad (31a)$$

$$\uparrow Emh$$

$$= \uparrow M\_mh\_act\_L + Ratio\_msh * \uparrow M\_sh\_act\_L$$

$$... \quad (31b)$$

Here, the coefficients Ratio_fsh and Ratio_msh in equations (31a) and (31b) are coefficients (scalar or diagonal matrix) of predetermined values set in advance, respectively. Further, in this embodiment, these coefficients Ratio fsh and Ratio msh are set to the same value. However, Ratio fsh and Ratio_msh can be set to different values.

In this embodiment, a mutual target relationship of $\uparrow F\_mh\_act\_L$ and $\uparrow F\_sh\_act\_L$ is that the hand reaction force translational force deviation $\uparrow Efb$ defined by equation (31a) becomes zero ($\uparrow F\_mh\_act\_L = -Ratio\_fsh * \uparrow F\_sh\_act\_L$), and a mutual target relationship of $\uparrow M\_mh\_act\_L$ and $\uparrow Msh\_act\_L$ is that the hand reaction force moment deviation $\uparrow Emh$ defined by equation (31b) becomes zero ($\uparrow M\_mh\_act\_L = -Ratio\_msh * \uparrow M\_sh\_act\_L$).

Then, in STEP 4-1, the main manipulation control unit 94 calculates the hand reaction force deviation ($\uparrow Efh$, $\uparrow Emh$) from the left actual slave hand reaction force ($\uparrow F\_sh$ act L, $\uparrow M\_sh\_act\_R$) acquired in STEP 1 and the left actual master hand reaction force ($\uparrow F\_mh\_act\_L$, $\uparrow M\_mh\_act\_L$) acquired in STEP 2 according to above equations (31a) and (31b).

Next, in STEP 4-2, the main manipulation control unit 94 calculates a hand position/attitude deviation. Similarly to the upper-body position/attitude deviation, the hand position/attitude deviation includes a hand position deviation $\uparrow Eph$ related to the position of each of the left master hand 81L and the left slave hand 21L, and a hand attitude deviation $\uparrow Ethh$ related to the attitude (orientation) of each of the left master hand 81L and the left slave hand 21L.

Then, in this embodiment, the hand position deviation $\uparrow Eph$ and the hand attitude deviation $\uparrow Ethh$ are defined similarly to the upper-body position/attitude deviation ($\uparrow Epb$, $\uparrow Ethb$). That is, the position $\uparrow P\_sh\_act\_L$ and the attitude angle $\uparrow \theta\_sh\_act$ of the slave hand 21L are controlled with a position obtained by multiplying the position $\uparrow P\_mh\_act\_L$ of the master hand 81L by (1/Ratio_psh) and an angle obtained by multiplying the attitude angle $\uparrow \theta mh\_act\_L$ of the master hand 81L by (1/Ratio_thsh) as a target.

In this regard, in this embodiment, index values defined by the right sides of following equations (32a) and (32b) are used as the hand position deviation $\uparrow Eph$ and the hand attitude deviation $\uparrow Rthh$, respectively.

$$\uparrow Eph = \uparrow P\_mh\_act\_L - Ratio\_psh * \uparrow P\_sh\_act\_L$$

$$... \quad (32a)$$

$$\uparrow Ethh = \uparrow \theta\_mh\_act\_L - Ratio\_thsh * \uparrow \theta\_sh\_act\_L$$

$$... \quad (32b)$$

Here, the coefficients Ratio_psh and Ratio_thsh in equations (32a) and (32b) are coefficients (scalar or diagonal matrix) of predetermined values set in advance, respectively. Further, in this embodiment, Ratio_psh and Ratio_thsh are set to the same value. However, Ratio_psh and Ratio_thsh can be set to different values.

In this embodiment, a mutual target relationship of $\uparrow P\_mh\_act\_L$ and $\uparrow P\_sh\_act\_L$ is that the hand position deviation $\uparrow Eph$ defined by equation (32a) becomes zero ($\uparrow P\_mh\_act\_L = Ratio\_psh * \uparrow P\_sh\_act\_L$), and the value of $\uparrow Eph$ represents the degree (deviation degree) of deviation from the target relationship. Further, a mutual target relationship of $\uparrow \theta\_mh\_act\_L$ and $\uparrow \theta\_sh\_act\_L$ is that the hand attitude deviation $\uparrow Ethh$ defined by equation (32b) becomes zero ($\uparrow \theta\_mh\_act\_L = Ratio\_thsh * \uparrow \theta\_sh\_act\_L$), and the value of $\uparrow Ethh$ represents the degree (deviation degree) of deviation from the target relationship.

Then, in STEP 4-2, the main manipulation control unit 94 calculates the hand position/attitude deviation ($\uparrow Eph$, $\uparrow Ethh$) from the position $\uparrow P\_sh\_act\_L$ and the attitude angle $\uparrow \theta\_sh\_act\_L$ of the left slave hand 21L in the actual slave hand motion acquired in STEP 1 and the position $\uparrow P\_mb\_act\_L$ and the attitude angle $\uparrow \theta\_mb\_act\_L$ of the left master hand 81L in the actual master hand motion acquired in STEP 2 according to above equations (32a) and (32b).

Next, in STEP 4-3, the main manipulation control unit 94 determines a target master hand translational acceleration ↑Acc_mh_aim_L and a target master hand angular acceleration ↑β_mh_aim_L which are respective target values of the translational acceleration and the angular acceleration of the master hand 81L, and a target slave hand translational acceleration ↑Acc_sh_aim and a target slave hand angular acceleration ↑β_sh_aim_L which are respective target values of the translational acceleration and the angular acceleration of the slave hand 21L, such that the hand reaction force deviation and the hand position/attitude deviation calculated as described above are converged to zero.

In this case, more specifically, the target master hand translational acceleration ↑Acc_mh_aim_L and the target slave hand translational acceleration ↑Accsh aim L are determined such that each of the hand reaction force translational force deviation ↑Efb and the hand position deviation ↑Eph is converged to zero. Further, the target master hand angular acceleration ↑β_mh_aim_L and the target slave hand angular acceleration ↑β_sb_aim_L are determined such that each of the hand reaction force moment deviation ↑Emh and the hand attitude deviation ↑Ethh is converged to zero.

A method of determining the target master hand translational acceleration ↑Acc_mh_aim_L and the target slave hand translational acceleration ↑Acc_sh_aim_L and a method of determining the target master hand angular acceleration ↑β_mh_aim_L and the target slave hand angular acceleration ↑β_sh_aim_L are basically similar to the method of determining the target upper-body support part translational acceleration ↑Acc_mb_aim and the target slave upper-body translational acceleration ↑Acc_sb_aim (alternatively, the method of determining the target upper-body support part angular acceleration ↑β_mb_aim and the target slave upper-body angular acceleration ↑β_sb_aim) in the processing (the processing of STEP 3) of the upper-body side bilateral control.

Hereinafter, when the description is given briefly, in the process of determining the target master hand translational acceleration ↑Acc_mh_aim_L and the target slave hand translational acceleration ↑Acc_sh_aim_L, following equations (33a), (34a), (36a), (37a), (40a), and (41a) are defined as relational expressions corresponding to above equations (3a), (4a), (6a), (7a), (10a), and (11a), respectively.

$$\uparrow F\_mh\_act\_L = -Kfmh * \uparrow P\_mh\_act\_L + \uparrow Cfmh$$

$$\dots \quad (33a)$$

$$\uparrow F\_sh\_act\_L = -Kfsh * \uparrow P\_sh\_act\_L + \uparrow Cfsh$$

$$\dots \quad (34a)$$

$$\uparrow uha = -Kfmh * \uparrow P\_mh\_act\_L$$

$$- Ratio\_fsh * Kfsh * \uparrow P\_sh\_act\_L$$

$$\dots \quad (36a)$$

$$\uparrow vha = \uparrow P\_mh\_act\_L - Ratio\_psh * \uparrow P\_sh\_act\_L$$

$$\dots \quad (37a)$$

$$\uparrow Efh\_dotdot\_aim$$

$$= -Kfhp * \uparrow Efh - Kfhv * \uparrow Efh\_dot$$

$$\dots \quad (40a)$$

$$\uparrow Eph\_dotdot\_aim$$

$$= -Kphp*\uparrow Eph - Kphv*\uparrow Eph\_dot$$

$$\dots \quad (41a)$$

Incidentally, similarly to the coefficient Kfmb in equation (3a) and the coefficient Kfsb in equation (4a), the coefficients Kfmh in equations (33a) and (36a) and the coefficients Kfsh in equations (34a) and (36a) are coefficients (scalar or diagonal matrix) of predetermined values representing rigidity, respectively, and ↑Cfmh in equation (33a) and ↑Cfsh in equation (34a) are constant vectors, respectively. Further, each of the coefficients Kfhp and Kfhv in equation (40a) and the coefficients Kphp and Kphv in equation (41a) are a gain (scalar or diagonal matrix) of a predetermined value.

Following equations (46a), (47a), (50a), and (51a) respectively corresponding to above equations (16a), (17a), (20a), and (21a) are obtained from these equations (33a), (34a), (36a), (37a), (40a), and (41a) and above equations (31a) and (32a).

$$\uparrow uha\_dotdot\_aim = -Kfhp*\uparrow Efh - Kfhv*\uparrow Efh\_dot$$

$$\dots \quad (46a)$$

$$\uparrow vha\_dotdot\_aim = -Kphp*\uparrow Eph - Kphv*\uparrow Eph\_dot$$

$$\dots \quad (47a)$$

$$\uparrow Acc\_mh\_aim\_L$$

$$= -(Rpsh/(Kfmh*Ratio\_psh + Ratio\_fsh*Kfsh))$$

$$*\uparrow uha\_dotdot\_aim$$

$$+ (Ratio\_fsh*Kfsh/(Kfmh*Ratio\_psh$$

$$+ Ratio\_fsh*Kfsh))*\uparrow vha\_dotdot\_aim$$

$$\dots \quad (50a)$$

$$\uparrow Acc\_sh\_aim$$

$$= -(1/(Kfmh*Ratio\_psh + Ratio\_fsh*Kfsh))$$

$$*\uparrow uha\_dotdot\_aim$$

$$-(Kfmh/(Kfmh*Ratio\_psh$$

$$+ Ratio\_fsh*Kfsh))*\uparrow vha\_dotdot\_aim$$

$$\dots \quad (51a)$$

Above equations (46a), (47a), (50a), and (51a) are equations for determining the target master hand translational acceleration ↑Acc_mh_aim_L and the target slave hand translational acceleration ↑Acc_sh_aim on the left side.

In this case, ↑uha_dotdot_aim is calculated from the hand reaction force translational force deviation ↑Efb obtained in STEP 4-1 and ↑Efh_dot obtained as the temporal change rate thereof according to equation (46a). Further, ↑vha_dotdot_aim is calculated from the hand position deviation ↑Eph obtained in STEP 4-2 and ↑Eph_dot obtained as the temporal change rate according to equation (47a).

Then, from the calculated values of ↑uha_dotdot_aim and ↑vha_dotdot_aim, the target master hand translational acceleration ↑Acc_mh_aim_L and the target slave hand translational acceleration ↑Acc_sh_aim_L on the left side are calculated according to equations (50a) and (51a). As a result, ↑Acc_mh_aim_L and ↑Acc_sh_aim_L are determined such that the hand reaction force translational force deviation ↑Efh and the hand position deviation ↑Eph are converged to zero.

Supplementally, following equations (52a) and (53a) are obtained from equations (31a) and (32a), the relational expressions obtained by differentiating both sides of equations (31a) and (32a), and equations (46a) and (47a), respectively.

$$\uparrow uha\_dotdot\_aim$$

$$= -Kfhp*\uparrow Efh - Kfhv*\uparrow Efh\_dot$$

$$= -Kfhp*(\uparrow F\_mh\_act\_L + Ratio\_fsh*\uparrow F\_sh\_act\_L)$$

$$-Kfhv*(\uparrow F\_mh\_dot\_act\_L + Ratio\_fsh*\uparrow F\_sh\_dot\_act)$$

$$... \quad (52a)$$

$$\uparrow vha\_dotdot\_aim$$

$$= -Kphp*\uparrow Eph - Kphv*\uparrow Eph\_dot$$

$$= -Kphp*(\uparrow P\_mh\_act\_L - Ratio\_psh*\uparrow P\_sh\_act\_L)$$

$$- Kphv*(\uparrow P\_mh\_dot\_act\_L - Ratio\_psh*\uparrow P\_sh\_dot\_act\_L)$$

$$= -Kphp*(\uparrow P\_mh\_act\_L - Ratio\_psh*\uparrow P\_sh\_act\_L)$$

$$- Kphv*(\uparrow V\_mh\_act\_L - Ratio\_psh*\uparrow V\_sh\_act\_L)$$

$$... \quad (53a)$$

Therefore, ↑uha_dotdot_aim can be calculated from each of the translational force ↑F_mh_act_L of the left actual master hand reaction force acquired in STEP 2 and the translational force ↑F_sh_act_L of the left actual slave hand reaction force acquired in STEP 1, and ↑F_mh_dot_act_L and ↑F_sh_dot_act obtained as the first-order differential values (temporal change rate) thereof according to equation (52a).

Further, ↑vha_dotdot_aim can be calculated from the position ↑P_mh_act_L and the translational speed ↑V_mh_act_L in the left master hand motion acquired in STEP 2 and the position ↑P_sh_act_L and the translational speed ↑V_sh_act_L in the left actual slave hand motion acquired in STEP 1 according to equation (53a). In this case, a process of calculating the hand translational force deviation ↑Efb and the hand position deviation ↑Eph is unnecessary in STEPS 4-1 and 4-2, respectively.

↑Acc_mh_aim_L and ↑Acc_sh_aim_L can also be calculated by a relational expression (a relational expression not including ↑uha_dotdot_aim and ↑vha_dotdot_aim) in which a set of equations (46a) and (47a) or a set of equations (52a) and (53a) and a set of equations (50a) and (51a) are integrated.

In the process of determining the target master hand angular acceleration ↑β_mh_aim_L and the target slave hand angular acceleration ↑β_sh_aim_L, following equations (33b), (34b), (36b), (37b), (40b), and (41b) are defined as relational expressions corresponding to above equations (3b), (4b), (6b), (7b), (10b), and (11b), respectively.

$$\uparrow M\_mh\_act\_L = -Kmmh*\uparrow \theta\_mh\_act\_L + \uparrow Cmmh$$

$$... \quad (33b)$$

$$\uparrow M\_sh\_act\_L = -Kmsh*\uparrow \theta\_sh\_act\_L + \uparrow Cmsh$$

$$... \quad (34b)$$

$$\uparrow uhb = -Kmmh*\uparrow\theta\_mh\_act\_L$$

$$- Ratio\_msh*Kmsh*\uparrow\theta\_sh\_act\_L$$

$$\dots \quad (36b)$$

$$\uparrow vhb = \uparrow\theta\_mh\_act\_L - Ratio\_thsh*\uparrow\theta\_sh\_act\_L$$

$$\dots \quad (37b)$$

$$\uparrow Emh\_dotdot\_aim$$

$$= -Kmhp*\uparrow Emh - Kmhv*\uparrow Emh\_dot$$

$$\dots \quad (40b)$$

$$\uparrow Ethh\_dotdot\_aim$$

$$= -Kthhp*\uparrow Ethh - Kthhv*\uparrow Ethh\_dot$$

$$\dots \quad (41b)$$

Incidentally, similarly to the coefficient Kmmb in equation (3b) and the coefficient Kmsb in equation (4b), the coefficient Kmmh in equations (33b) and (36b) and the coefficient Kmsh in equations (34b) and (36b) are coefficients (scalar or diagonal matrix) of predetermined values representing a rigidity, respectively, and ↑Cmmh in equation (33b) and ↑Cmsh in equation (34b) are constant vectors, respectively. Further, each of the coefficients Kmhp and Kmhv in equation (40b) and the coefficients Kthhp and Kthhv in equation (41b) is a gain (scalar or diagonal matrix) of a predetermined value.

Following equations (16b), (17b), (20b), and (21b) respectively corresponding to above equations (46b), (47b), (50b), and (51b) are obtained from these equations (33b), (34b), (36b), (37b), (40b), and (41b) and above equations (31b) and (32b).

$$\uparrow uhb\_dotdot\_aim = -Kmhp*\uparrow Emh - Kmhv*\uparrow Emh\_dot$$

$$\dots \quad (46b)$$

$$\uparrow vhb\_dotdot\_aim = -Kthhp*\uparrow Ethh - Kthhv*\uparrow Ethh\_dot$$

$$\dots \quad (47b)$$

$$\uparrow\beta\_mh\_aim\_L$$

$$= -(Ratio\_thsh/(Kmmh*Ratio\_thsh + Ratio\_msh*Kmsh))$$

$$*\uparrow uhb\_dotdot\_aim$$

$$+ (Ratio\_msh*Kmsh/(Kmmh*Ratio\_thsh$$

$$+ Ratio\_msh*Kmsh))*\uparrow vhb\_dotdot\_aim$$

$$\dots \quad (50b)$$

$$\uparrow\beta\_sh\_aim$$

$$= -(1/(Kmmh*Ratio\_thsh + Ratio\_msh*Kmsh))$$

$$*\uparrow uhb\_dotdot\_aim$$

$$- (Kmmh/(Kmmh*Ratio\_thsh + Ratio\_msh*Kthsh))$$

$$*\uparrow vhb\_dotdot\_aim$$

$$... \quad (51b)$$

Above equations (46b), (47b), (50b), and (51b) are equations for determining the target master hand angular acceleration $\uparrow\beta\_mh\_aim\_L$ and the target slave hand angular acceleration $\uparrow\beta\_sh\_aim$ on the left side.

In this case, $\uparrow uhb\_dotdot\_aim$ is calculated from the hand reaction force moment deviation $\uparrow Emh$ obtained in STEP 4-1 and $\uparrow Emh\_dot$ obtained as the temporal change rate thereof according to equation (46b). Further, $\uparrow vhb\_dotdot\_aim$ is calculated from the hand attitude deviation $\uparrow Ethh$ obtained in STEP 4-2 and $\uparrow Ethh\_dot$ obtained as the temporal change rate according to equation (47b).

Then, from the calculated values of $\uparrow uhb\_dotdot\_aim$ and $\uparrow vhb\_dotdot\_aim$, the target master hand angular acceleration $\uparrow\beta\_mh\_aim\_L$ and the target slave hand angular acceleration $\uparrow\beta\_sh\_aim$ on the left side are calculated according to equations (50b) and (51b). As a result, $\uparrow\beta\_mh\_aim\_L$ and $\uparrow\beta\_sh\_aim\_L$ are determined such that the hand reaction force moment deviation $\uparrow Emh$ and the hand attitude deviation $\uparrow Ethh$ are converged to zero.

Supplementally, following equations (52b) and (53b) are obtained from equations (31b) and (32b), the relational expressions obtained by differentiating both sides of equations (31b) and (32b), and equations (46b) and (47b), respectively.

$$\uparrow uhb\_dotdot\_aim$$

$$= -Kmhp*\uparrow Emh - Kmhv*\uparrow Emh\_dot$$

$$= -Kmhp*(\uparrow M\_mh\_act\_L + Ratio\_msh*\uparrow M\_sh\_act\_L)$$

$$- Kmhv*(\uparrow M\_mh\_dot\_act\_L + Ratio\_msh*\uparrow M\_sh\_dot\_act)$$

$$... \quad (52b)$$

$$\uparrow vhb\_dotdot\_aim$$

$$= -Kthhp*\uparrow Ethh - Kthhv*\uparrow Ethh\_dot$$

$$= -Kthhp*(\uparrow\theta\_mh\_act\_L - Ratio\_thsh*\uparrow\theta\_sh\_act\_L)$$

$$- Kthhv*(\uparrow\theta\_mh\_dot\_act\_L - Ratio\_thsh*\uparrow\theta\_sh\_dot\_act\_L)$$

$$= -Kthhp*(\uparrow\theta\_mh\_act\_L - Ratio\_thsh*\uparrow\theta\_sh\_act\_L)$$

$$- Kthhv*(\uparrow\omega\_mh\_act\_L - Ratio\_thsh*\uparrow\omega\_sh\_act\_L)$$

$$... \quad (53b)$$

Therefore, $\uparrow uhb\_dotdot\_aim$ can be calculated from each of the moment $\uparrow M\_mh\_act\_L$ of the left actual master hand reaction force acquired in STEP 2 and the moment $\uparrow M\_sh\_act\_L$ of the left actual slave hand reaction force acquired in STEP 1, and $\uparrow M\_mh\_dot\_act\_L$ and $\uparrow M\_sb\_dot\_act$ obtained as the first-order differential values (temporal change rates) thereof according to equation (52b).

Further, $\uparrow vhb\_dotdot\_aim$ can be calculated from the attitude angle $\uparrow\theta\_mh\_act\_L$ and the angular speed $\uparrow\omega\_mh\_act\_L$ in the left master hand motion acquired in STEP 2 and the attitude angle $\uparrow\theta\_sh\_act\_L$ and the angular speed $\uparrow\omega\_sh\_act\_L$ in the left actual slave hand motion acquired in STEP 1 according to equation (53b). In this case, a process of calculating the hand moment force deviation $\uparrow Emh$ and the hand attitude deviation $\uparrow Ethh$ is unnecessary

in STEPS 4-1 and 4-2, respectively.

$\uparrow\beta\_mh\_aim\_L$ and $\uparrow\beta\_sh\_aim\_L$ can also be calculated by a relational expression (a relational expression not including $\uparrow uhb\_dotdot\_aim$ and $\uparrow vhb\_dotdot\_aim$) in which a set of equations (46b) and (47b) or a set of equations (52b) and (53b) and a set of equations (50b) and (51b) are integrated.

In this embodiment, the processing in STEP 4-3 is executed as described above.

Next, in STEP 4-4, the main manipulation control unit 94 individually integrates the target master hand translational acceleration $\uparrow Acc\_mh\_aim\_L$, the target master hand angular acceleration $\uparrow\beta\_mh\_aim\_L$, the target slave hand translational acceleration $\uparrow Acc\_sh\_aim$, and the target slave hand angular acceleration $\uparrow\beta\_sh\_aim$ determined as described above, thereby determining a target master hand translational speed $\uparrow V\_mb\_aim\_L$ which is the target translational speed of the left master hand 81L, a target master hand angular speed $\uparrow\omega\_mh\_aim\_L$ which is the target angular speed of the master hand 81L, a target slave hand translational speed $\uparrow V\_sh\_aim\_L$ which is the target translational speed of the left slave hand 21L, and a target slave hand angular speed $\uparrow\omega\_sh\_aim\_L$ which is the target angular speed of the slave hand 21L.

The processing of the hand side bilateral control in STEP 4 for the set of the master hand 81L and the slave hand 21L on the left side is executed as described above.

The processing of the hand side bilateral control in STEP 4 is performed on the set of the right master hand 81R and the right slave hand 21R in the same manner as described above. In this case, the processing related to the set of the right master hand 81R and the right slave hand 21R is described by replacing "left side" and "L" in the above description related to the set of the left master hand 81L and the left slave hand 21L with "right side" and "R", respectively.

The processing of the hand side bilateral control in STEP 4 is executed as described above. As a result, the target master hand translational speeds $\uparrow V\_mh\_aim\_L$ and $\uparrow V\_mh\_aim\_R$ and the target master hand angular speeds $\uparrow\omega\_mh\_aim\_L$ and $\uparrow\omega\_mh\_aim\_R$ as components of the target motions (hereinafter, referred to as a target master hand motion) of the left and right master hands 81L and 81R are determined, and the target slave hand translational speeds $\uparrow Vsh\_aim\_L$ and $\uparrow Vsh\_aim\_L$ and the target slave hand angular speeds $\uparrow\omega\_sh\_aim\_L$ and $\uparrow\omega\_sh\_aim\_R$ as components of the target motions (hereinafter, referred to as a target slave hand motion) of the left and right slave hands 21L and 21R are determined.

Returning to FIG. 6, next, in STEP 5, the main manipulation control unit 94 outputs a target master motion which is the target motion of the master device 51. The target master motion includes the target upper-body support part motion ($\uparrow V\_mb\_aim$, $\uparrow\omega mb\_aim$) determined in STEP 3 and the target master hand motion ($\uparrow V\_mh\_aim\_L$, $\uparrow\omega\_mh\_aim\_L$, $\uparrow V\_mh\_aim\_R$, $\uparrow\omega\_mh\_aim\_R$) determined in STEP 4. Then, as illustrated in FIG. 5, the target upper-body support part motion is given to the master movement control unit 92, and the target master hand motion is given to the master manipulator control unit 93.

In STEP 6, the main manipulation control unit 94 outputs a target slave motion which is the target motion of the slave device 1. The target slave motion includes the target slave upper-body motion ($\uparrow V\_sb\_aim$, $\uparrow\omega sb\_aim$) determined in STEP 3 and the target slave hand motion ($\uparrow V\_sh\_aim\_L$, $\uparrow\omega\_sh\_aim\_L$, $\uparrow V\_sh\_aim\_R$, $\uparrow\omega\_sh\_aim\_R$) determined in STEP 4. Then, as illustrated in FIG. 2, the target slave upper-body motion is given to the slave movement control unit 42, and the target slave hand motion is given to the slave manipulator control unit 43.

The processing of the main manipulation control unit 94 has been described above.

[Control processing of slave movement control unit]

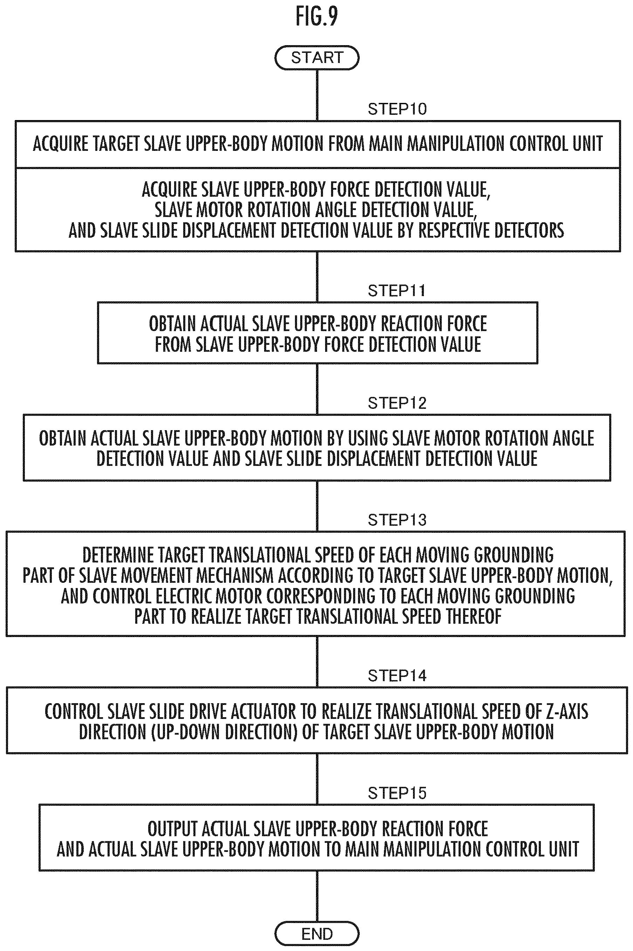

Next, control processing of the slave movement control unit 42 of the slave control device 41 will be described with reference to FIG. 9. The slave movement control unit 42 sequentially executes the processing illustrated in the flowchart of FIG. 9 at a predetermined control processing cycle. In STEP 10, the slave movement control unit 42 acquires (receives) the target slave upper-body motion ($\uparrow Vsb\_aim$, $\uparrow\omega sb\_aim$) from the main manipulation control unit 94 via the communication devices 40 and 90.

The slave movement control unit 42 acquires a slave upper-body force detection value indicated by the output of the slave upper-body force detector 33, a slave motor rotation angle detection value which is the detection value of the rotation angle of each of the electric motors 5a and 5b indicated by the output of the motor rotation detector 27 for each slave movement drive mechanism 5, and a slave slide displacement detection value which is the detection value of the vertical displacement of the slide member 32 indicated by the output of the slave slide displacement detector 29. Incidentally, the slave upper-body force detection value is the detection value of the translational force and the moment as viewed in a sensor coordinate system set for the slave upper-body force detector 33.

Next, in STEP 11, the slave movement control unit 42 obtains an actual slave upper-body reaction force from the slave upper-body force detection value acquired in STEP 10. Specifically, the slave movement control unit 42 obtains the actual slave upper-body reaction force by converting the slave upper-body force detection value in the sensor coordinate system of the slave upper-body force detector 33 into a set of the translational force and the moment as viewed in the slave upper-body coordinate system Cs.

In this case, the slave upper-body coordinate system Cs is a local coordinate system set for the slave upper body, and is, for example, the triaxial orthogonal coordinate system Cs in which the X-axis direction, the Y-axis direction, and the Z-axis direction are set as illustrated in FIG. 1. Incidentally, the origin of the slave upper-body coordinate system Cs is set to, for example, the slave reference point Qs (the representative point of the slave upper body) (see FIG. 11A).

Then, the moment $\uparrow M\_sb\_act$ of the actual slave upper-body reaction force obtained in STEP 11 is a moment around the origin (slave reference point Qs) of the slave upper-body coordinate system Cs. Hereinafter, the reference sign of the translational force of the actual slave upper-body reaction force as viewed in the slave upper-body coordinate system Cs obtained in STEP 11 is denoted as $\uparrow F\_sb\_local\_act$, and the reference sign of the moment is denoted as $\uparrow M\_sb\_local\_act$.

Next, in STEP 12, the slave movement control unit 42 obtains an actual slave upper-body motion by using the slave motor rotation angle detection value and the slave slide displacement detection value acquired in STEP 10. Specifically, for each slave movement drive mechanism 5, the slave movement control unit 42 first performs differential processing of obtaining a temporal change rate of the slave motor rotation angle detection value of each of the electric motors 5a and 5b to obtain an actual motor rotation speed as the observation value of the actual rotation speed (angular speed) of the rotation shaft of each of the electric motors 5a and 5b. In this case, in order to suppress the influence of the high frequency noise component of the slave motor rotation angle detection value, it is preferable to use pseudo differentiation (in other words, incomplete differentiation) processing as the differential processing.

In the following description, $\omega\_sw\_mota\_act(n)$ and $\omega\_sw\_motb\_act(n)$ (n = 1, 2, 3, and 4) are respectively used as reference signs representing the actual motor rotation speeds of the electric motors 5a and 5b of the slave movement drive mechanism 5 corresponding to each of four moving grounding parts 4(n) (n = 1, 2, 3, and 4) of the slave device 1.

For each slave moving grounding part 4(n), the slave movement control unit 42 calculates a translational speed $V\_sw\_local\_x\_act(n)$ of the moving grounding part 4(n) in the X-axis direction (front-rear direction) of the slave upper-body coordinate system Cs and a translational speed $V\_sw\_local\_y\_act(n)$ of the moving grounding part 4(n) in the Y-axis direction (left-right direction) of the slave upper-body coordinate system Cs from the actual motor rotation speeds $\omega\_sw\_mota\_act(n)$ and $\omega\_sw\_motb\_act(n)$ of respective electric motors 5a and 5b by following equations (61a) and (61b).

$$V\_sw\_local\_x\_act(n)$$
$$= Cswx*(\omega\_sw\_mota\_act(n) + \omega\_sw\_motb\_act(n))$$
$$\dots \quad (61a)$$

$$V\_sw\_loxal\_y\_act(n)$$
$$= Cswy*(\omega\_sw\_mota\_act(n)-\omega\_sw\_motb\_act(n))$$
$$\dots \quad (61b)$$

Incidentally, each of the coefficients Cswx and Cswy is a coefficient of a predetermined value defined depending on the structure of the slave movement drive mechanism 5 or the like.

Then, as expressed by following equations (62a) and (62b), the slave movement control unit 42 obtains an average value of the translational speeds $V\_sw\_local\_x\_act(1)$ to $V\_sw\_local\_x\_act(4)$ of the four moving grounding parts 4(1) to 4(4) in the X-axis direction as the translational speed $V\_sb\_local\_x\_act$ of the slave upper body in the X-axis direction of the slave upper-body coordinate system Cs, and obtains an average value of the translational speeds $V\_sw\_local\_y\_act(1)$ to $V\_sw\_local\_y\_act(4)$ of the four moving grounding parts 4(1) to 4(4) in the Y-axis direction as the translational speed $V\_sb\_local\_y\_act$ of the slave upper body in the Y-axis direction of the slave upper-body coordinate system Cs.

$$V\_sb\_local\_x\_act$$
$$= (V\_sw\_local\_x\_act(1) + V\_sw\_local\_x\_act(2)$$
$$+ V\_sw\_local\_x\_act(3) + V\_sw\_local\_x\_act(4))/4$$
$$\dots \quad (62a)$$

$$V\_sb\_local\_y\_act$$

$$= (V\_sw\_local\_y\_act(1) + V\_sw\_local\_y\_act(2)$$

$$+ V\_sw\_local\_y\_act(3) + V\_sw\_local\_y\_act(4))/4$$

$$... \quad (62b)$$

Further, the slave movement control unit 42 calculates an angular speed ω_sb local_z_act of the slave base 3 in the axis circumferential direction of the Z-axis direction (up-down direction) of the slave upper-body coordinate system Cs by following equation (63).

$$\omega\_sb\_local\_z\_act$$

$$= (V\_sw\_local\_x\_act(1) - V\_sw\_local\_x\_act(4))$$

$$/(2*(Lswy(1) + Lswy(4)))$$

$$+ (V\_sw\_local\_x\_act(2) - V\_sw\_local\_x\_act(3))$$

$$/(2*(Lswy(2) + Lswy(3)))$$

$$... \quad (63)$$

As illustrated in FIG. 11A, Lswy(1), Lswy(2), Lswy(3), and Lswy(4) in above equation (63) are distances in the Y-axis direction (left-right direction) between the slave reference point Qs and respective grounding portions of the moving grounding part 4(1) at the left front portion, the moving grounding part 4(2) at the left rear portion, the moving grounding part 4(3) at the right rear portion, and the moving grounding part 4(4) at the right front portion of the slave base 3. Incidentally, in this case, positive and negative polarities of Lswy(1), Lswy(2), Lswy(3), and Lswy(4) are defined as Lswy(1) > 0, Lswy(2) > 0, Lswy(3) < 0, and Lswy(4) < 0.

Here, in this embodiment, the Z-axis direction among the three coordinate axis directions (the X-axis direction, the Y-axis direction, and the Z-axis direction) of the slave-side global coordinate system (triaxial orthogonal coordinate system) is set to the same direction (up-down direction) as the Z-axis direction of the slave upper-body coordinate system Cs. Therefore, an angular speed ω_sb_local_z_act calculated by above equation (63) matches an angular speed ω_sb_z_act of a Z-axis circumferential direction in the angular speed ↑ω_sb_act of the actual slave upper-body motion as viewed in the slave-side global coordinate system. Therefore, the angular speed ωsb_z_act of the Z-axis circumferential direction in the angular speed ↑ω_sb_act of the actual slave upper-body motion is obtained by equation (63).

Then, the slave movement control unit 42 further calculates an attitude angle θ_sb_z_act of the Z-axis circumferential direction in the attitude angle ↑θ_sb_act of the actual slave upper-body motion as viewed in the slave-side global coordinate system by integrating the angular speed ω_sb_z_act obtained as described above.

Incidentally, in this embodiment, the calculation (in other words, the calculation of an angular speed around an axis in a direction (lateral direction) orthogonal to the up-down direction) of the angular speed of an X-axis circumferential direction and the angular speed of a Y-axis circumferential direction of the slave-side global coordinate system in the angular speed ↑ω_sb_act of the actual slave upper-body motion is omitted. The same applies to the attitude angle ↑θ_sb_act of the actual slave upper-body motion.

The slave movement control unit 42 rotationally converts a vector (a two-dimensional vector on an XY coordinate plane of the slave upper-body coordinate system Cs) having two components V_sb_local_x_act and V_sb_local_y_act obtained by above equations (62a) and (62b) by an angle, which matches the attitude angle θ_sb_z_act (the component of the Z-axis circumferential direction of ↑θ_sb _act) of the Z-axis circumferential direction obtained as described above, in the Z-axis circumferential direction, thereby obtaining components (a translational speed V_sb_x_act of X-axis direction and a translational speed V_sb_y_act of Y-axis direction in the slave-side global coordinate system) other than the Z-axis direction in the translational speed ↑V_sb_act of the actual slave upper-body motion as viewed in the slave-side global coordinate system.

Then, a position P_sb_x_act in the X-axis direction and a position P_sb_y_act in the Y-axis direction in the position ↑P_sb_act of the actual slave upper-body motion are obtained by integrating these translational speeds Vsb_x_ac and V_sb_y_act.

The slave movement control unit 42 obtains a position P_sb_z_act of the Z-axis direction in the position ↑P_sb_act of the actual slave upper-body motion from the slave slide displacement detection value acquired in STEP 10, and further performs differential processing of obtaining the temporal change rate of P_sb_z_act to obtain a translational speed V_sb_z_act of the Z-axis direction in the translational speed ↑V_sb_act of the actual slave upper-body motion.

In this embodiment, the actual slave upper-body motion (the position ↑P_sb_act, the translational speed ↑V_sb_act, the attitude angle ↑θ_sb_act, and the angular speed ↑ω_sb_act) is obtained by the processing in STEP 12 described above. Supplementally, the position ↑P_sb_act and the attitude angle ↑θ_sb_act in the actual slave upper-body motion may be corrected as needed on the basis of environment recognition information such as landmarks around the slave device 1 in order to prevent accumulation of integration errors.

Next, in STEP 13, the slave movement control unit 42 determines the target translational speed of each moving grounding part 4 of the slave movement mechanism 2 according to the target slave upper-body motion, and controls the electric motors 5a and 5b corresponding to each moving grounding part 4 so as to realize the target translational speed thereof. Specifically, the slave movement control unit 42 rotationally converts a vector (a two-dimensional vector on the XY coordinate plane of the slave-side global coordinate system) having a translational speed V_sb_x_aim of the X-axis direction and a translational speed V_sb_y_aim of the Y-axis direction in the translational speed ↑V_sb_aim of the target slave upper-body motion acquired in STEP 10 by an angle (=-θ_sb_z_aim), which is (-1) times the component θ_sb_z_aim of the Z-axis circumferential direction of the attitude angle ↑9_sb_aim of the target slave upper-body motion acquired in STEP 10, in the Z-axis circumferential direction, thereby obtaining a target translational speed V_sb_local_x_aim of the slave upper body in the X-axis direction of the slave upper-body coordinate system Cs and a target translational speed V_sb_local_y_aim of the slave upper body in the Y-axis direction of the slave upper-body coordinate system Cs.

Then, by following equations (64a) and (64b), the slave movement control unit 42 determines a target translational speed V_sw_local_x_aim(n) of the X-axis direction and a target translational speed V_sw_local_y_aim(n) of the Y-axis direction of each of the moving grounding parts 4(n) (n = 1, 2, 3, and 4) as viewed in the slave upper-body coordinate system Cs, so as to realize the target translational speeds V_sb_local_x_aim and V_sb_local_y_aim in the slave upper-body coordinate system Cs and a component ω_sb_z_aim of the Z-axis circumferential direction in the angular speed ↑ω_sb_aim of the target slave upper-body motion as viewed in the slave-side global coordinate system.

$$V\_sw\_local\_x\_aim(n)$$
$$= V\_sb\_local\_x\_aim - Lswy(n)*\omega\_sb\_z\_aim$$
$$\dots \quad (64a)$$

$$V\_sw\_local\_y\_aim(n)$$
$$= V\_sb\_local\_y\_aim + Lswx(n)*\omega\_sb\_z\_aim$$
$$\dots \quad (64b)$$

The slave movement control unit 42 calculates, for each moving grounding part 4(n), target motor rotation speeds ω_sw_mota_aim(n) and ω_sw_motb_aim(n), which are target values of respective rotation speeds of the electric motors 5a and 5b for realizing the target translational speeds V_sw_local_x_aim(n) and V_sw_local_y_aim(n), by following equations (61a) and (61b) obtained from above equations (65a) and (65b).

$$\omega\_sw\_mota\_aim(n)$$
$$= (Cswy*V\_sw\_local\_x\_aim(n) + Cswx*V\_sw\_local\_y\_aim(n))$$
$$/(2*Cswx*Cswy)$$
$$\dots \quad (65a)$$

$$\omega\_sw\_motb\_aim(n)$$

$$= (Cswy*V\_sw\_local\_x\_aim(n) - Cswx*V\_sw\_local\_y\_aim(n))$$

$$/(2*Cswx*Cswy)$$

$$... \quad (65b)$$

Next, the slave movement control unit 42 determines, for each moving grounding part 4(n), target motor driving forces Tq_sw_mota_aim(n) and Tq_sw_motb_aim(n), which are target values of the driving forces (rotational driving forces) of each of the electric motors 5a and 5b for causing the actual motor rotational speeds ω_sw_mota_act(n) and ω_sw_motb_act(n) of each of the electric motors 5a and 5b to follow the target motor rotational speeds ω_sw_mota_aim(n) and ω_sw_motb_aim(n), by following equations (66a) and (66b). These target motor driving forces Tq_sw_mota_aim(n) and Tq_sw_motb_aim(n) (n = 1, 2, 3, and 4) are the target slave movement driving forces illustrated in FIG. 2.

$$Tq\_sw\_mota\_aim(n)$$

$$= Kv\_sw\_mota*(\omega\_sw\_mota\_aim(n) - \omega\_sw\_mota\_act(n))$$

$$... \quad (66a)$$

$$Tq\_sw\_motb\_aim(n)$$

$$= Kv\_sw\_motb*(\omega\_sw\_motb\_aim(n) - \omega\_sw\_motb\_act(n))$$

$$... \quad (66b)$$

Incidentally, Kv_sw_mota and Kv_sw_motb are gains of predetermined values. Supplementally, equations (66a) and (66b) are equations for determining Tq_sw_mota_aim(n) and Tq_sw_motb_aim(n) by a proportional law as an example of a feedback control law. However, Tq_sw_mota_aim(n) and Tq_sw_motb_aim(n) may be determined by another feedback control law (for example, proportional/differential law and the like).

Next, the slave movement control unit 42 operates the electric motors 5a and 5b corresponding to each moving grounding part 4(n) to output the target motor driving forces Tq_sw_mota_aim(n) and Tq_sw_motb_aim(n) determined as described above, respectively. As a result, the movement control of the slave movement mechanism 2 is performed such that the translational speed V_sb_x_aim of the X-axis direction and the translational speed V_sb_y_aim of the Y-axis direction in the translational speed ↑V_sb_aim of the target slave upper-body motion are realized.

In this embodiment, by the processing of STEP 13 described above, as the target slave movement driving force of the slave movement mechanism 2, the target motor driving forces Tq_sw_mota_aim(n) and Tq_sw_motb_aim(n) of the electric motors 5a and 5b corresponding to each moving grounding part 4(n) are determined so as to be able to realize a motion other than the translational speed of the Z-axis direction (up-down direction) in the target slave upper-body motion. Then, the electric motors 5a and 5b corresponding to each moving grounding part 4(n) are controlled so as to generate the target motor driving forces Tq_sw_mota_aim(n) and Tq_sw_motb_aim(n). As a result, the movement control of the slave movement mechanism 2 is performed so as to realize the motion other than the translational speed of the Z-axis direction (up-down direction) in the target slave upper-body motion.

Next, in STEP 14, the slave movement control unit 42 controls the slave slide drive actuator 36 so as to realize a translational speed V_sb_z_aim of the Z-axis direction (up-down direction) in the translational speed ↑V_sb_aim of the target slave upper-body motion. Specifically, the slave movement control unit 42 determines the target driving force of the slide drive actuator 36 according to a feedback control law such as a proportional law or a proportional/differential law according to a deviation between the translational speed V_sb_z_aim of the Z-axis direction in the translational speed ↑V_sb_aim of the target slave motion acquired in STEP 10 and the translational speed Vsb_z_act of the Z-axis direction in the translational speed ↑V_sb_act of the actual slave upper-body motion obtained in STEP 12. As a result, the target driving force of the slide drive actuator 36 is determined so as to bring the deviation close to zero. Then, the slave movement control unit 42 controls the slide drive actuator 36 so as to generate the target driving force.

Next, in STEP 15, the slave movement control unit 42 outputs (transmits) the actual slave upper-body reaction force (↑F_sb_local_act, ↑M_sb_local_act) obtained in STEP 11 and the actual slave upper-body motion (↑V_sb_act, ↑P_sb_act, ↑ω_sb_act, ↑θ_sb_act) obtained in STEP 12 to the main manipulation control unit 94. The processing of the slave movement control unit 42 is executed as described above.

Supplementally, the actual slave upper-body reaction force ($\uparrow$F_sb_local_act, $\uparrow$M_sb_local_act) output to the main manipulation control unit 94 in STEP 15 is the actual slave upper-body reaction force as viewed in the slave upper-body coordinate system Cs, and thus, the main manipulation control unit 94 converts the actual slave upper-body reaction force input from the slave movement control unit 42 into the actual slave upper-body reaction force ($\uparrow$F_sb_act, $\uparrow$M_sb_act) as viewed in the slave-side global coordinate system by using the position $\uparrow$P_sb_act and the attitude angle $\uparrow\theta$_sb_act of the actual slave upper-body motion input from the slave movement control unit 42 together with the actual slave upper-body reaction force. Then, the above-described processing is executed using the converted actual slave upper-body reaction force.

However, the slave movement control unit 42 may convert the actual slave upper-body reaction force as viewed in the slave upper-body coordinate system Cs into the actual slave upper-body reaction force as viewed in the slave-side global coordinate system. In this case, the main manipulation control unit 94 does not need to perform the conversion processing.

[Control processing of master movement control unit]

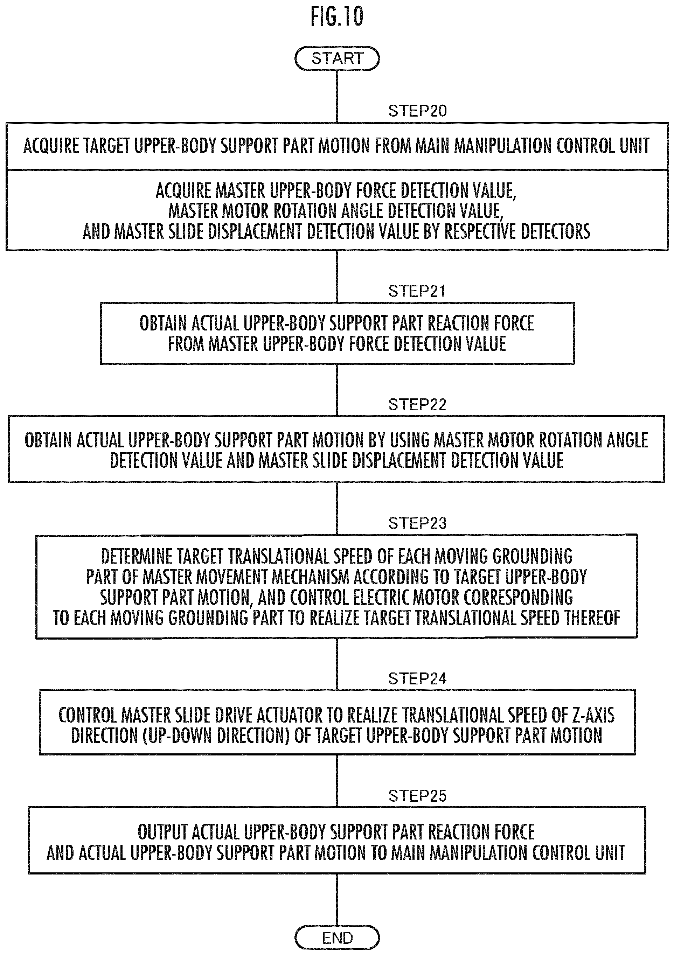

Next, control processing of the master movement control unit 92 of the master control device 91 will be described with reference to FIG. 10. Incidentally, the control processing of the master movement control unit 92 is similar to the control processing of the slave movement control unit 42, and thus detailed description of some processes will be omitted.

The master movement control unit 92 sequentially executes the processing illustrated in the flowchart of FIG. 10 at a predetermined control processing cycle. In STEP 20, the master movement control unit 92 acquires target upper-body support part motions ($\uparrow$Vmb_aim, $\uparrow\omega$mb_aim) from the main manipulation control unit 94, and acquires a master upper-body force detection value indicated by the output of the master upper-body force detector 64, a master motor rotation angle detection value which is the detection value of the rotation angle of each of the electric motors 55a and 55b indicated by the output of the motor rotation detector 87 for each master movement drive mechanism 55, and a master slide displacement detection value which is the detection value of the vertical displacement of the slide member 62 indicated by the output of the master slide displacement detector 89. Incidentally, the master upper-body force detection value is the detection value of the translational force and the moment as viewed in a sensor coordinate system set for the master upper-body force detector 64.

Next, in STEP 21, the master movement control unit 92 obtains an actual upper-body support part reaction force from the master upper-body force detection value acquired in STEP 20. Specifically, the master movement control unit 92 obtains the actual upper-body support part reaction force by converting the master upper-body force detection value in the sensor coordinate system of the master upper-body force detector 64 into a set of the translational force and the moment as viewed in the master upper-body coordinate system Cm.

In this case, the master upper-body coordinate system Cm is a local coordinate system set for the upper-body support part 65, and is, for example, the triaxial orthogonal coordinate system Cm in which the X-axis direction, the Y-axis direction, and the Z-axis direction are set as illustrated in FIG. 3 or 4. Incidentally, the origin of the master upper-body coordinate system Cm is set to, for example, the master reference point Qm (the representative point of the upper-body support part 65) (see FIG. 11B). Then, the moment of the actual upper-body support part reaction force obtained in STEP 21 is a moment around the origin (master reference point Qm) of the master upper-body coordinate system Cm. Hereinafter, the reference sign of the translational force of the actual upper-body support part reaction force as viewed in the master upper-body coordinate system Cm obtained in STEP 21 is denoted as $\uparrow$F_mb_local_act, and the reference sign of the moment is denoted as $\uparrow$M_mb_local_act.

Next, in STEP 22, the master movement control unit 92 obtains an actual upper-body support part motion by using the master motor rotation angle detection value and the master slide displacement detection value acquired in STEP 20. The processing in STEP 22 is performed similarly to the processing in STEP 12 related to the slave movement control unit 42.

In this case, "slave", "slave upper body", "slave device 1", "slave movement control unit 42", "base 3", "moving grounding part 4", "movement drive mechanism 5", "electric motors 5a and 5b", "FIG. 11A", and "STEP 10 " in the above description related to the processing of STEP 12 are replaced with "master", "upper-body support part" (or "upper-body support part 65"), "master device 51", "master movement control unit 92", "base 53", "moving grounding part 54", "movement drive mechanism 55", "electric motors 55a and 55b", "FIG. 11B", and "STEP 20", respectively, and "s" of the reference sign is replaced with "m", whereby the description of STEP 22 is made.

In this embodiment, the actual upper-body support part motion (the position $\uparrow$P_mb_act, the translational speed $\uparrow$V_mb_act, the attitude angle $\uparrow\theta$_mb_act, and the angular speed $\uparrow\omega$_mb_act) is obtained by the processing in STEP 22. Incidentally, in this embodiment, the calculation (in other words, the calculation of an angular speed around an axis in a direction (lateral direction) orthogonal to the up-down direction) of the angular speed of the X-axis circumferential direction and the angular speed of the Y-axis circumferential direction of the master-side global coordinate system in

the angular speed $\uparrow\omega\_sb\_act$ of the actual upper-body support part motion is omitted. The same applies to the attitude angle $\uparrow\theta\_mb\_act$ of the actual upper-body support part motion.

Supplementally, the position $\uparrow P\_mb\_act$ and the attitude angle $\uparrow\theta\_mb\_act$ in the actual upper-body support part motion may be corrected as needed on the basis of environment recognition information such as landmarks around the master device 51 in order to prevent accumulation of integration errors.

Next, in STEP 23, the master movement control unit 92 determines the target translational speed of each moving grounding part 54 of the master movement mechanism 52 according to the target upper-body support part motion, and controls the electric motors 55a and 55b corresponding to each moving grounding part 54 so as to realize the target translational speed thereof. The processing in STEP 23 is performed similarly to the processing in STEP 13 related to the slave movement control unit 42. In this case, the names of "slave" and the like in the above description related to the processing of STEP 13 are replaced similarly to the case of STEP 22, and "s" in the reference sign is replaced with "m", whereby the description of STEP 23 is made.

In this embodiment, by the processing in STEP 23, as the target master movement driving force of the master movement mechanism 52, the target motor driving forces $Tq\_mw\_mota\_aim(n)$ and $Tq\_mw\_motb\_aim(n)$ of the electric motors 55a and 55b corresponding to each moving grounding part 54(n) are determined so as to be able to realize a motion other than the translational speed of the Z-axis direction (up-down direction) in the target upper-body support part motion. Then, the electric motors 55a and 55b corresponding to each moving grounding parts 54(n) are controlled so as to generate the target motor driving forces $Tq\_mw\_mota\_aim(n)$ and $Tq\_mw\_motb\_aim(n)$. As a result, the movement control of the master movement mechanism 52 is performed so as to realize the motion other than the translational speed of the Z-axis direction (up-down direction) in the target upper-body support part motion.

Next, in STEP 24, the master movement control unit 92 controls the master slide drive actuator 66 so as to realize a translational speed $V\_mb\_z\_aim$ of the Z-axis direction (up-down direction) in the translational speed $\uparrow V\_mb\_aim$ of the target upper-body support part motion. Specifically, similarly to the processing in STEP 14 related to the slave movement control unit 42, the master movement control unit 92 determines the target driving force of the slide drive actuator 66 so as to bring the deviation close to zero according to a deviation between the component $V\_mb\_z\_aim$ in the Z-axis direction of the target upper-body support part translational speed $\uparrow V\_mb\_aim$ and a translational speed $Vmb\_z\_act$ in the Z-axis direction of the translational speed $\uparrow V\_mb\_act$ of the actual upper-body support part motion obtained in STEP 22. Then, the master movement control unit 92 controls the slide drive actuator 66 so as to generate the target driving force.

Next, in STEP 25, the master movement control unit 92 outputs the actual upper-body support part reaction force ($\uparrow F\_mb\_local\_act$, $\uparrow M\_mb\_local\_act$) obtained in STEP 21 and the actual upper-body support part motion ($\uparrow V\_mb\_act$, $\uparrow P\_mb\_act$, $\uparrow\omega\_mb\_act$, $\uparrow\theta\_mb\_act$) obtained in STEP 22 to the main manipulation control unit 94. The processing of the master movement control unit 92 is executed as described above.

Supplementally, the actual upper-body support part reaction force ($\uparrow F\_mb\_local\_act$, $\uparrow M\_mb\_local\_act$) output to the main manipulation control unit 94 in STEP 25 is the actual upper-body support part reaction force as viewed in the master upper-body coordinate system Cm, and thus the main manipulation control unit 94 converts the actual upper-body support part reaction force input from the master movement control unit 92 into the actual upper-body support part reaction force ($\uparrow F\_mb\_act$, $\uparrow M\_mb\_act$) as viewed in the master-side global coordinate system by using the position $\uparrow P\_mb\_act$ and the attitude angle $\uparrow\theta\_mb\_act$ of the actual upper-body support part motion input from the master movement control unit 92 together with the actual upper-body support part reaction force. Then, the above-described processing is executed using the converted actual upper-body support part reaction force.

However, the master movement control unit 92 may convert the actual upper-body support part reaction force as viewed in the master upper-body coordinate system Cm into the actual upper-body support part reaction force as viewed in the master-side global coordinate system. In this case, the main manipulation control unit 94 does not need to perform the conversion processing.

[Control processing of slave manipulator control unit]

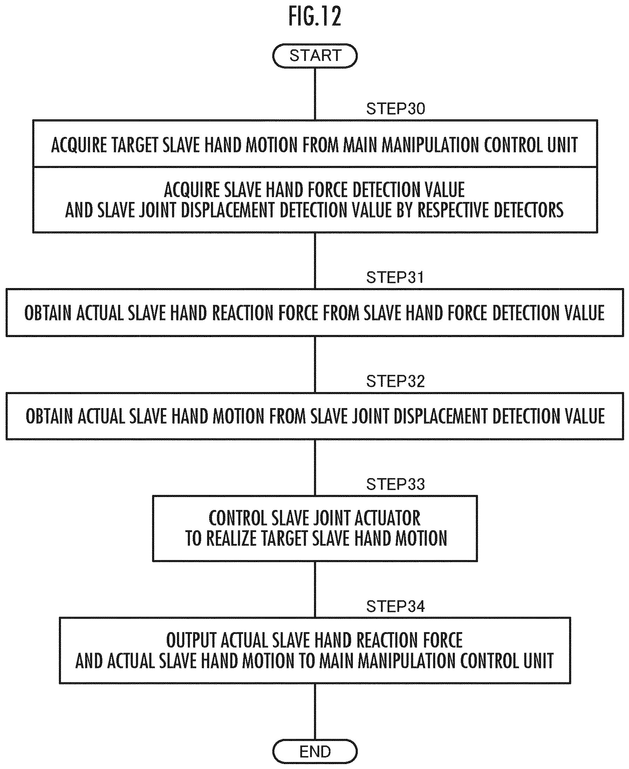

Next, control processing of the slave manipulator control unit 43 will be described with reference to FIG. 12. The slave manipulator control unit 43 sequentially executes the processing illustrated in the flowchart of FIG. 12 at a predetermined control processing cycle. In STEP 30, the slave manipulator control unit 43 acquires the target slave hand motions ($\uparrow Vsh\_aim\_L$, $\uparrow\omega sh\_aim\_L$, $\uparrow Vsh\_aim\_R$, $\uparrow\omega sh\_aim\_R$) of the left and right slave hands 21L and 21R from the main manipulation control unit 94, and acquires the slave hand force detection values indicated by the outputs of the left and right slave hand force detectors 22L and 22R and the slave joint displacement detection values indicated by the outputs of the joint displacement detectors 28 of the slave manipulator 10. Incidentally, the slave hand force detection value is the detection value of the translational force and the moment as viewed in a sensor coordinate system set for each slave hand force detector 22.

Next, in STEP 31, the slave manipulator control unit 43 obtains left and right actual slave hand reaction forces from the left and right slave hand force detection values acquired in STEP 30. Specifically, the slave manipulator control unit 43 obtains the actual slave upper-body reaction force as viewed in the slave upper-body coordinate system Cs by converting the slave hand force detection value in the sensor coordinate system of each slave hand force detector 22 into a set of the translational force and the moment as viewed in the slave upper-body coordinate system Cs using the slave joint displacement detection value (the joint displacement detection value of each joint of the slave manipulator 10) acquired in STEP 30.

Incidentally, each moment of the left and right actual slave hand reaction forces obtained in STEP 31 is a moment around the origin (slave reference point Qs) of the slave upper-body coordinate system Cs.

Hereinafter, the reference signs of the translational force of the actual slave hand reaction force as viewed in the slave upper-body coordinate system Cs obtained in STEP 31 are denoted as ↑F_sh_local_act_L and ↑F_sh_local_act_R for the left and right slave hands 21L and 21R, respectively, and the reference signs of the moments are denoted as ↑M_sh_local_act_L and ↑M_sh_local_act_R for the left and right slave hands 21L and 21R, respectively.

Next, in STEP 32, the slave manipulator control unit 43 obtains the actual slave hand motions of the left and right slave hands 21L and 21R using the joint displacement detection values acquired in STEP 30. Specifically, the slave manipulator control unit 43 obtains the position and the attitude angle (the position and the attitude angle as viewed in the slave upper-body coordinate system Cs) of the actual slave hand motion for each of the left and right slave hands 21L and 21R from the slave joint displacement detection values acquired in STEP 30 by the kinematics calculation.

The slave manipulator control unit 43 obtains the translational speed and the angular speed (the translational speed and the angular speed as viewed in the slave upper-body coordinate system Cs) of the actual slave hand motion by differential processing of obtaining the temporal change rates of the position and the attitude angle obtained for each of the left and right slave hands 21L and 21R. As a result, the slave hand motion as viewed in the slave upper-body coordinate system Cs is obtained for each of the left and right slave hands 21L and 21R.

Hereinafter, the reference signs of the position, the translational speed, the attitude angle, and the angular speed of the actual slave hand motion, which are obtained in STEP 32, as viewed in the slave upper-body coordinate system Cs are denoted as ↑P_sh_local_act_L, ↑V_sh_local_act_L, ↑θ_sh_local_act_L, and ↑ω_sh_local_act_L, respectively, for the left slave hand 21L, and are denoted as ↑P_sh_local_act_R, ↑V_sh_local_act_R, ↑θ_sh_local_act_R, and ↑ω_sh_local_act_R, respectively, for the right slave hand 21R.

Next, in STEP 33, the slave manipulator control unit 43 controls the slave joint actuator 24 (each joint actuator 24 of the slave manipulator 10) so as to realize the target slave hand motion acquired in STEP 30.

Specifically, the slave manipulator control unit 43 converts the target slave hand motion (↑Vsh_aim_L, ↑ωsh_aim_L, ↑Vsh_aim_R, ↑ωsh_aim_R) acquired in STEP 30 into the target slave hand motion as viewed in the slave upper-body coordinate system Cs. The conversion is performed using the position ↑P_sb_aim and the attitude angle ↑θ_sb_act of the actual slave upper-body motion obtained by the slave movement control unit 42.

Then, the slave manipulator control unit 43 obtains a target slave joint displacement speed ωsh_joint_aim(i) which is the target value of the displacement speed (rotation speed) of each slave joint (each joint of the slave manipulator 10) from the converted target slave hand motion by arithmetic processing of inverse kinematics. Incidentally, "i" in parentheses of the suffix of the reference sign of the target slave joint displacement speed means an identification number of each joint of the slave manipulator 10.

The slave manipulator control unit 43 obtains, for each joint of the slave manipulator 10, an actual slave joint displacement speed ωsh_joint_act(i) as an observation value of the actual displacement speed of each slave joint by differential processing of obtaining the temporal change rate of the joint displacement detection value acquired in STEP 30.

Then, the slave manipulator control unit 43 determines, for each slave joint, a target slave joint driving force Tq_mh_joint_aim(i) which is the target driving force (target rotational driving force) of each slave joint according to the deviation between the target slave joint displacement speed (ωsh_joint_aim(i) and the actual slave joint displacement speed ωsh_joint_act(i) by, for example, following equation (70).

$$Tq\_sh\_joint\_aim(i)$$
$$= Kv\_sh\_joint * (\omega sh\_joint\_aim(i) - \omega sh\_joint\_act(i))$$
$$... \quad (70)$$

Incidentally, Kv_sh_joint is a gain of a predetermined value. Supplementally, equation (70) is an equation for determining Tq_sh_joint_aim(i) by a proportional law as an example of a feedback control law. However, Tq_sh_joint_aim(i) may be determined by another feedback control law (for example, proportional/differential law and the like).

Then, the slave manipulator control unit 43 operates the joint actuator 24 corresponding to each slave joint to generate the target slave joint driving force Tq_sh_joint_aim(i) determined as described above. As a result, each joint actuator 24 of the slave manipulator 10 is controlled to realize the target slave hand motion. The processing in STEP 33 is executed as described above.

Next, in STEP 34, the slave manipulator control unit 43 outputs (transmits) the actual slave hand reaction force ($\uparrow$F_sh_local_act_L, $\uparrow$M_sh_local_act_L, $\uparrow$F_sh_local_act_R, $\uparrow$M_sh_local_act_R) obtained for each of the left and right slave hands 21L and 21R in STEP 31 and the actual slave hand motion ($\uparrow$P_sh_local_act_L, $\uparrow$V_sh_local_act_L, $\uparrow\theta$_sh_local_act_L, $\uparrow\omega$_sh_local_act_L, $\uparrow$P_sh_local_act_R, $\uparrow$V_sh_local_act_R, $\uparrow\theta$_sh_local_act_R, $\uparrow\omega$_sh_local_act_R) obtained for each of the left and right slave hands 21L and 21R in STEP 32 to the main manipulation control unit 94. The processing of the slave manipulator control unit 43 is executed as described above.

Supplementally, the actual slave hand reaction force ($\uparrow$F_sh_local_act_L, $\uparrow$M_sh_local_act_L, $\uparrow$F_sh_local_act_R, $\uparrow$M_sh_local_act_R) and the actual slave hand motion ($\uparrow$P_sh_local_act_L, $\uparrow$V_sh_local_act_L, $\uparrow\theta$_sh_local_act_L, $\uparrow\omega$_sh_local_act_L, $\uparrow$P_sh_local_act_R, $\uparrow$V_sh_local_act_R, $\uparrow\theta$_sh_local_act_R, $\uparrow\omega$_sh_local_act_R) output to the main manipulation control unit 94 in STEP 34 are the actual slave hand reaction force and the actual slave hand motion as viewed in the slave upper-body coordinate system Cs.

Therefore, the main manipulation control unit 94 respectively converts the actual slave upper-body reaction force and the actual slave hand motion input from the slave manipulator control unit 43 into the actual slave hand reaction force ($\uparrow$F_sh_act_L, $\uparrow$M_sh_act_L, $\uparrow$F_sh_act_R, $\uparrow$M_sh_act_R) and the actual slave hand motion ($\uparrow$P_sh_act_L, $\uparrow$V_sh_act_L, $\uparrow\theta$_sh_act_L, $\uparrow\omega$_sh_act_L, $\uparrow$P_sh_act_R, $\uparrow$V_sh_act_R, $\uparrow\theta$_sh_act_R, $\uparrow\omega$_sh_act_R) as viewed in the slave-side global coordinate system by using the position $\uparrow$P_sb_act and the attitude angle $\uparrow\theta$_sb_act of the actual slave upper-body motion input from the slave movement control unit 42. Then, the above-described processing (the processing in FIG. 6) is executed using the actual slave hand reaction force and the actual slave hand motion after the conversion.

However, the slave manipulator control unit 43 may convert the actual slave hand reaction force and the actual slave hand motion as viewed in the slave upper-body coordinate system Cs into the actual slave upper-body reaction force and the actual slave hand motion as viewed in the slave-side global coordinate system. In this case, the main manipulation control unit 94 does not need to perform the conversion processing. Incidentally, in the calculation of the hand side bilateral control, it is preferable to use the actual slave hand reaction force and the actual slave hand motion as viewed in the slave upper-body coordinate system Cs. In this case, regarding the master device 51, it is preferable to use the actual master hand reaction force and the actual master hand motion as viewed in the master upper-body coordinate system Cm.

[Control processing of master manipulator control unit]

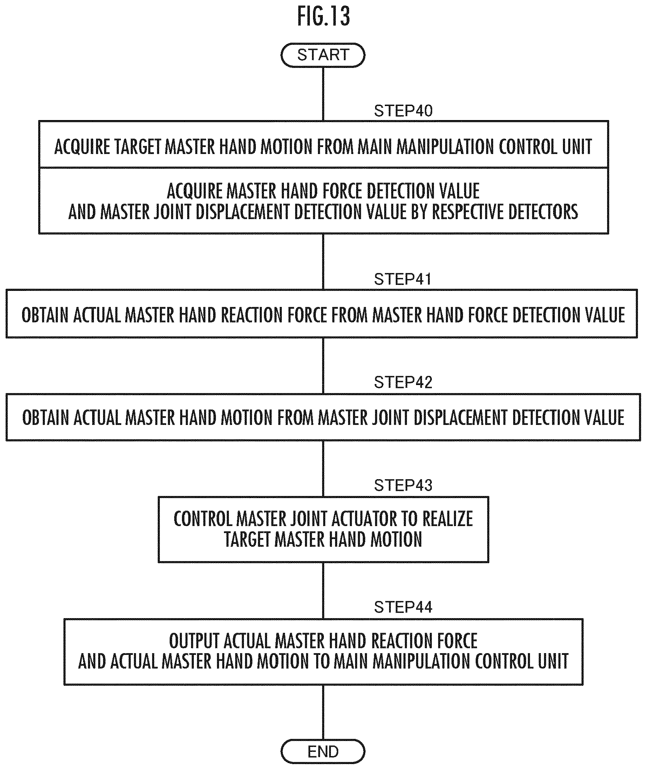

Next, control processing of the master manipulator control unit 93 will be described with reference to FIG. 13. The master manipulator control unit 93 sequentially executes the processing illustrated in the flowchart of FIG. 13 at a predetermined control processing cycle. In STEP 40, the master manipulator control unit 93 acquires the target master hand motions ($\uparrow$Vmh_aim_L, $\uparrow\omega$mh_aim_L, $\uparrow$Vmh_aim_R, $\uparrow\omega$_mh_aim_R) of the left and right master hands 81L and 81R from the main manipulation control unit 94, and acquires the master hand force detection values indicated by the outputs of the left and right master hand force detectors 82L and 82R and the master joint displacement detection values indicated by the outputs of the joint displacement detectors 85 of the master manipulator 70. Incidentally, the master hand force detection value is the detection value of the translational force and the moment as viewed in a sensor coordinate system set for each master hand force detector 82.

Next, in STEP 41, the master manipulator control unit 93 obtains left and right actual master hand reaction forces from the left and right master hand force detection values acquired in STEP 40. Specifically, the master manipulator control unit 93 obtains the actual slave upper-body reaction force as viewed in the master upper-body coordinate system Cm by converting the master hand force detection value in the sensor coordinate system of each master hand force detector 82 into a set of the translational force and the moment as viewed in the master upper-body coordinate system Cm using the master joint displacement detection value (the joint displacement detection value of each joint of the slave manipulator 10) acquired in STEP 40.

Incidentally, each moment of the left and right actual master hand reaction forces obtained in STEP 41 is a moment around the origin (master reference point Qm) of the master upper-body coordinate system Cm.

Hereinafter, the reference signs of the translational force of the actual master hand reaction force as viewed in the master upper-body coordinate system Cm obtained in STEP 41 are denoted as $\uparrow$F_mh_local_act_L and $\uparrow$F_mh_local_act_R for the left and right master hands 81L and 81R, respectively, and the reference signs of the moments are denoted as $\uparrow$M_mh_local_act_L and $\uparrow$M_mh_local_act_R for the left and right master hands 81L and 81R, respectively.

Next, in STEP 42, the master manipulator control unit 93 obtains the actual master hand motions of the left and right master hands 81L and 81R using the joint displacement detection values acquired in STEP 40. Specifically, the master manipulator control unit 93 obtains the position and the attitude angle (the position and the attitude angle as viewed in the master upper-body coordinate system Cm) of the actual master hand motion for each of the left and right master hands 81_L and 81R from the master joint displacement detection value acquired in STEP 40 by the kinematics calculation. Further, the master manipulator control unit 93 obtains the translational speed and the angular speed (the translational speed and the angular speed as viewed in the master upper-body coordinate system Cm) of the actual master hand motion by differential processing of obtaining the temporal change rates of the position and the attitude angle obtained for each of the left and right master hands 81_L and 81R. As a result, the master hand motion as viewed in the master upper-body coordinate system Cm is obtained for each of the left and right master hands 81L and 81R.

Hereinafter, the reference signs of the position, the translational speed, the attitude angle, and the angular speed of the actual master hand motion, which are obtained in STEP 42, as viewed in the master upper-body coordinate system Cm are denoted as $\uparrow$P_mh_local_act_L, $\uparrow$V_mh_local_act_L, $\uparrow\theta$_mh_local_act_L, and $\uparrow\theta$_mh_local_act_L, respectively, for the left master hand 81L, and are denoted as $\uparrow$P_mh_local_act_R, $\uparrow$V_mh_local_act_R, $\uparrow\theta$_mh_local_act_R, and $\uparrow\omega$_mh_local_act_R, respectively, for the right master hand 81R.

Next, in STEP 43, the master manipulator control unit 93 controls the master joint actuator 84 (each joint actuator 84 of the master manipulator 70) so as to realize the target slave hand motion acquired in STEP 40.

Specifically, the master manipulator control unit 93 converts the target master hand motion ($\uparrow$Vmh_aim_L, $\uparrow\omega$mh_aim_L, $\uparrow$Vmh_aim_R, $\uparrow\omega$_mh_aim_R) acquired in STEP 40 into the target master hand motion as viewed in the master upper-body coordinate system Cm. The conversion is performed using the position $\uparrow$P_mb_aim and the attitude angle $\uparrow\theta$_mb_act of the actual upper-body support part motion obtained by the master movement control unit 92.

Then, the master manipulator control unit 93 obtains a target master joint displacement speed $\omega$mh_joint_aim(j) which is the target value of the displacement speed (rotational speed) of each master joint (each joint of the master manipulator 70) from the converted target master hand motion by arithmetic processing of inverse kinematics. Incidentally, "j" in parentheses of the suffix of the target master joint displacement speed means an identification number of each joint of the master manipulator 70.

The master manipulator control unit 93 obtains, for each joint of the master manipulator 70, an actual master joint displacement speed $\omega$mh_joint_act(j) as an observation value of the actual displacement speed of each master joint by differential processing of obtaining the temporal change rate of the joint displacement detection value acquired in STEP 40.

Then, the master manipulator control unit 93 determines, for each master joint, a target master joint driving force Tq_mh_joint_aim(i) which is the target driving force (target rotational driving force) of each master joint according to the deviation between the target master joint displacement speed $\omega$mh_joint_aim(j) and the actual master joint displacement speed $\omega$mh_joint_act(j) by the following equation (71).

$$Tq\_mh\_joint\_aim(i)$$
$$= Kv\_mh\_joint*(\omega mh\_joint\_aim(i) - \omega mh\_joint\_act(i))$$
$$\dots \quad (71)$$

Incidentally, Kv_mh_joint is a gain of a predetermined value. Supplementally, equation (71) is an equation for determining Tq_mh_joint_aim(i) by a proportional law as an example of a feedback control law. However, Tq_mh_joint_aim(i) may be determined by another feedback control law (for example, proportional/differential law and the like).

Then, the master manipulator control unit 93 operates the joint actuator 84 corresponding to each master joint to generate the target master joint driving force Tq_mh_joint_aim(i) determined as described above. As a result, each joint actuators 84 of the master manipulator 70 is controlled to realize the target master hand motion. The processing in STEP 43 is executed as described above.

Next, in STEP 44, the master manipulator control unit 93 outputs (transmit) the actual master hand reaction force ($\uparrow$F_mh_local_act_L, $\uparrow$M_mh_local_act_L, $\uparrow$F_mh_local_act_R, $\uparrow$M_mh_local_act_R) obtained for each of the left and right master hands 81L and 81R in STEP 41 and the actual slave hand motion ($\uparrow$P_mh_local_act_L, $\uparrow$V_mh_local_act_L, $\uparrow\theta$_mh_local_act_L, $\uparrow\omega$_mh_local_act_L, $\uparrow$P_mh_local_act_R, $\uparrow$V_mh_local_act_R, $\uparrow\theta$_mh_local_act_R, $\uparrow\theta$_mh_local_act_R) obtained for each of the left and right slave hands 21L and 21R in STEP 32 to the main manipulation control unit 94. The processing of the master manipulator control unit 93 is executed as described above.

Supplementally, the actual slave hand reaction force ($\uparrow$F_mh_local_act_L, $\uparrow$M_mh_local_act_L, $\uparrow$F_mh_local_act_R, $\uparrow$M_mh_local_act_R) and the actual slave hand motion ($\uparrow$P_mh_local_act_L, $\uparrow$V_mh_local_act_L, $\uparrow\theta$_mh_local_act_L, $\uparrow\omega$_mh_local_act_L, $\uparrow$P_mh_local_act_R, $\uparrow$V_mh_local_act_R, $\uparrow\theta$_mh_local_act_R, ↑ω_mh_local_act_R) output to the main manipulation control unit 94 in STEP 44 are the actual master hand reaction force and the actual master hand motion as viewed in the master upper-body coordinate system Cm.

Therefore, the main manipulation control unit 94 respectively converts the actual upper-body support part reaction force and the actual upper-body support part motion input from the master manipulator control unit 93 into the actual master hand reaction force (↑F_mh_act_L, ↑M_mh_act_L, ↑F_mh_act_R, ↑M_mh_act_R) and the actual master hand motion (↑P_mh_act_L, ↑V_mh_act_L, ↑θ_mh_act_L, ↑ω_mh_act_L, ↑P_mh_act_R, ↑V_mh_act_R, ↑θ_mh_act_R, ↑θ_mh_act_R) as viewed in the master-side global coordinate system by using the position ↑P_mb_act and the attitude angle ↑θ_mb_act of the actual upper-body support part motion input from the master movement control unit 92. Then, the above-described processing (the processing of FIG. 6) is executed using the actual master hand reaction force and the actual master hand motion after the conversion.

However, the master manipulator control unit 93 may convert the actual master hand reaction force and the actual master hand motion as viewed in the master upper-body coordinate system Cm into the actual master upper-body reaction force and the actual master hand motion as viewed in the master-side global coordinate system. In this case, the main manipulation control unit 94 does not need to perform the conversion processing.

[Regarding operation and effect]

According to this embodiment described above, the master device 51 is configured to be able to move on the floor surface together with the operator P in such a manner that the operator P with the upper-body support part 65 mounted on the waist of the upper body can move (walk) on the floor surface. Therefore, it is possible to realize the master device 51 having a simple and small configuration without requiring a mechanism mounted on each leg of the operator P. Further, the slave device 1 moves as the operator P moves (walks), and thus the operator P can easily recognize the correspondence relationship between the moving action of the operator P and the moving action of the slave device 1. Therefore, the operator P can easily perform the movement manipulation of the slave device 1 without a high level of skill required.

The target upper-body support part motion of the master device 51 and the target slave upper-body motion are determined such that the upper-body reaction force deviation (the upper-body reaction force translational force deviation ↑Efb and the upper-body reaction force moment deviation ↑Emb) defined by above equations (1a) and (1b) and the upper-body position/attitude deviation (the upper-body position deviation ↑Epb and the upper-body attitude deviation ↑Ethb) defined by above equations (2a) and (2b) are converged to zero.

Therefore, for example, a target state support part motion is determined such that the actual upper-body support part reaction force (↑F_mb_act, ↑M_mb_act) can be converged to zero in a state where the actual slave upper-body reaction force due to contact with an external object or the like does not act on the slave upper body, and the actual master hand reaction force from the operator P does not act on the master manipulator 70 (in other words, a state where ↑F_sb_act, ↑F_mh_act, ↑M_sb_act, and ↑M_mh_act of equations (1a) and (1b) are all zero or substantially zero). Then, the electric motors 55a and 55b of the master movement mechanism 52 and the slide drive actuator 66 of the master lifting mechanism 60 are controlled so as to realize the target support part motion.

As a result, the operator P can move on the floor surface in the state of not receiving or hardly receiving a reaction force (which may include lateral and vertical translational forces) from the upper-body support part 65 mounted on the waist. Therefore, the operator P can perform the movement manipulation of the slave device 1 while performing the moving action with a sense that the upper-body support part 65 is not mounted.

For example, the target state support part motion is determined such that the actual upper-body support part reaction force (↑F_mb_act, ↑M_mb_act) is converged to a value proportional to the actual slave upper-body reaction force (↑F_sb_act, ↑M_sb_act) (specifically, ↑F_mb_act = -Ratio_fsb*↑F_sb_act, ↑M_mb_act =-Ratio_msb*↑M_sb_act) in a state where the actual slave upper-body reaction force acts on the slave upper body, but the actual master hand reaction force does not act on the master manipulator 70 (in other words, a state where ↑F_mh_act and ↑M_mh_act of equations (1a) and (1b) are all zero or substantially zero). Then, the electric motors 55a and 55b of the master movement mechanism 52 and the slide drive actuator 66 of the master lifting mechanism 60 are controlled so as to realize the target support part motion.

Therefore, in a case where the actual slave upper-body reaction force due to contact with an external object or the like acts on the slave upper body, a reaction force (which may include lateral and vertical translational forces) proportional to the actual slave upper-body reaction force acts on the mounted portion (waist) of the upper-body support part 65 of the operator P via the upper-body support part 65. As a result, the operator P can sense and recognize that the actual slave upper-body reaction force acts on the slave upper body. Further, in this case, the operator P can recognize the degree of the magnitude and the direction of the actual slave upper-body reaction force in a trunk manner. Therefore, the operator P can appropriately take a countermeasure such as stopping the movement of the slave device 1.

For example, the target state support part motion is determined such that the actual upper-body support part reaction force (↑F_mb_act, ↑M_mb_act) is converged to a value proportional to the actual master hand resultant force

($\uparrow$F_mh_act, $\uparrow$M_mh_act) (specifically, $\uparrow$F_mb_act = -Ratio_fmh*$\uparrow$F_mh_act, $\uparrow$M_mb_act =-Ratio_mmh*$\uparrow$M_mh_act) in a state where the actual slave upper-body reaction force does not act on the slave upper body, and the actual master hand reaction force acts on the master manipulator 70 (in other words, a state in which $\uparrow$F_sb _act and $\uparrow$M_sb_act of equations (1a) and (1b) are all zero or substantially zero). Then, the electric motors 55a and 55b of the master movement mechanism 52 and the slide drive actuator 66 of the master lifting mechanism 60 are controlled so as to realize the target support part motion.

In this case, for example, in a case where the values of the coefficients Ratio_fmh and Ratio_mmh are set such that Ratio_fmh = Ratio_mmh = 1, a reaction force which offsets the master hand reaction force acts on the upper body (waist) of the operator P from the upper-body support part 65, and thus, a reaction force (which may include lateral and vertical translational forces) corresponding to the master hand reaction force does not act on the leg of the operator P. Therefore, even when the master hand reaction force becomes large due to the large slave hand reaction force or the like, the operator P can easily move the master manipulator 70 to move each slave hand 21 without feeling a load due to the master hand reaction force on the leg.

In a case where the values of the coefficients Ratio_fmh and Ratio_mmh are set to values smaller than "1", a reaction force (which may include lateral and vertical translational forces) proportional to the master hand reaction force acts on the leg of the operator P. Therefore, the operator P can recognize the magnitude and direction of the reaction force received by each slave hand 21 from the object to be worked or the like with the leg. As a result, in a case where the magnitude of the reaction force received by each slave hand 21 from the object to be worked or the like becomes excessively large, or the direction of the reaction force becomes an abnormal direction, it is possible to appropriately take a countermeasure such as stopping the manipulation of the slave manipulator 10.

In a state where the actual slave upper-body reaction force acts on the slave upper body, and the actual master hand reaction force acts on the master manipulator 70, it is possible to achieve both the operation and effect in a state where the actual master hand reaction force does not act on the master manipulator 70 and the operation and effect in a state where the actual slave upper-body reaction force does not act on the slave upper body.

In this embodiment, the upper-body support part 65 of the master device 51 is supported by the slide member 62 via the support shaft 63 so as to be freely rotatable about the axis in the front-rear direction (the X-axis direction of the master upper-body coordinate system Cm), and thus the operator P can swing the waist in the roll direction without a sense of resistance. Therefore, the operator P can smoothly perform a walking action as the moving action.

(Second embodiment)

Next, a second embodiment of the present invention will be described. Incidentally, in this embodiment, the configurations of the slave device 1 and the master device 51 are the same as those of the first embodiment. In this embodiment, in the processing of the upper-body side bilateral control (the processing in STEP 3), the main manipulation control unit 94 sets (defines) the upper-body reaction force deviation, for example, by an equation in which all of the coefficients Ratio_fsb, Ratio_msb, Ratio_fmh, and Ratio_mmh in equations (1a) and (1b) are matched with zero, that is, following equations (81a) and (81b), instead of setting the upper-body reaction force deviation by above equations (1a) and (1b).

$$\uparrow\text{Efb} = \uparrow\text{F\_mb\_act}... \quad (81a)$$

$$\uparrow\text{Emb} = \uparrow\text{M\_mb\_act}... \quad (81b)$$

In this case, in this embodiment, in the processing of the upper-body side bilateral control (the processing in STEP 3), the main manipulation control unit 94 determines the target upper-body support part motion and the target slave upper-body motion by the processing in which all of the coefficients Ratio_fsb, Ratio_msb, Ratio_fmh, and Ratio_mmh in the first embodiment are set to zero. Further, the main manipulation control unit 94 omits acquisition of the actual slave upper-body reaction force in STEP 1. Further, in the processing of the slave movement control unit 42, the processing of obtaining the actual slave upper-body reaction force is omitted. The other configurations may be the same as those of the first embodiment.

According to this embodiment, it is possible to achieve effects similar to the effects described in relation to a state where the actual slave upper-body reaction force does not act on the slave upper body, and the actual master hand reaction force does not act on the master manipulator 70 from the operator P in the first embodiment.

(Third embodiment)

Next, a third embodiment of the present invention will be described. Incidentally, in this embodiment, the configurations of the slave device 1 and the master device 51 are the same as those of the first embodiment. In this embodiment, in the processing of the upper-body side bilateral control (the processing in STEP 3), the main manipulation control unit 94 sets (defines) the upper-body reaction force deviation, for example, by an equation in which all of the coefficients Ratio_fmh and Ratio_mmh in equations (1a) and (1b) are matched with zero, that is, following equations (82a) and (82b), instead of setting the upper-body reaction force deviation by above equations (1a) and (1b).

$$\uparrow Efb = \uparrow F\_mb\_act + Ratio\_fsb*\uparrow F\_sb\_act$$

$$... \quad (82a)$$

$$\uparrow Emb = \uparrow M\_mb\_act + Ratio\_msb*\uparrow M\_sb\_act$$

$$... \quad (82b)$$

In this case, in this embodiment, in the processing of the upper-body side bilateral control (the processing in STEP 3), the main manipulation control unit 94 determines the target upper-body support part motion and the target slave upper-body motion by the processing in which all of the coefficients Ratio_fmh and Ratio_mmh in the first embodiment are set to zero. The other configurations may be the same as those of the first embodiment.
According to this embodiment, it is possible to achieve effects similar to the effects described in relation to a state where the actual master hand reaction force does not act on the master manipulator 70 from the operator P in the first embodiment.

(Fourth embodiment)

Next, a fourth embodiment of the present invention will be described. Incidentally, in this embodiment, the configurations of the slave device 1 and the master device 51 are the same as those of the first embodiment. In this embodiment, in the processing of the upper-body side bilateral control (the processing in STEP 3), the main manipulation control unit 94 sets (defines) the upper-body reaction force deviation, for example, by an equation in which all of the coefficients Ratio_fsb and Ratio_msb in equations (1a) and (1b) are matched with zero, that is, following equations (83a) and (83b), instead of setting the upper-body reaction force deviation by above equations (1a) and (1b).

$$\uparrow Efb = \uparrow F\_mb\_act + Ratio\_fmh*\uparrow F\_mh\_act$$

$$... \quad (83a)$$

$$\uparrow Emb = \uparrow M\_mb\_act + Ratio\_mmh*\uparrow M\_mh\_act$$

$$... \quad (83b)$$

In this case, in this embodiment, in the processing of the upper-body side bilateral control (the processing in STEP 3), the main manipulation control unit 94 determines the target upper-body support part motion and the target slave upper-body motion by the processing in which all of the coefficients Ratio_fsb and Ratio_msb in the first embodiment are set to zero. Further, the main manipulation control unit 94 omits acquisition of the actual slave upper-body reaction force in STEP 1. Further, in the processing of the slave movement control unit 42, the processing of obtaining the actual slave upper-body reaction force is omitted. The other configurations may be the same as those of the first embodiment.
According to this embodiment, it is possible to achieve effects similar to the effects described in relation to a state where the actual slave upper-body reaction force does not act on the slave upper body in the first embodiment.

(Fifth embodiment)

Next, a fifth embodiment of the present invention will be described. Incidentally, in this embodiment, the configurations of the slave device 1 and the master device 51 are the same as those of the first embodiment. In this embodiment, in the processing of the upper-body side bilateral control (the process in STEP 3), the main manipulation control unit 94 sets a component other than the up-down direction (Z-axis direction) in the upper-body reaction force translational force deviation ↑Efb by the same equation as above equation (1a) (alternatively, above equation (82a) of the third embodiment or above equation (83a) of the fourth embodiment) of the first embodiment, and sets a vertical (Z-axis direction) component Efb_z by, for example, following equation (84a).

Incidentally, F_mb_z_act is a vertical (Z-axis direction) translational force in the translational force ↑F_mb_act of the actual upper-body support part reaction force. Cz is a target value (predetermined value) of the vertical translational force to be applied from the upper-body support part 65 to the operator P in order to steadily reduce the load on the leg of the operator P. Incidentally, Cz may be zero.

$$Efb\_z = F\_mb\_z\_act + Cz... \quad (84a)$$

In this case, in this embodiment, in the processing of the upper-body side bilateral control (the processing in STEP 3), in the case of obtaining respective vertical (Z-axis direction) components of the target upper-body support part translational acceleration ↑Acc_mb_aim and the target slave upper-body translational acceleration ↑Acc_sb_aim, the main manipulation control unit 94 obtains the vertical components by the processing in which all of the coefficients Ratio_fsb and Ratio_msb in the first embodiment are set to zero. The other configurations are the same as those of the first embodiment (or the third embodiment or the fourth embodiment).

According to this embodiment, regarding the lateral translational force in the actual upper-body support part reaction force, the same effect as that of the first embodiment (alternatively, the third embodiment or the fourth embodiment) can be obtained.

As for the vertical translational force in the actual upper-body support part reaction force, in a case where Cz is set such that, for example, Cz = 0 (or Cz ≈ 0), the slide drive actuator 66 of the master lifting mechanism 60 is controlled such that the vertical translational force becomes zero (or substantially zero). Therefore, the operator can perform the vertical motion of the upper body accompanying the walking action of the operator without a sense of resistance. As a result, it is possible to smoothly perform the movement for the movement manipulation of the mobile body. Further, in a case where Cz is set to a positive predetermined value, for example, a value of a certain proportion of the gravity acting on the operator P, the operator P can move in a state where the load of his/her leg against the gravity is reduced in a steady manner. As a result, it is possible to smoothly perform the movement for the movement manipulation of the mobile body.

Supplementally, in each of the first embodiment, the third embodiment, and the fourth embodiment, for the vertical (Z-axis direction) component Efb_z in the upper-body reaction force translational force deviation ↑Efb, instead of determining Efb_z by above equations (1a), (82a), and (83c), for example, Efb_z may be set (defined) by an equation in which "+ Cz" (Cz > 0) is added to the right side of the equation corresponding to Efb_z among equations (1a), (82a), and (83c) similarly to the right side of equation (84a).

That is, in each of the first embodiment, the third embodiment, and the fourth embodiment, the vertical (Z-axis direction) component Efb z in the upper-body reaction force translational force deviation ↑Efb may be set (defined) by any one of following equations (1a)', (82a)', and (83c)'. Incidentally, F_sb_z_act and F_mh_z_act are vertical (Z-axis direction) components of ↑F_sb_act and ↑F_mh_act, respectively.

$$Efb\_z = F\_mb\_z\_act + Ratio\_fsb*F\_sb\_z\_act$$
$$+ Ratio\_fmh*F\_mh\_\_z\_act + Cz$$
$$... \quad (1a)'$$

$$Efb\_z = F\_mb\_z\_act + Ratio\_fsb*F\_sb\_z\_act + Cz$$
$$... \quad (82a)'$$

$$Efb\_z = F\_mb\_z\_act + Ratio\_fmh*F\_mh\_z\_act + Cz$$
$$... \quad (83a)'$$

Even in this case, similarly to the fifth embodiment described above, the operator P can move in a state where the load of his/her leg against the gravity is reduced in a steady manner.

(Sixth embodiment)

Next, a sixth embodiment of the present invention will be described. In this embodiment, some configurations of the slave device 1 and the master device 51 are different from those of the first embodiment. For example, in this embodiment, the slide drive actuator 66 of the lifting mechanism 60 of the master device 51 is omitted, and the lifting mechanism 60 is configured such that the slide member 62 is movable in the up-down direction within a predetermined range with respect to the support column 61 (can move freely).

In the slave device 1, for example, the slave slide drive actuator 36 is subjected to displacement control on the basis of the respective detection values of the slave slide displacement detector 29 and the master slide displacement detector 89 so that the vertical displacement of the slave slide member 32 follows the vertical displacement of the master slide member 62. Alternatively, in the slave device 1, the lifting mechanism 30 may be omitted, and the slave manipulator 10 may be attached to the support column 31.

Then, in the processing of the upper-body side bilateral control (the processing in STEP 3), the main manipulation control unit 94 omits determination of the vertical translational speed in the target upper-body support part motion and the target slave upper-body motion. Further, in STEP 12, the slave movement control unit 42 omits the processing of obtaining the vertical (Z-axis direction) translational speed in the actual slave upper-body motion.

In STEP 14, the slave movement control unit 42 controls the slave slide drive actuator 36 so that the vertical displacement of the slave slide member 32 follows the vertical displacement of the master slide member 62 as described above. Incidentally, in a case where the slave lifting mechanism 30 is omitted, the processing in STEP 14 is omitted. The other configurations may be the same as any of the first to fourth embodiments.

According to this embodiment, the upper-body support part 65 of the master device 51 can move freely in the up-down direction, and thus the upper-body support part 65 can be moved up and down following the vertical motion of the upper body of the operator P without requiring an actuator. Therefore, the operator P can smoothly perform the walking action and the like.

(Seventh embodiment)

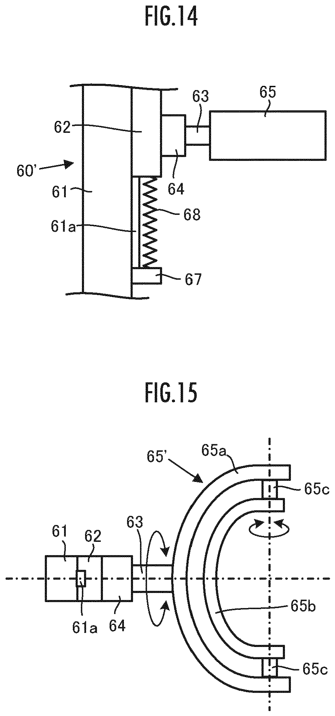

Next, a seventh embodiment of the present invention will be described with reference to FIG. 14. In this embodiment, as illustrated in FIG. 14, in this embodiment, a lifting mechanism 60' of the master device 51 includes a spring 68 such as a coil spring instead of the slide drive actuator 66, and the spring 68 is interposed in a compressed state between a base member 67 fixed to the support column 61 and the slide member 62. As a result, the upper-body support part 65 can be biased upward by the elastic force of the spring 68 and elastically move up and down. In this case, the elastic force of the spring 68 may be an elastic force which can suppress lowering of the upper-body support part 65 and the slide member 62. The other configurations may be the same as those of the sixth embodiment.

According to this embodiment, it is possible to reduce or eliminate the weight of the upper-body support part 65, the support shaft 63, the upper-body force detector 64, and the slide member 62 from acting on the upper body of the operator P on which the upper-body support part 65 is mounted. Alternatively, an assisting force (upward translational force) which reduces the load on the leg of the operator P against the gravity acting on the operator P can be applied from the upper-body support part 65 to act on the operator P. Incidentally, instead of including the spring 68 as described above in the master device 51, the slide drive actuator 66 of the lifting mechanism 60 described in the first embodiment may generate a driving force similar to the elastic force of the spring 68 according to the vertical displacement (in other words, the vertical displacement of the upper-body support part 65) of the slide member 62.

(Eighth embodiment)

Next, an eighth embodiment of the present invention will be described with reference to FIG. 15. In the first embodiment, the upper-body support part 65 of the master device 51 is attached to the slide member 62 via the support shaft 63 so as to be rotatable in the roll direction (the direction around the axis in the front-rear direction) (so as to be freely rotatable in the roll direction). On the other hand, in this embodiment, as illustrated in FIG. 15, the upper-body support part 65 is attached to the slide member 62 so as to be rotatable not only in the roll direction but also in the pitch direction (the direction around the axis in the left-right direction) (so as to be freely rotatable in the roll direction and the pitch direction).

More specifically, in this embodiment, an upper-body support part 65' includes an anti-arc-shaped (or U-shaped) outer member 65a attached to the slide member 62 via the support shaft 63 so as to be freely rotatable in the roll direction and an anti-arc-shaped (or U-shaped) inner member 65b arranged inside the outer member, and each of both end portions of the inner member 65b is axially supported by each end portion of the outer member 65a via a support shaft 65c having an axis in the left-right direction.

As a result, the inner member 65b can freely rotate in the pitch direction around the axis of the support shaft 65c with respect to the outer member 65a. In other words, the inner member 65b is attached so as to be freely rotatable in the roll direction and the pitch direction with respect to the slide member 62 by a mechanism similar to a so-called gimbal mechanism. Then, in the upper-body support part 65' having such a configuration, the inner member 65b corresponds to the upper-body support part 65 in the first embodiment and is mounted on the upper body (for example, the waist) of the operator P so as to be along the back side thereof. The other matters may be the same as any of the first to seventh embodiments.

According to this embodiment, the inner member 65b which is a mounted portion of the upper-body support part 65' on the upper body (waist) of the operator P is supported by the slide member 62 so as to be freely rotatable in the roll direction and the pitch direction, and thus the operator P can swing the waist in the roll direction and the pitch direction without a sense of resistance. Therefore, the operator P can more smoothly perform the walking action as the moving action. Incidentally, in the eighth embodiment, the support shaft 63 may be omitted so as to fix the upper-body support part 65' in the roll direction.

<Another embodiment>

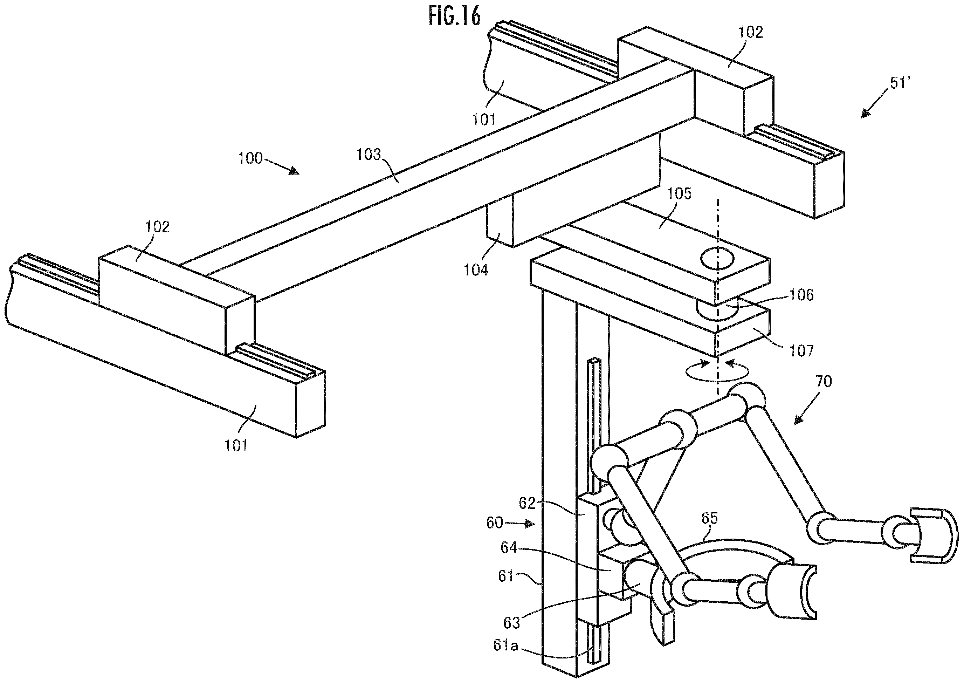

The present invention is not limited to the embodiments described above, and another embodiment can be adopted. For example, in each of the above embodiments, one including the master movement mechanism 52 and the master lifting mechanism 60 capable of moving on the floor surface together with the operator P is exemplified as the upper-body support part drive mechanism in the present invention. However, the upper-body support part drive mechanism in the present invention may have, for example, a configuration illustrated in FIG. 16.

In this example, a master device 51' (manipulation device) includes the lifting mechanism 60, the upper-body support part 65, and the manipulator 70 having the same configurations as those of the first embodiment, and also includes a movement mechanism 100 installed on a ceiling portion (not illustrated) of a building in an environment where the operator P (not illustrated) moves. The support column 61 of the lifting mechanism 60 is supported by the movement mechanism 100 (in other words, the upper-body support part 65 is attached to the movement mechanism 100 via the lifting mechanism 60).

In this case, the movement mechanism 100 includes a pair of first movable parts 102 and 102 which can move in the front-rear direction (the X-axis direction of the master upper-body coordinate system Cm in the drawing) by the driving force of the actuator (not illustrated) along a pair of parallel rail mechanisms 101 and 101 fixed to the ceiling, a rail mechanism 103 which is bridged between the first movable parts 102 and 102 so as to be able to move integrally with the first movable parts 102 and 102, a second movable part 104 which can move in the left-right direction (the Y-axis direction of the master upper-body coordinate system Cm) by the driving force of the actuator (not illustrated) along the rail mechanism 103, an upper plate-shaped member 105 which extends forward from the second movable part 104, and a lower plate-shaped member 107 which is arranged below the upper plate-shaped member 105 and is attached to the plate-shaped member 105 via an actuator 106 (for example, an electric motor) so as to be rotatable by the actuator 106 around the vertical axis (the direction around the Z-axis of the master upper-body coordinate system Cm) with respect to the upper plate-shaped member 105.

Then, the upper end portion of the support column 61 of the lifting mechanism 60 is fixed to the lower plate-shaped member 107 such that the vicinity of the center of the upper-body support part 65 is positioned substantially immediately below the rotation axis of the actuator 106. Incidentally, in this embodiment, the upper-body support part drive mechanism of the present invention is realized by the movement mechanism 100 and the lifting mechanism 60. Further, the upper-body support part may be the upper-body support part 65' described in the eighth embodiment.

In such a master device 51', the support column 61 of the lifting mechanism 60 may be moved in the lateral direction (the direction orthogonal to the up-down direction) by the action of the movement mechanism 100, and may be rotated about the axis of the actuator 106 (yaw direction). Therefore, the operator P can move on the floor surface similarly to the first embodiment. Then, similarly to the first embodiment (or any one of the second to eighth embodiments), the upper-body support part reaction force can be controlled by operation control of an actuator (not illustrated) of the movement mechanism 100 and the actuator 106.

In each of the embodiments, the master devices 51 and 51' each including the master manipulator 70 for manipulating the slave manipulator 10 are exemplified. However, the slave manipulator 10 may be manipulated by, for example, a remote controller or a portable terminal such as a smartphone carried by the operator P. In this case, the master manipulator 70 and the control processing thereof are unnecessary.

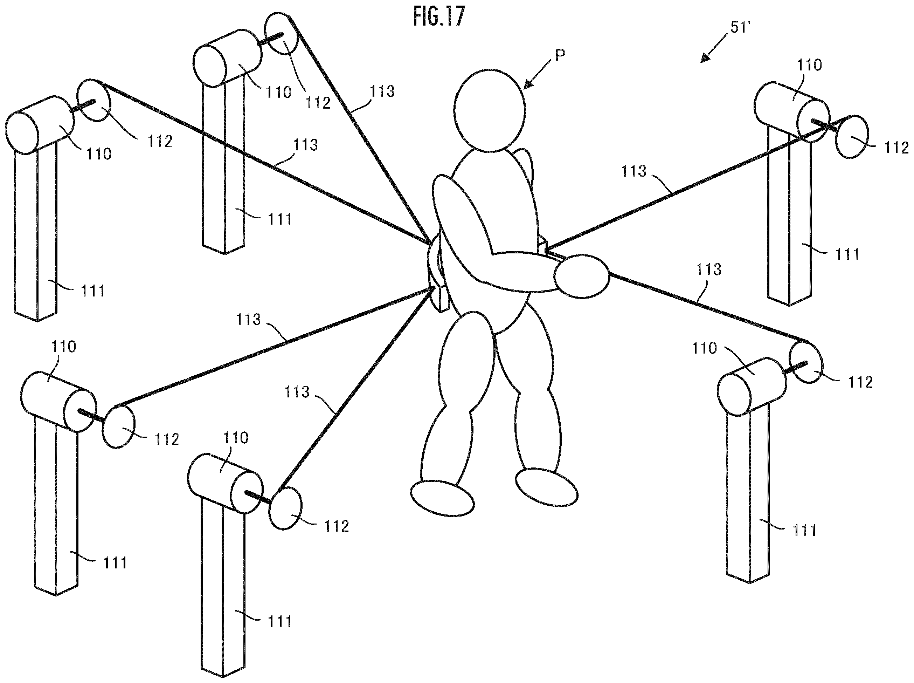

As the upper-body support part drive mechanism in the present invention, for example, an upper-body support part drive mechanism having a configuration illustrated in FIG. 17 can also be adopted. In this example, a master device 51" (manipulation device) includes the upper-body support part 65 having the same configuration as that of the first embodiment and a plurality of electric motors 110 arranged around a movement environment of the operator P with the upper-body support part 65 mounted on the upper body (waist). Each electric motor 110 is attached, for example, on a support column 111 erected on the floor surface.

Then, a pulley 112 which can be rotationally driven by the electric motor 110 is mounted on a rotation shaft of each electric motor 110. Further, a wire 113 wound around the pulley 112 corresponding to each electric motor 110 is pulled out from the pulley 112, and the distal end of the pulled-out wire 113 is connected to the upper-body support part 65.

In the master device 51", the upper-body support part drive in the present invention is realized by the plurality of electric motors 110 and the wire 113. Then, in the master device 51", with the operation control of each electric motor 110, the operator P can move on the floor surface and control the upper-body support part reaction force at the time of the movement similarly to the first embodiment (or any one of the second to eighth embodiments). Incidentally, instead of the electric motor 110, an actuator such as a hydraulic motor may be used. Further, the upper-body support part may be the upper-body support part 65' described in the eighth embodiment.

In the first to eighth embodiments, the movement mechanism 52 of the master device 51 (manipulation device) includes the moving grounding part 54 described above, but the movement mechanism of the upper-body support part drive mechanism in the manipulation device of the present invention may be a movement mechanism of another structure, for example, a leg type movement mechanism.

The movement mechanism of the mobile body in the present invention may also have a structure different from the above-described slave movement mechanism 2. For example, as long as the mobile body can move autonomously and stably, the movement mechanism of the mobile body may be a leg type movement mechanism. Further, the mobile body in the present invention may be a virtual mobile body.

In the first to eighth embodiments, by way of example, the attitude in the roll direction and the pitch direction between the upper-body support part 65 (or 65') of the master device 51 (manipulation device) and the slave upper body of the slave device 1 is not controlled. However, the attitude in the roll direction and the pitch direction between the upper-body support part 65 (or 65') and the upper body slave can be controlled.

A method of detecting the motion state (the actual upper-body support part motion and the actual slave upper-body motion) related to the movement of each of the master device 51 (the manipulation device) and the slave device 1 (the mobile body) is not limited to the method described in the first embodiment. For example, an inertial sensor may be mounted on each of the master device 51 (manipulation device) and the slave device 1 (mobile body 1), and the actual upper-body support part motion and the actual slave upper-body motion may be detected using the inertial sensor. Alternatively, for example, the actual upper-body support part motion and the actual slave upper-body motion may be detected from respective captured videos of the master device 51 and the slave device 1 using a motion capture technology.

In the first to eighth embodiments, in order to determine the target slave upper-body motion as the movement control command value of the mobile body in the present invention, the target slave upper-body translational acceleration ↑Acc_sb_aim is determined by equation (21a) (or by an equation in which the coefficient Ratio_fsb of above equation (21a) is set to zero). In this case, ↑va_dotdot_aim on the right side of equation (21a) is determined by above equation (17a), and thus is a function of the upper-body position deviation ↑Epb and the temporal change rate ↑Epb_dot. Further, ↑Epb is set by above equation (2a), and thus ↑Epb and ↑Epb_dot are functions of the position ↑P_mb_act and the speed ↑V_mb_act of the upper-body support part 65, respectively.

Therefore, in the first to eighth embodiments, the target slave upper-body translational acceleration ↑Acc_sb_aim in the target slave upper-body motion is determined as a function of observation values of the position ↑P_mb_act (movement position) and the speed ↑V_mb_act (movement speed) of the upper-body support part 65. However, for example, by setting the coefficient Kpbv in equation (17a) to zero, the target slave upper-body translational acceleration ↑Acc_sb_aim can be determined as a function of the observation value of the position ↑P_mb_act of the upper-body support part 65, or by setting the coefficient Kpbp in equation (17a) to zero, the target slave upper-body translational acceleration ↑Acc_sb_aim can be determined as a function of the observation value of the speed ↑V_mb_act of the upper-body support part 65.

In the first to eighth embodiments, an upper-body support part force detection value by the master upper-body force detector 64 is used to control the upper-body support part reaction force. However, for example, it is also possible to detect the relative displacement of the mounted portion (waist) of the operator P with respect to the upper-body support part 65 (or the inner member 65b of the upper-body support part 65') and control the upper-body support part reaction force according to the detection value.

For example, a band-shaped reflector is wound around the waist of the operator P inside the upper-body support part 65 (or the inner member 65b of the upper-body support part 65'), and distance sensors (gap sensors) for detecting a distance between the reflector and the upper-body support part 65 (or the inner member 65b of the upper-body support part 65') are provided at a plurality of locations of the upper-body support part 65 (or the inner member 65b) in the circumferential direction.

In this case, the distance detected by each distance sensor corresponds to the observation value of the relative displacement of the mounted portion (waist) of the operator P with respect to the upper-body support part 65 (or the inner member 65b). Then, the distance is proportional to an elastic force generated by an elastic rib member such as a pad between the upper-body support part 65 (or the inner member 65b) and the mounted portion (waist) of the operator P.

Therefore, the observation value (the detection value of the distance) of the relative displacement of the mounted portion (waist) of the operator P with respect to the upper-body support part 65 (or the inner member 65b) corresponds to the actual upper-body support part reaction force which the upper-body support part 65 (or the inner member 65b) receives from the operator P. Therefore, even when the observation value of the relative displacement of the mounted portion (waist) of the operator P with respect to the upper-body support part 65 (or the inner member 65b) is used instead of the observation value of the upper-body support part reaction force, the upper-body support part reaction force can be controlled similarly to the first to eighth embodiments.

The manipulation device of the present invention may not include the upper-body support part drive mechanism. For example, instead of the moving grounding part 54, a plurality of free casters which can freely move on the floor surface in the arbitrary direction may be attached to the master base 53 of the master device 51 of the first embodiment such that the master base 53 can freely move on the floor surface via the own casters.

In the first to eighth embodiments, the main manipulation control unit 94 is provided in the master control device 91 but may be provided in the slave control device 41. Alternatively, both the master control device 91 and the slave control device 41 may be provided with the main manipulation control units 94 capable of executing the same processing, and a master upper-body support part motion and a slave upper-body support part motion may be individually determined by the master control device 91 and the slave control device 41, respectively. In this case, the influence of the communication time between the master control device 91 and the slave control device 41 can be compensated.

**Claims**

1. A mobile-body manipulation device capable of performing a manipulation for moving a mobile body, the device comprising:

   an upper-body support part which is mounted on an upper body of an operator to be able to move together with the operator as the operator moves; and
   a movement command determination unit which determines a movement control command value for a predetermined representative point of the mobile body according to an observation value of a motion state of the upper-body support part including at least one of a movement position and a movement speed of the upper-body support part in a movement environment of the operator.

2. The mobile-body manipulation device according to claim 1, the device further comprising:

   an upper-body support part drive mechanism which is attached to the upper-body support part such that a force for moving the upper-body support part is able to be applied to the upper-body support part; and
   a first control unit which controls an action of the upper-body support part drive mechanism according to any one of an observation value of an upper-body support part reaction force which is a reaction force received from the upper body of the operator by the upper-body support part and an observation value of an operator upper-body relative displacement which is a relative displacement of the upper body of the operator with respect to the upper-body support part.

3. The mobile-body manipulation device according to claim 2, wherein
   the first control unit is configured to control the action of the upper-body support part drive mechanism according to the observation value of the upper-body support part reaction force so as to maintain at least a lateral translational force in the upper-body support part reaction force at zero.

4. The mobile-body manipulation device according to claim 3, wherein
   the first control unit is configured to control the action of the upper-body support part drive mechanism according to the observation value of the upper-body support part reaction force so as to maintain at least the lateral translational force in the upper-body support part reaction force at zero and maintain a vertical translational force in the upper-body support part reaction force at a predetermined value.

5. The mobile-body manipulation device according to claim 1, the device further comprising:

   an upper-body support part drive mechanism which is attached to the upper-body support part such that a force for moving the upper-body support part is able to be applied to the upper-body support part; and

a first control unit which controls an action of the upper-body support part drive mechanism according to any one of an observation value of an upper-body support part reaction force which is a reaction force received from the upper body of the operator by the upper-body support part and an observation value of an operator upper-body relative displacement which is a relative displacement of the upper body of the operator with respect to the upper-body support part, and an observation value of a first reaction force which is a reaction force received from an outside other than a reaction force received from a floor surface in a movement environment of the mobile body by the mobile body.

6. The mobile-body manipulation device according to claim 5, wherein
the first control unit is configured to control the action of the upper-body support part drive mechanism according to the observation value of the upper-body support part reaction force and the observation value of the first reaction force so as to maintain at least a lateral translational force in a force obtained by linearly combining the upper-body support part reaction force and the first reaction force at zero.

7. The mobile-body manipulation device according to claim 6, wherein
the first control unit is configured to control the action of the upper-body support part drive mechanism according to the observation value of the upper-body support part reaction force and the observation value of the first reaction force so as to maintain at least the lateral translational force in the force obtained by linearly combining the upper-body support part reaction force and the first reaction force at zero and maintain a vertical translational force in the force obtained by linearly combining the upper-body support part reaction force and the first reaction force at a predetermined value.

8. The mobile-body manipulation device according to claim 6, wherein
the first control unit is configured to control the action of the upper-body support part drive mechanism according to the observation value of the upper-body support part reaction force and the observation value of the first reaction force so as to maintain the lateral translational force in the force obtained by linearly combining the upper-body support part reaction force and the first reaction force at zero and maintain a vertical translational force in the upper-body support part reaction force at a predetermined value.

9. The mobile-body manipulation device according to claim 1, the device further comprising:

an upper-body support part drive mechanism which is attached to the upper-body support part such that a force for moving the upper-body support part is able to be applied to the upper-body support part;

an operation manipulator which is attached to the upper-body support part drive mechanism such that the operator is able to wear the operation manipulator to manipulate a work manipulator included in the mobile body by bilateral control; and

a first control unit which controls an action of the upper-body support part drive mechanism according to any one of an observation value of an upper-body support part reaction force which is a reaction force received from the upper body of the operator by the upper-body support part and an observation value of an operator upper-body relative displacement which is a relative displacement of the upper body of the operator with respect to the upper-body support part, and an observation value of a second reaction force which is a reaction force received from the operator by the operation manipulator.

10. The mobile-body manipulation device according to claim 9, wherein
the first control unit is configured to control the action of the upper-body support part drive mechanism according to the observation value of the upper-body support part reaction force and the observation value of the second reaction force so as to maintain at least a lateral translational force in a force obtained by linearly combining the upper-body support part reaction force and the second reaction force at zero.

11. The mobile-body manipulation device according to claim 10, wherein
the first control unit is configured to control the action of the upper-body support part drive mechanism according to the observation value of the upper-body support part reaction force and the observation value of the second reaction force so as to maintain at least the lateral translational force in the force obtained by linearly combining the upper-body support part reaction force and the second reaction force at zero and maintain a vertical translational force in the force obtained by linearly combining the upper-body support part reaction force and the second reaction force at a predetermined value.

**12.** The mobile-body manipulation device according to claim 10, wherein
the first control unit is configured to control the action of the upper-body support part drive mechanism according to the observation value of the upper-body support part reaction force and the observation value of the second reaction force so as to maintain the lateral translational force in the force obtained by linearly combining the upper-body support part reaction force and the second reaction force at zero the and maintain a vertical translational force in the upper-body support part reaction force at a predetermined value.

**13.** The mobile-body manipulation device according to claim 1, the device further comprising:

an upper-body support part drive mechanism which is attached to the upper-body support part such that a force for moving the upper-body support part is able to be applied to the upper-body support part;
an operation manipulator which is attached to the upper-body support part drive mechanism such that the operator is able to wear the operation manipulator to manipulate a work manipulator included in the mobile body by bilateral control; and
a first control unit which controls an action of the upper-body support part drive mechanism according to any one of an observation value of an upper-body support part reaction force which is a reaction force received from the upper body of the operator by the upper-body support part and an observation value of an operator upper-body relative displacement which is a relative displacement of the upper body of the operator with respect to the upper-body support part, an observation value of a first reaction force which is a reaction force received from an outside other than a reaction force received from a floor surface in a movement environment of the mobile body by the mobile body, and an observation value of a second reaction force which is a reaction force received from the operator by the operation manipulator.

**14.** The mobile-body manipulation device according to claim 13, wherein
the first control unit is configured to control the action of the upper-body support part drive mechanism according to the observation value of the upper-body support part reaction force, the observation value of the first reaction force, and the observation value of the second reaction force so as to maintain at least a lateral translational force in a force obtained by linearly combining the upper-body support part reaction force, the first reaction force, and the second reaction force at zero.

**15.** The mobile-body manipulation device according to claim 14, wherein
the first control unit is configured to control the action of the upper-body support part drive mechanism according to the observation value of the upper-body support part reaction force, the observation value of the first reaction force, and the observation value of the second reaction force so as to maintain at least the lateral translational force in the force obtained by linearly combining the upper-body support part reaction force, the first reaction force, and the second reaction force at zero and maintain a vertical translational force in the force obtained by linearly combining the upper-body support part reaction force, the first reaction force, and the second reaction force at a predetermined value.

**16.** The mobile-body manipulation device according to claim 14, wherein
the first control unit is configured to control the action of the upper-body support part drive mechanism according to the observation value of the upper-body support part reaction force, the observation value of the first reaction force, and the observation value of the second reaction force so as to maintain the lateral translational force in the force obtained by linearly combining the upper-body support part reaction force, the first reaction force, and the second reaction force at zero and maintain a vertical translational force in the upper-body support part reaction force at a predetermined value.

**17.** The mobile-body manipulation device according to any one of claims 2, 3, 5, 6, 9, 10, 13, and 14, wherein
the upper-body support part drive mechanism includes a movement mechanism configured to be able to move on a floor surface on which the operator moves, and a first actuator capable of generating a movement driving force of the movement mechanism with respect to the floor surface,

the upper-body support part is mounted on the movement mechanism to be able to move together with the movement mechanism, and
the first control unit is configured to control the action of the upper-body support part drive mechanism through control of the first actuator.

**18.** The mobile-body manipulation device according to any one of claims 4, 7, 8, 11, 12, 15, and 16, wherein

the upper-body support part drive mechanism includes a movement mechanism configured to be able to move on a floor surface on which the operator moves, a first actuator capable of generating a movement driving force of the movement mechanism with respect to the floor surface, a lifting mechanism which supports the upper-body support part to be able to be lifted and lowered with respect to the movement mechanism, and a second actuator capable of generating a driving force for lifting and lowering the upper-body support part with respect to the movement mechanism, and

the first control unit is configured to control the action of the upper-body support part drive mechanism through control of the first actuator and the second actuator.

19. The mobile-body manipulation device according to any one of claims 2, 3, 5, 6, 9, 10, 13, 14, and 17, wherein the upper-body support part is attached to the upper-body support part drive mechanism so as to be movable in an up-down direction.

20. The mobile-body manipulation device according to any one of claims 2, 3, 5, 6, 9, 10, 13, 14, and 17, wherein the upper-body support part is attached to the upper-body support part drive mechanism so as to be elastically movable in an up-down direction.

21. The mobile-body manipulation device according to any one of claims 2 to 20, wherein the upper-body support part is attached to the upper-body support part drive mechanism so as to be rotatable in a roll direction of the operator, a pitch direction of the operator, or the roll direction and the pitch direction.

22. A manipulation system comprising:

the mobile-body manipulation device according to any one of claims 5 to 8 and 13 to 16 and the mobile body, wherein

the mobile body includes a mobile-body movement mechanism which is configured to be movable on a floor surface in a movement environment of the mobile body, and an upper body part which is mounted on the mobile-body movement mechanism via a force detector for detecting the first reaction force.

23. The manipulation system according to claim 22, wherein the upper body part includes a cover which covers a periphery of the mobile-body movement mechanism.

# FIG.1

# FIG.2

SLAVE UPPER-BODY FORCE DETECTION VALUE → UPPER-BODY FORCE DETECTOR ~33

ACTUAL SLAVE UPPER-BODY REACTION FORCE (ACTUAL SLAVE STATE)

TARGET SLAVE UPPER-BODY MOTION

COMMUNICATION DEVICE ~40

SLAVE MOVEMENT CONTROL UNIT

41   42

MOVEMENT DRIVE MECHANISM ~5

ELECTRIC MOTOR ~5a

ELECTRIC MOTOR ~5b

TARGET SLAVE MOVEMENT DRIVING FORCE

SLAVE MOTOR ROTATION ANGLE DETECTION VALUE → MOTOR ROTATION DETECTOR ~27

ACTUAL SLAVE UPPER-BODY MOTION (ACTUAL SLAVE STATE)

TARGET SLAVE LIFTING/LOWERING DRIVING FORCE → SLIDE DRIVE ACTUATOR ~36

SLAVE SLIDE DISPLACEMENT DETECTION VALUE → SLIDE DISPLACEMENT DETECTOR ~29

~30

TARGET SLAVE HAND MOTION

43

SLAVE MANIPULATOR CONTROL UNIT

TARGET SLAVE JOINT DRIVING FORCE → JOINT ACTUATOR ~24

~10

ACTUAL SLAVE HAND MOTION (ACTUAL SLAVE STATE)

SLAVE JOINT DISPLACEMENT DETECTION VALUE → JOINT DISPLACEMENT DETECTOR ~28

ACTUAL SLAVE HAND REACTION FORCE (ACTUAL SLAVE STATE)

SLAVE HAND FORCE DETECTION VALUE → HAND FORCE DETECTOR ~22

~2

EP 3 960 390 A1

# FIG.3

# FIG.4

EP 3 960 390 A1

## FIG.5

- 64 UPPER-BODY FORCE DETECTOR
- MASTER UPPER-BODY FORCE DETECTION VALUE
- 52
- 55 MOVEMENT DRIVE MECHANISM
- 55a ELECTRIC MOTOR
- 55b ELECTRIC MOTOR
- TARGET MASTER MOVEMENT DRIVING FORCE
- 87 MOTOR ROTATION DETECTOR
- MASTER MOTOR ROTATION ANGLE DETECTION VALUE
- 60
- 66 SLIDE DRIVE ACTUATOR
- TARGET MASTER LIFTING/LOWERING DRIVING FORCE
- 89 SLIDE DISPLACEMENT DETECTOR
- MASTER SLIDE DISPLACEMENT DETECTION VALUE
- 70
- 84 JOINT ACTUATOR
- TARGET MASTER JOINT DRIVING FORCE
- 85 JOINT DISPLACEMENT DETECTOR
- MASTER JOINT DISPLACEMENT DETECTION VALUE
- 82 HAND FORCEDETECTOR
- MASTER HAND FORCE DETECTION VALUE

- 92 MASTER MOVEMENT CONTROL UNIT
- 93 MASTER MANIPULATOR ONTROL UNIT
- 91 MAIN MANIPULATION CONTROL UNIT
- 94
- 90 COMMUNICATION DEVICE

- ACTUAL UPPER-BODY SUPPORT PART REACTION FORCE (ACTUAL MASTER STATE)
- TARGET UPPER-BODY SUPPORT PART MOTION
- ACTUAL UPPER-BODY SUPPORT PART MOTION (ACTUAL MASTER STATE)
- TARGET MASTER HAND MOTION
- ACTUAL MASTER HAND MOTION (ACTUAL MASTER STATE)
- ACTUAL MASTER HAND REACTION FORCE (ACTUAL MASTER STATE)

- ACTUAL SLAVE UPPER-BODY REACTION FORCE (ACTUAL SLAVE STATE)
- TARGET SLAVE UPPER-BODY MOTION
- ACTUAL SLAVE UPPER-BODY MOTION (ACTUAL SLAVE STATE)
- TARGET SLAVE HAND MOTION
- ACTUAL SLAVE HAND MOTION (ACTUAL SLAVE STATE)
- ACTUAL SLAVE HAND REACTION FORCE (ACTUAL SLAVE STATE)

# FIG.6

```
            ┌─────────┐
            │  START  │
            └─────────┘
                 │                          STEP1
    ┌────────────────────────────┐
    │   ACQUIRE ACTUAL SLAVE STATE │
    └────────────────────────────┘
                 │                          STEP2
    ┌────────────────────────────┐
    │   ACQUIRE ACTUAL MASTER STATE │
    └────────────────────────────┘
                 │                          STEP3
    ┌──┬──────────────────────────────┬──┐
    │  │      EXECUTE PROCESSING OF     │  │
    │  │  UPPER-BODY SIDE BILATERAL CONTROL │  │
    └──┴──────────────────────────────┴──┘
                 │                          STEP4
    ┌──┬──────────────────────────────┬──┐
    │  │      EXECUTE PROCESSING OF     │  │
    │  │   HAND SIDE BILATERAL CONTROL  │  │
    └──┴──────────────────────────────┴──┘
                 │                          STEP5
┌──────────────────────────────────────────────────────┐
│                OUTPUT TARGET MASTER MOTION              │
│ (TARGET UPPER-BODY SUPPORT PART MOTION, TARGET MASTER HAND MOTION) │
└──────────────────────────────────────────────────────┘
                 │                          STEP6
┌──────────────────────────────────────────────────────┐
│                 OUTPUT TARGET SLAVE MOTION             │
│  (TARGET SLAVE UPPER-BODY MOTION, TARGET SLAVE HAND MOTION) │
└──────────────────────────────────────────────────────┘
                 │
            ┌─────────┐
            │   END   │
            └─────────┘
```

# FIG.7

START

STEP3-1

CALCULATE UPPER-BODY REACTION FORCE DEVIATION
(UPPER-BODY REACTION FORCE TRANSLATIONAL FORCE DEVIATION,
UPPER-BODY REACTION FORCE MOMENT DEVIATION)

STEP3-2

CALCULATE UPPER-BODY POSITION/ATTITUDE DEVIATION
(UPPER-BODY POSITION DEVIATION, UPPER-BODY ATTITUDE DEVIATION)

STEP3-3

DETERMINE TARGET UPPER-BODY SUPPORT PART TRANSLATIONAL ACCELERATION,
TARGET UPPER-BODY SUPPORT PART ANGULAR ACCELERATION, TARGET SLAVE UPPER-BODY
TRANSLATIONAL ACCELERATION, AND TARGET SLAVE UPPER-BODY ANGULAR ACCELERATION
SUCH THAT UPPER-BODY REACTION FORCE DEVIATION AND UPPER-BODY
POSITION/ATTITUDE DEVIATION ARE CONVERGED TO ZERO

STEP3-4

INDIVIDUALLY INTEGRATE TARGET UPPER-BODY SUPPORT PART TRANSLATIONAL ACCELERATION,
TARGET UPPER-BODY SUPPORT PART ANGULAR ACCELERATION, TARGET SLAVE UPPER-BODY
TRANSLATIONAL ACCELERATION, AND TARGET SLAVE UPPER-BODY ANGULAR ACCELERATION
TO OBTAIN TARGET UPPER-BODY SUPPORT PART TRANSLATIONAL SPEED, TARGET UPPER-BODY
SUPPORT PART ANGULAR SPEED, TARGET SLAVE UPPER-BODY TRANSLATIONAL SPEED,
AND TARGET SLAVE UPPER-BODY ANGULAR SPEED
(DETERMINE TARGET UPPER-BODY SUPPORT PART MOTION AND TARGET SLAVE UPPER-BODY MOTION)

END

# FIG.8

START

STEP4-1

CALCULATE HAND REACTION FORCE DEVIATION
(HAND REACTION FORCE TRANSLATIONAL FORCE DEVIATION,
HAND REACTION FORCE MOMENT DEVIATION)

STEP4-2

CALCULATE HAND POSITION/ATTITUDE DEVIATION
(HAND POSITION DEVIATION, HAND ATTITUDE DEVIATION)

STEP4-3

DETERMINE TARGET MASTER HAND TRANSLATIONAL ACCELERATION,
TARGET MASTER HAND ANGULAR ACCELERATION, TARGET SLAVE HAND TRANSLATIONAL ACCELERATION,
AND TARGET SLAVE HAND ANGULAR ACCELERATION SUCH THAT HAND REACTION FORCE DEVIATION
AND HAND POSITION/ATTITUDE DEVIATION ARE CONVERGED TO ZERO

STEP4-4

INDIVIDUALLY INTEGRATE TARGET MASTER HAND TRANSLATIONAL ACCELERATION,
TARGET MASTER HAND UPPER-BODY SUPPORT PART ANGULAR ACCELERATION,
TARGET SLAVE HAND TRANSLATIONAL ACCELERATION, AND TARGET SLAVE HAND
ANGULAR ACCELERATION TO OBTAIN TARGET MASTER HAND TRANSLATIONAL SPEED,
TARGET MASTER HAND ANGULAR SPEED, TARGET SLAVE HAND BASE TRANSLATIONAL SPEED,
AND TARGET SLAVE HAND ANGULAR SPEED
(DETERMINE MASTER HAND MOTION AND TARGET SLAVE HAND MOTION)

END

## FIG.9

```
START
```

STEP10

ACQUIRE TARGET SLAVE UPPER-BODY MOTION FROM MAIN MANIPULATION CONTROL UNIT

ACQUIRE SLAVE UPPER-BODY FORCE DETECTION VALUE,
SLAVE MOTOR ROTATION ANGLE DETECTION VALUE,
AND SLAVE SLIDE DISPLACEMENT DETECTION VALUE BY RESPECTIVE DETECTORS

STEP11

OBTAIN ACTUAL SLAVE UPPER-BODY REACTION FORCE
FROM SLAVE UPPER-BODY FORCE DETECTION VALUE

STEP12

OBTAIN ACTUAL SLAVE UPPER-BODY MOTION BY USING SLAVE MOTOR ROTATION ANGLE
DETECTION VALUE AND SLAVE SLIDE DISPLACEMENT DETECTION VALUE

STEP13

DETERMINE TARGET TRANSLATIONAL SPEED OF EACH MOVING GROUNDING
PART OF SLAVE MOVEMENT MECHANISM ACCORDING TO TARGET SLAVE UPPER-BODY MOTION,
AND CONTROL ELECTRIC MOTOR CORRESPONDING TO EACH MOVING GROUNDING
PART TO REALIZE TARGET TRANSLATIONAL SPEED THEREOF

STEP14

CONTROL SLAVE SLIDE DRIVE ACTUATOR TO REALIZE TRANSLATIONAL SPEED OF Z-AXIS
DIRECTION (UP-DOWN DIRECTION) OF TARGET SLAVE UPPER-BODY MOTION

STEP15

OUTPUT ACTUAL SLAVE UPPER-BODY REACTION FORCE
AND ACTUAL SLAVE UPPER-BODY MOTION TO MAIN MANIPULATION CONTROL UNIT

```
END
```

## FIG.10

START

STEP20

ACQUIRE TARGET UPPER-BODY SUPPORT PART MOTION FROM MAIN MANIPULATION CONTROL UNIT

ACQUIRE MASTER UPPER-BODY FORCE DETECTION VALUE,
MASTER MOTOR ROTATION ANGLE DETECTION VALUE,
AND MASTER SLIDE DISPLACEMENT DETECTION VALUE BY RESPECTIVE DETECTORS

STEP21

OBTAIN ACTUAL UPPER-BODY SUPPORT PART REACTION FORCE
FROM MASTER UPPER-BODY FORCE DETECTION VALUE

STEP22

OBTAIN ACTUAL UPPER-BODY SUPPORT PART MOTION BY USING MASTER MOTOR ROTATION ANGLE
DETECTION VALUE AND MASTER SLIDE DISPLACEMENT DETECTION VALUE

STEP23

DETERMINE TARGET TRANSLATIONAL SPEED OF EACH MOVING GROUNDING
PART OF MASTER MOVEMENT MECHANISM ACCORDING TO TARGET UPPER-BODY
SUPPORT PART MOTION, AND CONTROL ELECTRIC MOTOR CORRESPONDING
TO EACH MOVING GROUNDING PART TO REALIZE TARGET TRANSLATIONAL SPEED THEREOF

STEP24

CONTROL MASTER SLIDE DRIVE ACTUATOR TO REALIZE TRANSLATIONAL SPEED OF Z-AXIS
DIRECTION (UP-DOWN DIRECTION) OF TARGET UPPER-BODY SUPPORT PART MOTION

STEP25

OUTPUT ACTUAL UPPER-BODY SUPPORT PART REACTION FORCE
AND ACTUAL UPPER-BODY SUPPORT PART MOTION TO MAIN MANIPULATION CONTROL UNIT

END

## FIG.11A

## FIG.11B

# FIG.12

START

STEP30

ACQUIRE TARGET SLAVE HAND MOTION FROM MAIN MANIPULATION CONTROL UNIT

ACQUIRE SLAVE HAND FORCE DETECTION VALUE
AND SLAVE JOINT DISPLACEMENT DETECTION VALUE BY RESPECTIVE DETECTORS

STEP31

OBTAIN ACTUAL SLAVE HAND REACTION FORCE FROM SLAVE HAND FORCE DETECTION VALUE

STEP32

OBTAIN ACTUAL SLAVE HAND MOTION FROM SLAVE JOINT DISPLACEMENT DETECTION VALUE

STEP33

CONTROL SLAVE JOINT ACTUATOR
TO REALIZE TARGET SLAVE HAND MOTION

STEP34

OUTPUT ACTUAL SLAVE HAND REACTION FORCE
AND ACTUAL SLAVE HAND MOTION TO MAIN MANIPULATION CONTROL UNIT

END

# FIG.13

START

STEP40

ACQUIRE TARGET MASTER HAND MOTION FROM MAIN MANIPULATION CONTROL UNIT

ACQUIRE MASTER HAND FORCE DETECTION VALUE
AND MASTER JOINT DISPLACEMENT DETECTION VALUE BY RESPECTIVE DETECTORS

STEP41

OBTAIN ACTUAL MASTER HAND REACTION FORCE FROM MASTER HAND FORCE DETECTION VALUE

STEP42

OBTAIN ACTUAL MASTER HAND MOTION FROM MASTER JOINT DISPLACEMENT DETECTION VALUE

STEP43

CONTROL MASTER JOINT ACTUATOR TO REALIZE
TARGET MASTER HAND MOTION

STEP44

OUTPUT ACTUAL MASTER HAND REACTION FORCE
AND ACTUAL MASTER HAND MOTION TO MAIN MANIPULATION CONTROL UNIT

END

FIG.14

FIG.15

FIG.16

FIG.17

EP 3 960 390 A1

# INTERNATIONAL SEARCH REPORT

| | International application No. |
|---|---|
| | PCT/JP2020/012113 |

A. CLASSIFICATION OF SUBJECT MATTER
Int.Cl. B25J3/00(2006.01)i, B25J5/00(2006.01)i, B25J13/02(2006.01)i
FI: B25J13/02, B25J5/00A, B25J3/00A

According to International Patent Classification (IPC) or to both national classification and IPC

B. FIELDS SEARCHED

Minimum documentation searched (classification system followed by classification symbols)
Int.Cl. B25J1/00-21/02

Documentation searched other than minimum documentation to the extent that such documents are included in the fields searched
Published examined utility model applications of Japan       1922-1996
Published unexamined utility model applications of Japan     1971-2020
Registered utility model specifications of Japan             1996-2020
Published registered utility model applications of Japan     1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2016-78179 A (MITSUBISHI HEAVY INDUSTRIES, LTD.) 16.05.2016 (2016-05-16), paragraphs [0048]-[0118], fig. 1-17 | 1 |
| A | US 9789023 B1 (LUNGHWA UNIVERSITY OF SCIENCE AND TECHNOLOGY) 17.10.2017 (2017-10-17), entire text, all drawings | 1-23 |
| A | US 2014/0188275 A1 (FOUNDATION OF SOONGSIL UNIVERSITY-INDUSTRY COOPERATION) 03.07.2014 (2014-07-03), entire text, all drawings | 1-23 |
| A | JP 2018-43343 A (RAYTHEON CO.) 22.03.2018 (2018-03-22), entire text, all drawings | 1-23 |
| A | JP 2002-264046 A (THE CIRCLE FOR THE PROMOTION OF SCIENCE AND ENGINEERING) 18.09.2002 (2002-09-18), entire text, all drawings | 1-23 |

☐ Further documents are listed in the continuation of Box C.       ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10.06.2020 | 23.06.2020 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

| International application No. |
|---|
| PCT/JP2020/012113 |

```
JP 2016-78179 A      16.05.2016    (Family: none)

US 9789023 B1        17.10.2017    (Family: none)

US 2014/0188275 A1 03.07.2014     KR 10-2014-0088722 A

JP 2018-43343 A      22.03.2018    US 2018/0193999 A1
                                   entire text, all drawings
                                   JP 2014-512976 A
                                   JP 2019-217633 A
                                   US 2012/0328395 A1
                                   US 2012/0277901 A1
                                   US 2012/0277911 A1
                                   US 2012/0277915 A1
                                   US 2013/0011220 A1
                                   US 2013/0013108 A1
                                   US 2015/0142172 A1
                                   US 2015/0203340 A1
                                   WO 2012/149363 A2
                                   WO 2012/149392 A2
                                   WO 2012/149402 A2
                                   WO 2012/149435 A2
                                   WO 2012/149446 A2
                                   WO 2012/170123 A2
                                   EP 2701881 A0
                                   CN 103648730 A

JP 2002-264046 A    18.09.2002    (Family: none)
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10217159 A
- US 5841258 A

- JP 2013237329 A
- US 9027693 B